# EUROPEAN PATENT APPLICATION

(11) **EP 4 331 895 A1**
(43) Date of publication of application: **06.03.2024**
(21) Application number: 22863619.7
(22) Date of filing: 02.09.2022
(51) Int. Cl.: B60L 50/60

(54) **DISTRIBUTOR, CHARGING AND DISTRIBUTING SYSTEM OF VEHICLE, VEHICLE, AND CHARGING PILE**

(30) Priority: 03.09.2021 CN 202111032872
(71) Applicant: BYD Company Limited, Shenzhen, Guangdong 518118 (CN)
(72) Inventor: HUANG, Tuodi, Shenzhen, Guangdong 518118 (CN); XUE, Penghui, Shenzhen, Guangdong 518118 (CN); LI, Zunjie, Shenzhen, Guangdong 518118 (CN); LIU, Fen, Shenzhen, Guangdong 518118 (CN); LIU, Chao, Shenzhen, Guangdong 518118 (CN)
(74) Representative: DehnsGermany Partnerschaft von Patentanwälten
(86) International application number: PCT/CN2022/116730
(87) International publication number: WO 2023/030485

(57) **Abstract**

A distributor (2000), a charging and distribution system (1000) for a vehicle, a vehicle, and a charging pile are provided. The distributor (2000) includes: an outer housing (200); a direct current charging interface (201), an electronic control terminal interface (202), and a battery terminal interface (203), where a first contactor (K1) is connected between the electronic control terminal interface (202) and the battery terminal interface (203); and a second contactor (K2) is connected between the electronic control terminal interface (202) and the battery terminal interface (203); and a third contactor (K3) and a pre-charge resistor (9), where a fourth contactor K4 is connected between the direct current charging interface (201) and the battery terminal interface (203); a fifth contactor (K5) is connected between a negative terminal of the direct current charging interface (201) and a negative terminal of the battery terminal interface (203); and the five contactors and a pre-charge resistor each are arranged in the outer housing (200).

## Description

### CROSS-REFERENCE TO RELATED APPLICATIONS

The present disclosure claims priority to and benefits of Chinese Patent Application No. 2021110328722, entitled "DISTRIBUTOR, CHARGING AND DISTRIBUTION SYSTEM FOR VEHICLE, VEHICLE, AND CHARGING PILE" and filed by BYD Co., Ltd. on September 03, 2021. The entire content of the above-referenced application is incorporated herein by reference.

### FIELD

The present disclosure relates to the field of contactors, and more specifically, to a distributor, a charging and distribution system for a vehicle, a vehicle, and a charging pile.

### BACKGROUND

In the related art, a plurality of contactors need to be arranged in a charging and distribution system for a vehicle to meet various requirements. To avoid mutual influence between a plurality of electrical components, the plurality of contactors are separately arranged independently, resulting in complex circuit layout, large space occupation, and high cost.

### SUMMARY

The present disclosure aims to resolve at least one of the technical problems existing in the related art. To this end, one objective of the present disclosure is to propose a distributor. The distributor may integrate a pre-charge resistor and a plurality of direct current contactors. Circuit layout in the distributor is simple, which may reduce space occupied by a plurality of contactors, and may also reduce a cost of the distributor.

The present disclosure further proposes a charging and distribution system for a vehicle.

The present disclosure further proposes a vehicle.

The present disclosure further proposes a charging pile.

The distributor according to the present disclosure includes: an outer housing; a direct current charging interface, an electronic control terminal interface, and a battery terminal interface, the direct current charging interface, the electronic control terminal interface, and the battery terminal interface each being arranged in the outer housing; a first contactor, the first contactor being connected between a positive terminal of the electronic control terminal interface and a positive terminal of the battery terminal interface; a second contactor, the second contactor being connected between a negative terminal of the electronic control terminal interface and a negative terminal of the battery terminal interface; a third contactor and a pre-charge resistor, the third contactor and the pre-charge resistor being connected in series to form a pre-charge branch; the pre-charge branch and the first contactor being connected in parallel, and the pre-charge branch being connected between the positive terminal of the electronic control terminal interface and the positive terminal of the battery terminal interface; or the pre-charge branch and the second contactor being connected in parallel, and the pre-charge branch being connected between the negative terminal of the electronic control terminal interface and the negative terminal of the battery terminal interface; a fourth contactor, the fourth contactor being connected between a positive terminal of the direct current charging interface and the positive terminal of the battery terminal interface; and a fifth contactor, the fifth contactor being connected between a negative terminal of the direct current charging interface and the negative terminal of the battery terminal interface, the first contactor, the second contactor, the third contactor, the pre-charge resistor, the fourth contactor, and the fifth contactor each being selectively turned on or off and each being located in the outer housing.

The distributor according to the present disclosure may integrate a pre-charge resistor and a plurality of direct current contactors. Circuit layout in the distributor is simple, which may reduce space occupied by a plurality of contactors, and may also reduce a cost of the distributor.

In some examples of the present disclosure, the distributor further includes: a first inner shell, the first inner shell being fixedly arranged in the outer housing, the first contactor, the second contactor, the third contactor, and the pre-charge resistor being integrated in the first inner shell, both an input terminal and an output terminal of the first contactor being arranged on the first inner shell, and both an input terminal and an output terminal of the second contactor being arranged on the first inner shell.

In some examples of the present disclosure, both the first contactor and the second contactor include: a main joining conductor, where the main joining conductor is connected to the corresponding input terminal, and the main joining conductor is selectively electrically connected to the corresponding output terminal; and
the third contactor includes a pre-charge joining conductor, the pre-charge joining conductor and the pre-charge resistor are separately connected to the input terminal and the output terminal of one of the first contactor and the second contactor, and the pre-charge joining conductor is selectively electrically connected to the pre-charge resistor.

In some examples of the present disclosure, a driving assembly is arranged in the first inner shell, and the driving assembly is configured to drive the main joining conductor to be electrically connected to the corresponding output terminal, and is further configured to drive the pre-charge joining conductor to be electrically connected to the pre-charge resistor.

In some examples of the present disclosure, the driving assembly includes: a first fan-shaped portion, a second fan-shaped portion, and a third fan-shaped portion, where the main joining conductor includes a first joining conductor and a second joining conductor, the first fan-shaped portion is configured to push the first joining conductor and release the push on the first joining conductor, the second fan-shaped portion is configured to push the second joining conductor and release the push on the second joining conductor, the third fan-shaped portion is configured to push the pre-charge joining conductor and release the push on the pre-charge joining conductor, the first joining conductor is connected to the input terminal of the first contactor, the first joining conductor is selectively electrically connected to the output terminal of the first contactor, the second joining conductor is connected to the input terminal of the second contactor, and the second joining conductor is selectively electrically connected to the output terminal of the second contactor; where
the first joining conductor is arranged opposite to the output terminal of the first contactor, the second joining conductor is arranged opposite to the output terminal of the second contactor, when the first fan-shaped portion pushes the first joining conductor, the first joining conductor is connected to the output terminal of the first contactor, when the second fan-shaped portion pushes the second joining conductor, the second joining conductor is connected to the output terminal of the second contactor, and when the third fan-shaped portion pushes the pre-charge joining conductor, the pre-charge joining conductor is connected to the pre-charge resistor.

In some examples of the present disclosure, the driving assembly further includes: a first power source and a first transmission rod, where the first power source is connected to an end portion of the first transmission rod and is configured to drive the first transmission rod to rotate, the first fan-shaped portion, the second fan-shaped portion, and the third fan-shaped portion each are arranged on the first transmission rod, the first fan-shaped portion, the second fan-shaped portion, and the third fan-shaped portion each rotate synchronously around a first axis, where the first axis coincides with an axis of the first transmission rod; and
in a rotation process, the first fan-shaped portion, the second fan-shaped portion, and the third fan-shaped portion separately push the first joining conductor, the second joining conductor, and the pre-charge joining conductor and release the push on the first joining conductor, the second joining conductor, and the pre-charge joining conductor.

In some examples of the present disclosure, the distributor further includes: a second inner shell, the second inner shell being fixedly arranged in the outer housing, the fourth contactor and the fifth contactor being integrated in the second inner shell, both an input terminal and an output terminal of the fourth contactor being arranged on the second inner shell, and both an input terminal and an output terminal of the fifth contactor being arranged on the second inner shell.

In some examples of the present disclosure, a first transmission assembly, a first driving coil, and a second driving coil are arranged in the second inner shell, and both the fourth contactor and the fifth contactor include: a main joining conductor, where the main joining conductor is connected to the corresponding input terminal; and
the first transmission assembly includes a first micro switch and a first driven member, the first micro switch is in power connection with the first driven member, the first driven member is connected to the main joining conductor, the first driving coil and the second driving coil are configured to drive the first micro switch to move toward a first direction by generating a magnetic force after being energized to drive the main joining conductor to be joined to the output terminal, or drive the first micro switch to move toward a second direction to drive the main joining conductor to be disconnected from the output terminal.

In some examples of the present disclosure, the first driving coil and the second driving coil are spaced apart, and the first micro switch is rotatably mounted between the first driving coil and the second driving coil around a second axis, where
the first driving coil and the second driving coil are configured to drive the first micro switch to rotate around the second axis toward the first direction, or configured to drive the first micro switch to rotate around the second axis toward the second direction.

In some examples of the present disclosure, the first transmission assembly further includes: a first transmission member, where the first transmission member includes a first gear portion rotating around a third axis, the first micro switch includes a first arc-shaped tooth portion rotating around the second axis, and the first gear portion and the first arc-shaped tooth portion are in meshing transmission through a tooth structure; and
the first transmission member further includes a second gear portion rotating around the third axis, the first driven member includes a first rack portion, and the second gear portion and the first rack portion are in meshing transmission through the tooth structure.

In some examples of the present disclosure, both the fourth contactor and the fifth contactor include: a main joining conductor, where the main joining conductor is connected to the corresponding input terminal, and the main joining conductor is selectively electrically connected to the corresponding output terminal; and
a driving mechanism is arranged in the second inner shell, the driving mechanism includes a fourth fan-shaped driving portion, and the fourth fan-shaped driving portion is configured to be rotatable around a fourth axis, where in a rotation process, the fourth fan-shaped driving portion pushes the main joining conductor of the fourth contactor and the main joining conductor of the fifth contactor and releases the push on the main joining conductor of the fourth contactor and the main joining conductor of the fifth contactor, and when the fourth fan-shaped driving portion pushes the plurality of main joining conductors, the plurality of main joining conductors are separately electrically connected to the corresponding output terminals.

In some examples of the present disclosure, the fourth fan-shaped driving portion includes a first fan-shaped sub-portion and a second fan-shaped sub-portion that are spaced apart along the fourth axis, the main joining conductor includes a third joining conductor and a fourth joining conductor, the first fan-shaped sub-portion is configured to push the third joining conductor and release the push on the third joining conductor, the second fan-shaped sub-portion is configured to push the fourth joining conductor and release the push on the fourth joining conductor, the third joining conductor is connected to the input terminal of the fourth contactor, the third joining conductor is selectively electrically connected to the output terminal of the fourth contactor, the fourth joining conductor is connected to the input terminal of the fifth contactor, and the fourth joining conductor is selectively electrically connected to the output terminal of the fifth contactor, where the third joining conductor is arranged opposite to the output terminal of the fourth contactor, and the fourth joining conductor is arranged opposite to the output terminal of the fifth contactor.

In some examples of the present disclosure, the first fan-shaped sub-portion and the second fan-shaped sub-portion are arranged directly facing each other along the fourth axis, and rotate synchronously around the fourth axis, and in a rotation process, the first fan-shaped sub-portion and the second fan-shaped sub-portion simultaneously push the third joining conductor and the fourth joining conductor and simultaneously release the push on the third joining conductor and the fourth joining conductor.

In some examples of the present disclosure, the driving mechanism further includes: a second power source and a second transmission rod, where the second power source is connected to an end portion of the second transmission rod and is configured to drive the second transmission rod to rotate, both the first fan-shaped sub-portion and the second fan-shaped sub-portion are arranged on the second transmission rod, both the first fan-shaped sub-portion and the second fan-shaped sub-portion rotate synchronously around the fourth axis, and the fourth axis coincides with an axis of the second transmission rod.

In some examples of the present disclosure, the distributor further includes: a third inner shell and a fourth inner shell, both the third inner shell and the fourth inner shell being fixedly arranged in the outer housing, the fourth contactor being arranged in the third inner shell, the fifth contactor being arranged in the fourth inner shell, both an input terminal and an output terminal of the fourth contactor being arranged on the third inner shell, and both an input terminal and an output terminal of the fifth contactor being arranged on the fourth inner shell.

In some examples of the present disclosure, the fourth contactor and/or the fifth contactor include: a second transmission assembly, a main joining conductor, and a third driving coil, where the main joining conductor is connected to the corresponding input terminal;
the second transmission assembly includes a second micro switch, a second transmission member, and a second driven member, where the second micro switch and the second transmission member are in meshed transmission, the second transmission member and the second driven member are in meshed transmission, and the second driven member is connected to the main joining conductor; and the third driving coil is configured to drive the second micro switch to move by generating a magnetic force after being energized; where
the second transmission assembly is configured to drive the second driven member to move through the second transmission member when the second micro switch moves, to enable the main joining conductor to be joined to the corresponding output terminal.

In some examples of the present disclosure, the second micro switch is configured to be rotatable around a fifth axis, the second transmission member is configured to be rotatable around a sixth axis, and the fifth axis and the sixth axis are vertically distributed;
the second micro switch includes a second arc-shaped tooth portion rotating around the fifth axis, the second transmission member includes a third gear portion rotating around the sixth axis, and the second arc-shaped tooth portion and the third gear portion are in meshed transmission; and
the second transmission member further includes a fourth gear portion rotating around the sixth axis, the second driven member includes a second rack portion, and the fourth gear portion and the second rack portion are in meshed transmission.

In some examples of the present disclosure, the fourth contactor and/or the fifth contactor include a driving apparatus and a joining busbar, the joining busbar includes a first conducting section and a second conducting section, the first conducting section and the second conducting section are connected to each other and are rotable relative to each other, the first conducting section is fixed on the corresponding input terminal, and the second conducting section is selectively electrically connected to or disconnected from the corresponding output terminal; and
the driving apparatus is configured to drive the second conducting section to move toward or away from the output terminal; where
the input terminal and the output terminal are separately arranged opposite to the joining busbar in a third direction, at least one of the joining busbar, the input terminal, and the output terminal is arranged opposite to the driving apparatus in a fourth direction, and the third direction is orthogonal to the fourth direction.

In some examples of the present disclosure, the driving apparatus includes: a third micro switch and a fourth driving coil, where the third micro switch is arranged opposite to the fourth driving coil in the third direction, the third micro switch is suitable for swinging around a fixed axis under an action of a magnetic force of the fourth driving coil, the third micro switch is configured to drive the second conducting section to move toward or away from the output terminal, the fourth driving coil is arranged opposite to the input terminal and the output terminal respectively in the fourth direction, and the third micro switch is arranged opposite to the joining busbar in the fourth direction.

In some examples of the present disclosure, the third micro switch includes: a driving platform and a connecting frame, where one end of the connecting frame is connected to the driving platform, an other end of the connecting frame is connected to the second conducting section, the driving platform is suitable for swinging under the action of the magnetic force of the fourth driving coil, and the driving platform is configured to drive the connecting frame to swing, and then drive the second conducting section to move toward or away from the output terminal.

In some examples of the present disclosure, the distributor further includes a sixth contactor, a seventh contactor, and an alternating current charging interface, the sixth contactor being connected between a positive terminal of the alternating current charging interface and the positive terminal of the battery terminal interface, and the seventh contactor being connected between a negative terminal of the alternating current charging interface and the negative terminal of the battery terminal interface.

In some examples of the present disclosure, the distributor further includes: a temperature sensor and a controller, the temperature sensor being electrically connected to the controller, the temperature sensor being configured to detect circuit signals of the first contactor, the second contactor, the third contactor, the fourth contactor, the fifth contactor, and/or the pre-charge resistor, and the controller being configured to control the first contactor, the second contactor, the third contactor, the fourth contactor, the fifth contactor, and/or the pre-charge resistor to be turned on or off according to the circuit signal;
the circuit signal including: a temperature change, a voltage change, and a current change.

The charging and distribution system for a vehicle according to the present disclosure includes the distributor.

The vehicle according to the present disclosure includes the charging and distribution system for a vehicle.

Additional aspects and advantages of the present disclosure will be given in the following description, some of which will become apparent from the following description or may be learned from practices of the present disclosure.

### BRIEF DESCRIPTION OF THE DRAWINGS

FIG. 1 is a schematic diagram of a distributor according to an embodiment of the present disclosure;
FIG. 2 is a front view of a distributor according to an embodiment of the present disclosure;
FIG. 3 is a schematic diagram from another angle of a distributor according to an embodiment of the present disclosure;
FIG. 4 is a schematic diagram of an internal structure of a distributor according to an embodiment of the present disclosure;
FIG. 5 is a schematic diagram of connection of a first contactor to a fifth contactor, a direct current charging interface, an electronic control terminal interface, and a battery terminal interface of a distributor according to an embodiment of the present disclosure;
FIG. 6 is a principle diagram of a distributor according to an embodiment of the present disclosure; FIG. 7 is a schematic diagram of a contactor according to an embodiment of the present disclosure;
FIG. 8 is a top view of a contactor according to an embodiment of the present disclosure;
FIG. 9 is a cross-sectional view of A-A in FIG. 8; FIG. 10 is a cross-sectional view of B-B in FIG. 8;
FIG. 11 is a cross-sectional view of C-C in FIG. 8; FIG. 12 is a cross-sectional view of D-D in FIG. 8;
FIG. 13 is a schematic diagram of an internal structure of a contactor according to an embodiment of the present disclosure;
FIG. 14 is a principle diagram of a high voltage of a contactor according to an embodiment of the present disclosure;
FIG. 15 is a schematic diagram of a partial structure of a contactor according to an embodiment of the present disclosure;
FIG. 16 is an assembly schematic diagram of a first connecting terminal, a second connecting terminal, a joining conductor, a driving assembly, and a pre-charge resistor of a contactor according to an embodiment of the present disclosure;
FIG. 17 is a schematic diagram of a driving assembly, a joining conductor, and a pre-charge joining conductor of a contactor according to an embodiment of the present disclosure;
FIG. 18 is a top view of a first connecting terminal, a second connecting terminal, a joining conductor, a driving assembly, and a pre-charge resistor of a contactor after being assembled according to an embodiment of the present disclosure;
FIG. 19 is a schematic diagram of a pre-charge joining conductor of a contactor being joined to a pre-charge resistor of a contactor according to an embodiment of the present disclosure;
FIG. 20 is a cross-sectional view of E-E in FIG. 19; FIG. 21 is a cross-sectional view of F-F in FIG. 19;
FIG. 22 is a schematic diagram of a pre-charge joining conductor of a contactor being joined to a pre-charge resistor of a contactor and a second joining conductor of a contactor being joined to a negative output binding post according to an embodiment of the present disclosure;
FIG. 23 is a cross-sectional view of H-H in FIG. 22; FIG. 24 is a cross-sectional view of I-I in FIG. 22;
FIG. 25 is a schematic diagram of a pre-charge joining conductor of a contactor being joined to a pre-charge resistor of a contactor, a second joining conductor of a contactor being joined to a negative output binding post, and a first joining conductor of a contactor being joined to a positive output binding post according to an embodiment of the present disclosure;
FIG. 26 is a cross-sectional view of G-G in FIG. 25;
FIG. 27 is a schematic diagram of a second joining conductor of a contactor being joined to a negative output binding post and a first joining conductor of a contactor being joined to a positive output binding post according to an embodiment of the present disclosure;
FIG. 28 is a schematic diagram of a first joining conductor of a contactor being joined to a positive output binding post according to an embodiment of the present disclosure;
FIG. 29 is a schematic diagram of a structure of a contactor according to an embodiment of the present disclosure;
FIG. 30 is a cross-sectional view of a contactor according to an embodiment of the present disclosure;
FIG. 31 is a schematic diagram of a structure of a contactor (without housing) according to an embodiment of the present disclosure;
FIG. 32 is a top view (in a connected state) of a structure of a contactor (without housing) according to an embodiment of the present disclosure;
FIG. 33 is a front view (in a connected state) of a structure of a contactor (without housing) according to an embodiment of the present disclosure;
FIG. 34 is a top view (in a disconnected state) of a structure of a contactor (without housing) according to an embodiment of the present disclosure;
FIG. 35 is a front view (in a disconnected state) of a structure of a contactor (without housing) according to an embodiment of the present disclosure;
FIG. 36 is a top view of a structure of a housing in a contactor according to an embodiment of the present disclosure;
FIG. 37 is a schematic diagram of a structure of a transmission assembly of a contactor according to an embodiment of the present disclosure;
FIG. 38 is a schematic diagram of mounting of a transmission assembly of a contactor according to an embodiment of the present disclosure;
FIG. 39 is a schematic diagram of mounting of a transmission assembly of a contactor according to another embodiment of the present disclosure;
FIG. 40 is a schematic diagram of a structure of an embodiment of a contactor according to an embodiment of the present disclosure;
FIG. 41 is a schematic partially cross-sectional view of the contactor in FIG. 40;
FIG. 42 is a cross-sectional view of the contactor in FIG. 40; FIG. 43 is a schematic diagram (without housing) of a structure of the contactor in FIG. 40;
FIG. 44 is a schematic diagram (a first connecting terminal being electrically connected to a second connecting terminal, and there being no housing) of a structure of the contactor in FIG. 40;
FIG. 45 is a schematic diagram of a structure of another embodiment of a contactor according to an embodiment of the present disclosure;
FIG. 46 is a cross-sectional view of the contactor in FIG. 45; FIG. 47 is a schematic diagram of a structure of the contactor (without housing) in FIG. 45;
FIG. 48 is a front view (in a connected state) of a structure of the contactor (without housing) in FIG. 45;
FIG. 49 is a top view (in a connected state) of a structure of the contactor (without housing) in FIG. 45;
FIG. 50 is a front view (in a disconnected state) of a structure of the contactor (without housing) in FIG. 45;
FIG. 51 is a top view (in a disconnected state) of a structure of the contactor (without housing) in FIG. 45;
FIG. 52 is a top view of a structure of a housing in the contactor in FIG. 45;
FIG. 53 is a schematic diagram of a structure of a second transmission assembly of the contactor in FIG. 45;
FIG. 54 is a schematic diagram of mounting of a second transmission assembly and a third driving coil in the contactor in FIG. 45;
FIG. 55 is a schematic diagram of a structure of a contactor (without housing) according to another embodiment of the present disclosure;
FIG. 56 is a schematic diagram of a contactor according to another embodiment of the present disclosure;
FIG. 57 is a three-dimensional schematic diagram of the contactor in FIG. 56 at a first position;
FIG. 58 is a top view of the contactor in FIG. 56 at a first position;
FIG. 59 is a three-dimensional schematic diagram of the contactor in FIG. 56 at a second position;
FIG. 60 is a top view of the contactor in FIG. 56 at a second position;
FIG. 61 is a state diagram of a driving apparatus of the contactor in FIG. 56 at a first position;
FIG. 62 is a state diagram of a driving apparatus of the contactor in FIG. 56 at a second position;
FIG. 63 is a schematic diagram of the contactor in FIG. 56; FIG. 64 is a schematic diagram of a driving apparatus of the contactor in FIG. 56;
FIG. 65 is a schematic cross-sectional view of the contactor in FIG. 56; FIG. 66 is a schematic diagram of a vehicle according to an embodiment of the present disclosure;
FIG. 67 is a schematic diagram of a working circuit of a sensor used in the present disclosure;
FIG. 68 is another principle diagram of a distributor according to an embodiment of the present disclosure; and

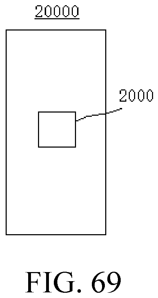

FIG. 69 is a schematic diagram of a charging pile according to an embodiment of the present disclosure.

### DETAILED DESCRIPTION

Embodiments of the present disclosure are described in detail below, and examples of the embodiments are shown in the accompanying drawings, where the same or similar elements or the elements having same or similar functions are denoted by the same or similar reference numerals throughout the description. The embodiments described below with reference to the accompanying drawings are exemplary and used only for explaining the present disclosure, and should not be construed as a limitation on the present disclosure.

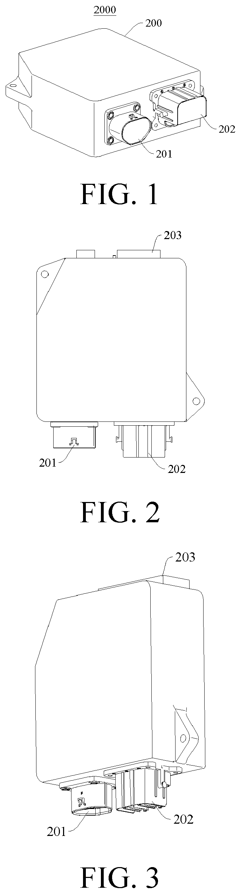

The following describes a distributor 2000 according to an embodiment of the present disclosure with reference to FIG. 1 to FIG. 6. The distributor 2000 may be arranged in a charging and distribution system 1000 for a vehicle, and the charging and distribution system 1000 may be arranged in the vehicle.

As shown in FIG. 1 to FIG. 6, the distributor 2000 according to an embodiment of the present disclosure includes: an outer housing 200, a direct current charging interface 201, an electronic control terminal interface 202, a battery terminal interface 203, a first contactor K1, a second contactor K2, a third contactor K3, a fourth contactor K4, and a fifth contactor K5. The direct current charging interface 201, the electronic control terminal interface 202, and the battery terminal interface 203 each are arranged in the outer housing 200. The first contactor K1 is connected between a positive terminal of the electronic control terminal interface 202 and a positive terminal of the battery terminal interface 203. The second contactor K2 is connected between a negative terminal of the electronic control terminal interface 202 and a negative terminal of the battery terminal interface 203. The third contactor K3 and a pre-charge resistor 9 are connected in series to form a pre-charge branch. The pre-charge branch and the first contactor K1 are connected in parallel, and the pre-charge branch is connected between the positive terminal of the electronic control terminal interface 202 and the positive terminal of the battery terminal interface 203; or the pre-charge branch and the second contactor K2 are connected in parallel, and the pre-charge branch is connected between the negative terminal of the electronic control terminal interface 202 and the negative terminal of the battery terminal interface 203.

Further, the fourth contactor K4 is connected between a positive terminal of the direct current charging interface 201 and the positive terminal of the battery terminal interface 203. The fifth contactor K5 is connected between a negative terminal of the direct current charging interface 201 and the negative terminal of the battery terminal interface 203. The first contactor K1, the second contactor K2, the third contactor K3, the pre-charge resistor 9, the fourth contactor K4, and the fifth contactor K5 each are selectively turned on or off, and the first contactor K1, the second contactor K2, the third contactor K3, the pre-charge resistor 9, the fourth contactor K4, and the fifth contactor K5 each are arranged in the outer housing 200.

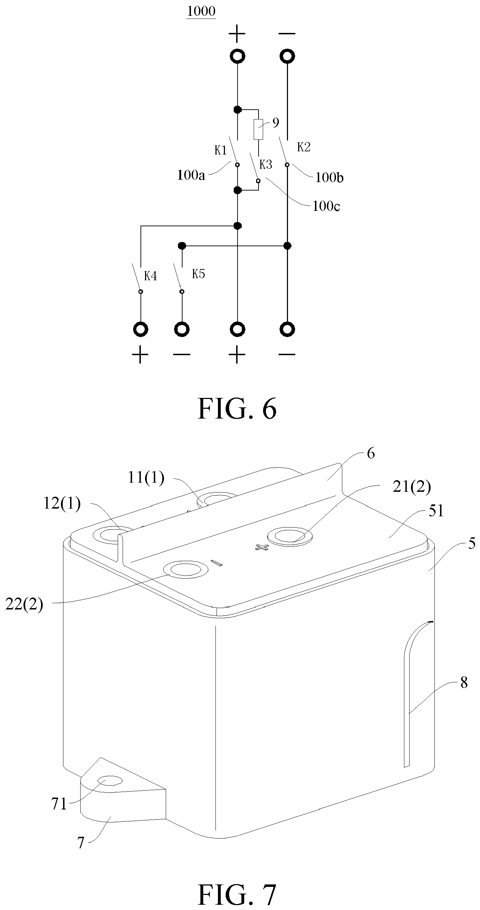

Specifically, as shown in FIG. 6, a working scenario of the distributor 2000 in the present disclosure is described below.

Scenario 1: When the vehicle is in a high-voltage power-off state, the first contactor K1, the second contactor K2, the third contactor K3, the fourth contactor K4, and the fifth contactor K5 each are in an off state.

Scenario 2: Direct current charging (namely, fast charging) needs to be performed on a power battery of a vehicle.

2.1. When the vehicle is in a high-voltage power-on state in a non-driving scenario (in other words, the second contactor K2 and the third contactor K3 are in an on state), and direct current charging (namely, fast charging) needs to be performed on the power battery, a low-voltage control member of the fourth contactor K4 and a low-voltage control member of the fifth contactor K5 receive on signals of the contactor from an upper computer, a high-voltage contact point of the fourth contactor K4 and a high-voltage contact point of the fifth contactor K5 act synchronously to switch from an off state to an on state, and the vehicle is in a direct current charging (namely, fast charging) state. When the direct current charging of the power battery is completed, the low-voltage control member of the fourth contactor K4 and the low-voltage control member of the fifth contactor K5 receive off signals of the contactor from the upper computer, the high-voltage contact point of the fourth contactor K4 and the high-voltage contact point of the fifth contactor K5 act synchronously, and the fourth contactor K4 and the fifth contactor K5 switch from the on state to the off state.

2.2. When the vehicle is in the high-voltage power-off state (in other words, the first contactor K1, the second contactor K2, the third contactor K3, the fourth contactor K4, and the fifth contactor K5 each are in an off state), and direct current charging (namely, fast charging) needs to be performed on the power battery, the third contactor K3, the second contactor K2, and the first contactor K1 are closed sequentially, and then the third contactor K3 is turned off.

When both the first contactor K1 and the second contactor K2 are closed, and the third contactor K3 is turned off, the fourth contactor K4 and the fifth contactor K5 begin to perform an action procedure in 2.1. After the action procedure in 2.1 ends, if the vehicle needs to switch to a driving state, the second contactor K2 and the third contactor K3 do not need to continue to perform actions. If the vehicle needs lower high-voltage power, the second contactor K2 and the third contactor K3 are turned off, and the first contactor K1 is turned on.

Scenario 3: The vehicle needs to drive.

3.1 When the vehicle is in a high-voltage power-on state in a non-driving scenario (in other words, the second contactor K2 and the third contactor K3 are in an on state), the fourth contactor K4 and the fifth contactor K5 do not need to perform any action procedure.

3.2 When the vehicle is in a high-voltage power-off state (in other words, the first contactor K1, the second contactor K2, the third contactor K3, the fourth contactor K4, and the fifth contactor K5 each are in an off state), the third contactor K3, the second contactor K2, and the first contactor K1 are closed sequentially, and then the third contactor K3 is turned off.

Scenario 4: A starting battery (low-voltage power supply battery) of the vehicle needs to be charged.

4.1 When the vehicle is in a high-voltage power-on state in a non-driving scenario (in other words, the second contactor K2 and the third contactor K3 are in an on state), the fourth contactor K4 and the fifth contactor K5 do not need to perform any action procedure. obc/DC (vehicle-mounted power supply) receives a signal from the upper computer, and charges the starting battery (low-voltage power supply).

When charging of the starting battery (low-voltage power supply) is completed, the second contactor K2 and the third contactor K3 are turned off, and the first contactor K1 is turned on.

4.2 When the vehicle is in a high-voltage power-off state (in other words, the first contactor K1, the second contactor K2, the third contactor K3, the fourth contactor K4, and the fifth contactor K5 each are in an off state), the third contactor K3, the second contactor K2, and the first contactor K1 are closed sequentially, and then the third contactor K3 is turned off.

When the first contactor K1 and the second contactor K2 are closed, and the third contactor K3 is in the off state, the action procedure in 4.1 needs to continue to be performed.

Scenario 5: The starting battery (low-voltage power supply battery) of the vehicle cannot supply power to a low-voltage load.

5.1 When the vehicle is in a high-voltage power-on state in a non-driving scenario (in other words, the second contactor K2 and the third contactor K3 are in an on state), the fourth contactor K4 and the fifth contactor K5 do not need to perform any action procedure. The obc/DC (vehicle-mounted power supply) receives the signal from the upper computer, and supplies power to the low-voltage load of the vehicle.

When a high-power low-voltage load is turned off, and the starting battery (low-voltage power supply) can meet a power supply requirement of the low-voltage load, the second contactor K2 and the third contactor K3 are turned off, and the first contactor K1 is turned on.

5.2 When the vehicle is in a high-voltage power-off state (in other words, the first contactor K1, the second contactor K2, the third contactor K3, the fourth contactor K4, and the fifth contactor K5 each are in an off state), the third contactor K3, the second contactor K2, and the first contactor K1 are closed sequentially, and then the third contactor K3 is turned off.

When the first contactor K1 and the second contactor K2 are closed, and the third contactor K3 is in the off state, the action procedure in 5.1 needs to continue to be performed.

Scenario 6: Alternating current charging (namely, slow charging) needs to be performed on the vehicle.

6.1 When the vehicle is in a high-voltage power-on state in a non-driving scenario (in other words, the second contactor K2 and the third contactor K3 are in an on state), the obc/DC (vehicle-mounted power supply) receives the signal from the upper computer to work, to be specific, to charge the power battery.

When charging of the power battery is completed, or the vehicle executes a command to end charging, and if the vehicle needs to switch to a driving state, the second contactor K2 and the third contactor K3 do not need to continue to perform actions; and if the vehicle needs lower high-voltage power, the second contactor K2 and the third contactor K3 are turned off, and the first contactor K1 is turned on.

6.2 When the vehicle is in a high-voltage power-off state (in other words, the first contactor K1, the second contactor K2, the third contactor K3, the fourth contactor K4, and the fifth contactor K5 each are in an off state), the third contactor K3, the second contactor K2, and the first contactor K1 are closed sequentially, and then the third contactor K3 is turned off.

When the first contactor K1 and the second contactor K2 are closed, and the third contactor K3 is in the off state, the action procedure in 6.1 needs to continue to be performed.

It may be learnt from the description of a working scenario of the distributor 2000 in the present disclosure that the distributor 2000 may meet the charging and discharging requirement of the vehicle. In addition, the first contactor K1, the second contactor K2, the third contactor K3, the pre-charge resistor 9, the fourth contactor K4, and the fifth contactor K5 each are arranged in the outer housing 200, so that a pre-charge resistor 9 and a plurality of direct current contactors may be integrated. Circuit layout in the distributor 2000 is simple, which may reduce space occupied by a plurality of contactors, and may also reduce a cost of the distributor 2000.

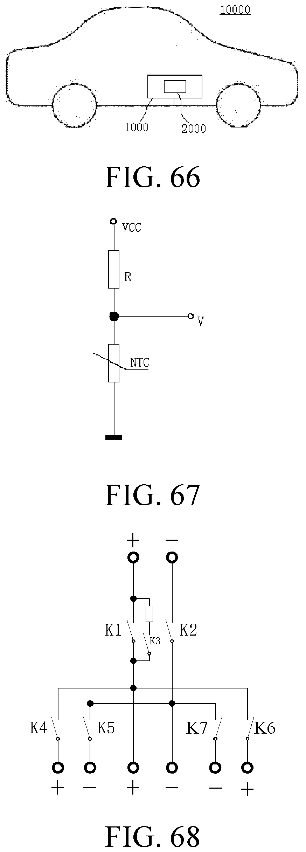

As shown in FIG. 68, in some embodiments of the present disclosure, the distributor 2000 further includes a sixth contactor K6, a seventh contactor K7, and an alternating current charging interface. The sixth contactor K6 is connected between a positive terminal of the alternating current charging interface and the positive terminal of the battery terminal interface 203, and the seventh contactor K7 is connected between a negative terminal of the alternating current charging interface and the negative terminal of the battery terminal interface 203. By arranging the sixth contactor K6, the seventh contactor K7, and the alternating current charging interface, a vehicle-mounted charger may be connected to the alternating current charging interface, to implement alternating current charging.

In some embodiments of the present disclosure, the distributor 2000 further includes: a temperature sensor and a controller. The temperature sensor is electrically connected to the controller

The controller may be an original upper computer of the vehicle, and a temperature sensor and the upper computer perform communication control by using a controller area network (CAN), thereby implementing control on the temperature sensor by using the original upper computer, simplifying a control structure of the temperature sensor, and reducing production costs.

Further, the temperature sensor is configured to detect circuit signals of the first contactor K1, the second contactor K2, the third contactor K3, the fourth contactor K4, the fifth contactor K5, and/or the pre-charge resistor 9, and the controller is configured to control the first contactor K1, the second contactor K2, the third contactor K3, the fourth contactor K4, the fifth contactor K5, and/or the pre-charge resistor 9 to be turned on or off according to the circuit signal, where the circuit signal includes: a temperature change, a voltage change, a current change, and the like. This is not limited herein.

In some examples, the temperature sensor is welded on the first contactor K1, the second contactor K2, the third contactor K3, the fourth contactor K4, the fifth contactor K5, and/or the pre-charge resistor 9, and the temperature sensor is electrically connected to the upper computer. As the first contactor K1, the second contactor K2, the third contactor K3, the fourth contactor K4, the fifth contactor K5, and/or the pre-charge resistor 9 are turned on, a current-carrying capacity and a heat generation amount of a high-voltage circuit change, and temperature changes correspondingly occur. The temperature sensor may obtain change information (a temperature change, a current-carrying capacity change, and the like) in a working process of the high-voltage circuit. The temperature sensor is configured to detect temperature changes of the first contactor K1, the second contactor K2, the third contactor K3, the fourth contactor K4, the fifth contactor K5, and/or the pre-charge resistor 9, and transmit the temperature changes to a controller in the form of a circuit signal. The controller determines whether a cut-off threshold of the high-voltage circuit is reached according to the circuit signal, and when the high-voltage circuit needs to be turned off, controls the first contactor K1, the second contactor K2, the third contactor K3, the fourth contactor K4, the fifth contactor K5, and/or the pre-charge resistor 9 to be electrically disconnected. A fuse does not need to be arranged, to reduce a high-voltage loss and a cost, and after controlling the contactor to be turned off, if electrical equipment using the distributor 2000 of the present disclosure needs to continue to work, it may also be ensured that a high voltage may be supplied to the electrical equipment, which may improve security.

It should be noted that after the fuse blows, the high-voltage circuit is completely turned off. In the present disclosure, by arranging the controller and the temperature sensor, even if the high-voltage circuit needs to be turned off based on the information obtained from the temperature sensor, under an extreme condition, upper high-voltage power may still be supplied to improve security. For example, the distributor 2000 of the present disclosure is used in an electric vehicle. When the circuit information indicates that the contactor needs to be turned off but the vehicle is in a dangerous condition and needs to maintain a working condition, the upper high-voltage power state may be maintained. In addition, after the vehicle drives to a secure position or the dangerous condition is eliminated, the first contactor K1, the second contactor K2, the third contactor K3, the fourth contactor K4, the fifth contactor K5, and/or the pre-charge resistor 9 is electrically disconnected.

In this way, the distributor 2000 may be prevented from overheating due to an excessive temperature of the first contactor K1, the second contactor K2, the third contactor K3, the fourth contactor K4, the fifth contactor K5, and/or the pre-charge resistor 9, which is conducive to enhancing security of the distributor 2000, and may maintain the upper high-voltage power state when the vehicle is in a dangerous condition and needs to maintain the working condition, thereby enhancing practicality of the distributor 2000.

Certainly, the temperature sensor may also be arranged at other positions of the high-voltage circuit through other structural forms for detecting the circuit signal of the high-voltage circuit, which is not limited herein.

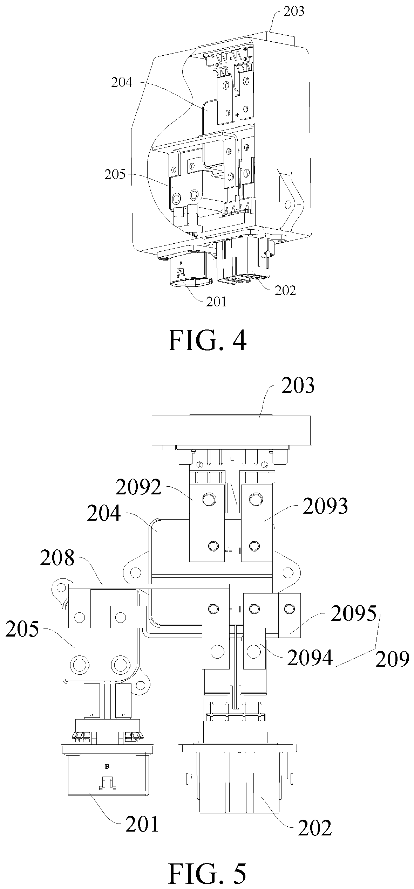

As shown in FIG. 5, according to some embodiments of the present disclosure, the input terminal of the first contactor K1 is connected to the output terminal of the fourth contactor K4 through a first conductive busbar 208, and the first conductive busbar 208 is further connected to the positive terminal of the electronic control terminal interface 202. Further, the input terminal of the second contactor K2 is connected to the output terminal of the fifth contactor K5 through a second conductive busbar 209, and the second conductive busbar 209 is further connected to the negative terminal of the electronic control terminal interface 202. Further, the second conductive busbar 209 includes: a first copper sub-busbar 2094 and a second copper sub-busbar 2095. The first copper sub-busbar 2094 is connected between the input terminal of the second contactor K2 and the negative terminal of the electronic control terminal interface 202. The second copper sub-busbar 2095 is connected between the output terminal of the fifth contactor K5 and the first copper sub-busbar 2094. Further, a fourth conductive busbar 2092 is connected between the output terminal of the first contactor K1 and the positive terminal of the battery terminal interface 203. Further, a fifth conductive busbar 2093 is connected between the output terminal of the second contactor K2 and the positive terminal of the battery terminal interface 203.

In some embodiments of the present disclosure, as shown in FIG. 5, the distributor 2000 further includes: a first inner shell 204. The first inner shell 204 is fixedly arranged in the outer housing 200, the first contactor K1, the second contactor K2, the third contactor K3, and the pre-charge resistor 9 are integrated in the first inner shell 204, both an input terminal and an output terminal of the first contactor K1 are arranged on the first inner shell 204, and both an input terminal and an output terminal of the second contactor K2 are arranged on the first inner shell 204. With such arrangement, the first contactor K1, the second contactor K2, the third contactor K3, and the pre-charge resistor 9 may be integrated, so that circuit layout in the distributor 2000 may be simpler, which may further reduce space occupied by a plurality of contactors, and may also reduce a cost of the distributor 2000.

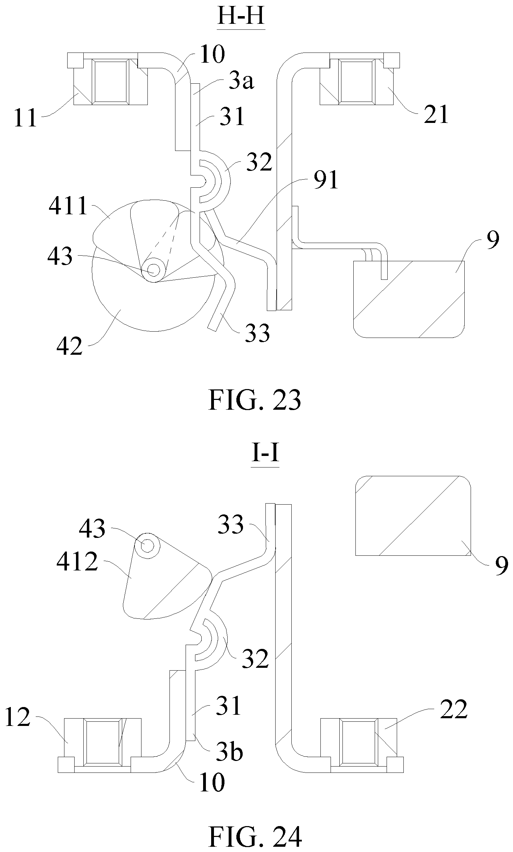

According to an embodiment of the present disclosure, as shown in FIG. 6 to FIG. 28, both the first contactor K1 and the second contactor K2 include: a main joining conductor 3. The main joining conductor 3 is connected to the corresponding input terminal, and the main joining conductor 3 is selectively electrically connected to the corresponding output terminal. It should be noted that one main joining conductor 3 is separately arranged on the first contactor K1 and the second contactor K2. Using the first contactor K1 as an example for description, the main joining conductor 3 of the first contactor K1 is connected to the input terminal of the first contactor K1, and the main joining conductor 3 of the first contactor K1 is selectively electrically connected to the output terminal of the first contactor K1 .

Further, the third contactor K3 includes a pre-charge joining conductor 91, the pre-charge joining conductor 91 and the pre-charge resistor 9 are separately connected to the input terminal and the output terminal of one of the first contactor K1 and the second contactor K2, and the pre-charge joining conductor 91 is selectively electrically connected to the pre-charge resistor 9. Preferably, the pre-charge joining conductor 91 and the pre-charge resistor 9 are respectively connected to the input terminal and the output terminal of the first contactor K1. Such arrangement may ensure that the distributor 2000 meets a charging and discharging requirement of the vehicle.

Further, a driving assembly 4 is arranged in the first inner shell 204, the driving assembly 4 is configured to drive the main joining conductor 3 to be electrically connected to the corresponding output terminal, and the driving assembly 4 is further configured to drive the pre-charge joining conductor 91 to be electrically connected to the pre-charge resistor 9. The driving assembly 4 is configured to drive the main joining conductor 3 of the first contactor K1 to be connected to the output terminal of the first contactor K1. The driving assembly 4 is configured to drive the main joining conductor 3 of the second contactor K2 to be connected to the output terminal of the second contactor K2. Controlling of the pre-charge joining conductor 91 and the main joining conductor 3 may be implemented through the same driving assembly 4. After the distributor 2000 of the present disclosure is applied to the vehicle (such as a new energy vehicle), the charging and discharging requirement of the vehicle (charging and discharging principles are described below) may be met, and a plurality of contactors may be integrated together. In addition, a risk of mutual influence between a high-voltage main circuit and a low-voltage control circuit may be avoided, which is conducive to enhancing the security and the practicality of the distributor 2000.

Further, the driving assembly 4 includes: a first fan-shaped portion 411, a second fan-shaped portion 412, and a third fan-shaped portion 413, where the main joining conductor 3 includes a first joining conductor 3a and a second joining conductor 3b, the first fan-shaped portion 411 is configured to push the first joining conductor 3a and release the push on the first joining conductor 3a, the second fan-shaped portion 412 is configured to push the second joining conductor 3b and release the push on the second joining conductor 3b, the third fan-shaped portion 413 is configured to push the pre-charge joining conductor 91 and release the push on the pre-charge joining conductor 91, the first joining conductor 3a is connected to the input terminal of the first contactor K1, the first joining conductor 3a is selectively electrically connected to the output terminal of the first contactor K1, the second joining conductor 3b is connected to the input terminal of the second contactor K2, and the second joining conductor 3b is selectively electrically connected to the output terminal of the second contactor K2; where the first joining conductor 3a is arranged opposite to the output terminal of the first contactor K1, the second joining conductor 3b is arranged opposite to the output terminal of the second contactor K2, when the first fan-shaped portion 411 pushes the first joining conductor 3a, the first joining conductor 3a is connected to the corresponding output terminal. In other words, when the first fan-shaped portion 411 pushes the first joining conductor 3a, the first joining conductor 3a is connected to the output terminal of the first contactor K1, when the second fan-shaped portion 412 pushes the second joining conductor 3b, the second joining conductor 3b is connected to the output terminal of the second contactor K2. In other words, when the second fan-shaped portion 412 pushes the second joining conductor 3b, the second joining conductor 3b is connected to the output terminal of the second contactor K2. When the third fan-shaped portion 413 pushes the pre-charge joining conductor 91, the pre-charge joining conductor 91 is connected to the pre-charge resistor 9.

In some embodiments of the present disclosure, the driving assembly 4 further includes: a first power source 42 and a first transmission rod 43, where the first power source 42 is connected to an end portion of the first transmission rod 43 and is configured to drive the first transmission rod 43 to rotate, the first fan-shaped portion 411, the second fan-shaped portion 412, and the third fan-shaped portion 413 each are arranged on the first transmission rod 43, the first fan-shaped portion 411, the second fan-shaped portion 412, and the third fan-shaped portion 413 each rotate synchronously around a first axis, and the first axis coincides with an axis of the first transmission rod 43. By driving the first transmission rod 43 to rotate with the first power source 42, the first fan-shaped portion 411, the second fan-shaped portion 412, and the third fan-shaped portion 413 may be simultaneously driven to rotate.

Further, in a rotation process, the first fan-shaped portion 411, the second fan-shaped portion 412, and the third fan-shaped portion 413 separately push the first joining conductor 3a, the second joining conductor 3b, and the pre-charge joining conductor 91 and release the push on the first joining conductor 3a, the second joining conductor 3b, and the pre-charge joining conductor 91, so that the first joining conductor 3a and the second joining conductor 3b are electrically connected to the corresponding output terminal, and the pre-charge joining conductor 91 may also be electrically connected to the pre-charge resistor 9.

In some embodiments of the present disclosure, the distributor 2000 further includes: a second inner shell 205, where the second inner shell 205 is fixedly arranged in the outer housing 200, the fourth contactor K4 and the fifth contactor K5 are integrated in the second inner shell 205, both an input terminal and an output terminal of the fourth contactor K4 are arranged on the second inner shell 205, and both an input terminal and an output terminal of the fifth contactor K5 are arranged on the second inner shell 205. With such arrangement, the fourth contactor K4 and the fifth contactor K5 may be integrated into one contactor, which may simplify an internal structure of the distributor 2000.

Specifically, the contactor according to the embodiment of the present disclosure is described below with reference to FIG. 7 to FIG. 28. The contactor is a direct current contactor, and at least two connecting terminal groups are integrated in the contactor. Each connecting terminal group includes a first connecting terminal 1 (namely, the input terminal) and a second connecting terminal 2 (namely, the output terminal). A pre-charge resistor 9 and a pre-charge joining conductor 91 are further integrated in the contactor, thereby forming at least three groups of direct current circuits. The contactor integrates the three direct current contactors, and the pre-charge resistor 9 of the contactor has discharge electrical energy.

As shown in FIG. 7 to FIG. 28, the contactor according to an embodiment of the present disclosure includes: at least two connecting terminal groups, at least two main joining conductors 3, a driving assembly 4, a pre-charge joining conductor 91, and a pre-charge resistor 9. A quantity of connecting terminal groups may be flexibly set according to an actual usage requirement. Preferably, the connecting terminal groups are divided into two groups, and the main joining conductors 3 are arranged in one-to-one correspondence with the connecting terminal groups. In other words, one main joining conductor 3 is arranged corresponding to one connecting terminal group, and each main joining conductor 3 is connected to the corresponding first connecting terminal 1. The pre-charge joining conductor 91 and the pre-charge resistor 9 are respectively connected to the first connecting terminal 1 and the second connecting terminal 2 of one connecting terminal group. For example, the pre-charge joining conductor 91 is connected to the first connecting terminal 1, and the pre-charge resistor 9 is connected to the second connecting terminal 2.

It should be noted that one first connecting terminal 1 may correspond to one second connecting terminal 2, and one first connecting terminal 1 and one second connecting terminal 2 may form one direct current circuit.

The main joining conductor 3 is made of a conductive material, such as a composite metal, including iron or soft copper (silver), thereby facilitating reduction of a weight and a volume of the main joining conductor 3 while improving conductivity of the main joining conductor 3. In this way, the main joining conductor 3 may have a greater current-carrying capacity, thereby improving the conductivity of the contactor.

In addition, due to the use of the composite material, including soft copper (silver) in the main joining conductor 3, the main joining conductor 3 is made of a soft material, which avoids the rigid contact that occurs when the main joining conductor 3 comes into contact with the second connecting terminal 2, thereby effectively reducing the noise generated during the contact, and further enhancing the practicability of the contactor.

The pre-charge resistor 9 is connected to the second connecting terminal 2, and the main joining conductor 3 is connected to the first connecting terminal 1. Further, the pre-charge resistor 9 is connected to the second connecting terminal 92, and the pre-charge joining conductor 91 is suitable for being joined to the second connecting terminal 92.

The driving assembly 4 and the upper computer perform communication control by using the controller area network (CAN) for signal control according to CAN. The driving assembly 4 is configured to drive the main joining conductor 3 to be electrically connected to the corresponding second connecting terminal 2, and the driving assembly 4 is further configured to drive the pre-charge joining conductor 91 to be electrically connected to the pre-charge resistor 9. Further, the pre-charge joining conductor 91 is electrically connected to the second connecting terminal 92. Controlling of the pre-charge joining conductor 91 and the main joining conductor 3 may be implemented through the same driving assembly 4. After the contactor of the present disclosure is applied to the vehicle (such as a new energy vehicle), the charging and discharging requirement of the vehicle (charging and discharging principles are described below) may be met, and a plurality of contactors may be integrated together. In addition, a risk of mutual influence between a high-voltage main circuit and a low-voltage control circuit may be avoided, which is conducive to enhancing the security and the practicality of the contactor.

In addition, the contactor may further include a temperature sensor. The temperature sensor is welded on the main joining conductor 3, and the temperature sensor is electrically connected to the upper computer. The temperature sensor is configured to detect a temperature change of the main joining conductor 3, and transmit a real-time temperature value of the main joining conductor 3 to the upper computer. Then the upper computer determines whether the temperature meets a threshold temperature for disconnection between the first connecting terminal 1 and the second connecting terminal 2. If the temperature reaches the threshold temperature, the first connecting terminal 1 is controlled to be disconnected from the second connecting terminal 2, thereby preventing the contactor from overheating due to an excessive temperature of the main joining conductor 3, which is conducive to enhancing the security of the contactor. Certainly, the temperature sensor may also be arranged at another position on the direct current circuit for detecting the temperature of the direct current circuit, which is not limited herein.

Therefore, the contactor of the present disclosure may integrate at least three direct current contactors and the pre-charge resistor 9 together. There is a pre-charge circuit in the contactor, which may meet the charging and discharging requirement of the vehicle. In addition, controlling of the pre-charge joining conductor 91 and the main joining conductor 3 may be implemented through the same driving assembly 4. In addition, the contactor may avoid a risk of mutual influence between the high-voltage main circuit and the low-voltage control circuit, which helps to enhance the security and the practicality of the contactor.

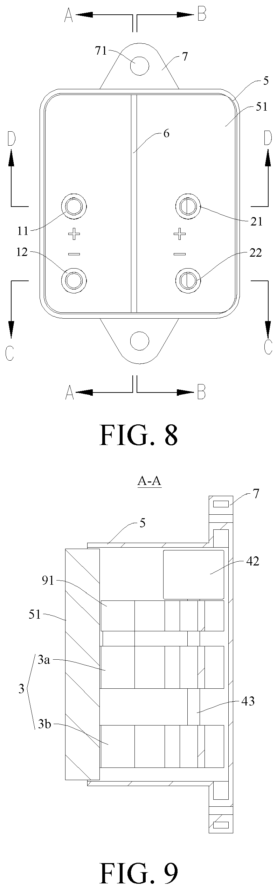

In some embodiments of the present disclosure, as shown in FIG. 8, there are two connecting terminal groups. The first connecting terminal 1 of one of the two connecting terminal groups is a positive input binding post 11 and the second connecting terminal 2 is a positive output binding post 21, and the first connecting terminal 1 of the other of the two connecting terminal groups is a negative input binding post 12 and the second connecting terminal 2 is a negative output binding post 22. The positive input binding post 11 and the positive output binding post 21 form a group of direct current circuits, and the main joining conductor 3 connected to the positive input binding post 11 may selectively control the positive input binding post 11 and the positive output binding post 21 to be turned on or off. The negative input binding post 12 and the negative output binding post 22 form another group of direct current circuits, and the main joining conductor 3 connected to the negative input binding post 12 may selectively control the negative input binding post 12 and the negative output binding post 22 to be turned on or off.

Further, as shown in FIG. 9, the main joining conductor 3 may include a first joining conductor 3a and a second joining conductor 3b.

The first joining conductor 3a is connected to the positive input binding post 11, and is configured to be selectively turned off or on with the positive output binding post 21. The second joining conductor 3b is connected to the negative input binding post 12, and is configured to be selectively turned off or on with the negative output binding post 22. In other words, the first joining conductor 3a may selectively control the positive input binding post 11 and the positive output binding post 21 to be turned on or off. The second joining conductor 3b may selectively control the negative input binding post 12 and the negative output binding post 22 to be turned on or off. In this way, the two groups of direct current circuits may be selectively controlled to be turned on or off through the first joining conductor 3a and the second joining conductor 3b.

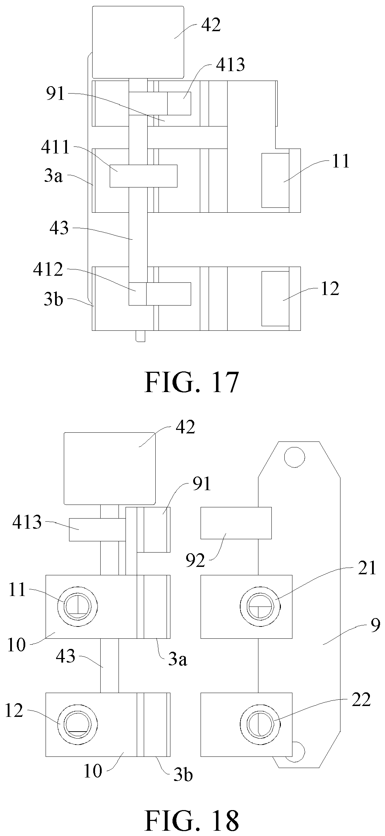

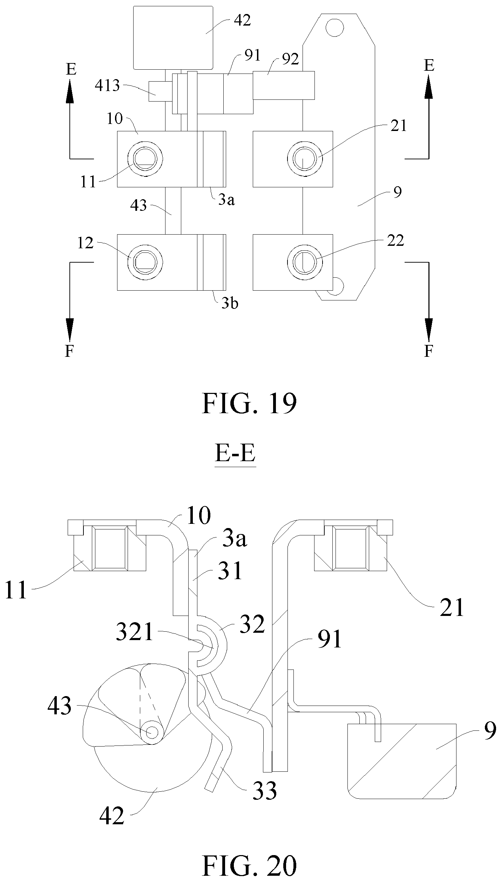

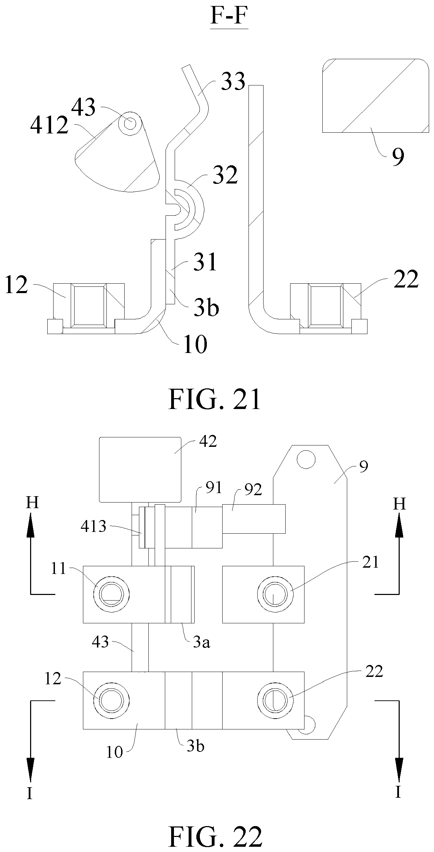

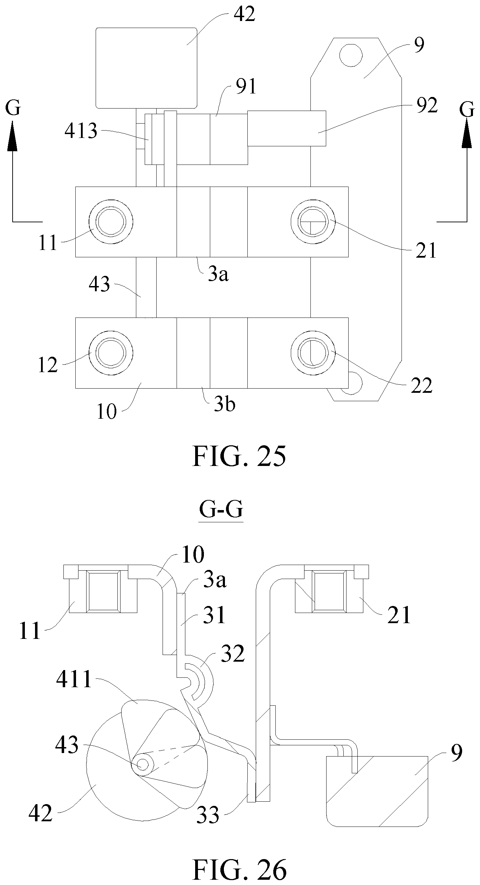

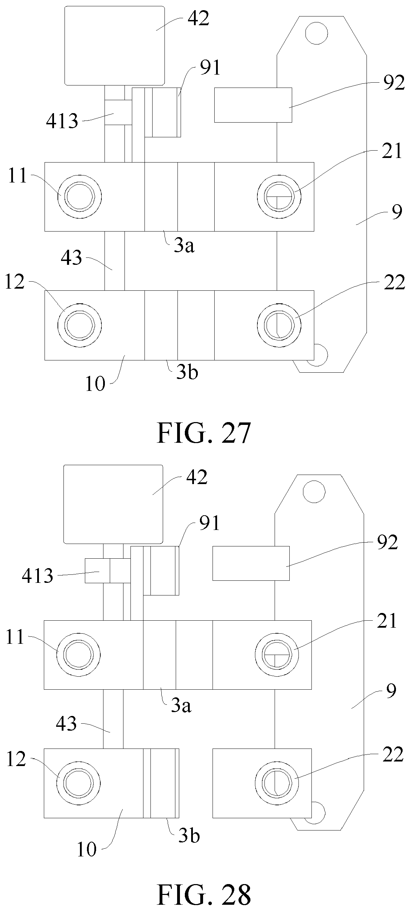

In some embodiments of the present disclosure, the driving assembly 4 is configured to drive the pre-charge joining conductor 91 and the second connecting terminal 92, the second joining conductor 3b and the negative output binding post 22, and the first joining conductor 3a and the positive output binding post 21 to be selectively turned on sequentially. Specifically, after the driving assembly 4 receives the control signal from the upper computer, the driving assembly 4 starts to work. As shown in FIG. 19, the driving assembly 4 first drives the pre-charge joining conductor 91 to be turned on with the second connecting terminal 92. In this case, the pre-charge circuit is in an on state. As shown in FIG. 22, the driving assembly 4 then drives the second joining conductor 3b to be turned on with the negative output binding post 22. On the vehicle, correspondingly, the vehicle is in a pre-charging state in which the upper high-voltage power is being supplied. As shown in FIG. 25, the driving assembly 4 then drives the first joining conductor 3a to be turned on with the positive output binding post 21, so that a main positive circuit of the contactor is in an on state. As shown in FIG. 27, the driving assembly 4 then drives the pre-charge joining conductor 91 to be turned off with the second connecting terminal 92, and the pre-charge circuit is in an on state. In this case, the vehicle is in a normal high-voltage power-maintaining state, and the contactor remains in the state in a whole time period in which the vehicle requires the high-voltage power. When the vehicle needs the lower high-voltage power, as shown in FIG. 28, the driving assembly 4 drives the first joining conductor 3a to be turned off with the positive output binding post 21. Then the driving assembly 4 drives the first joining conductor 3a to be turned off with the positive output binding post 21. As shown in FIG. 18, a main negative circuit, a main positive circuit, and a pre-charge circuit each are in an on state. In this case, the vehicle is in a lower high-voltage power state, and the contactor remains in the state in a whole time period in which the vehicle does not need the high-voltage power. Therefore, such arrangement may enable the contactor to meet a charging and discharging requirement of the vehicle, which can make a structure of the contactor simple.

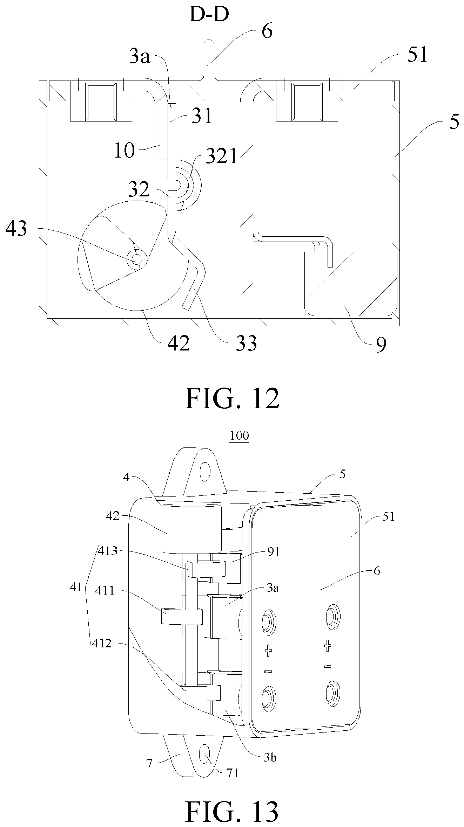

In some embodiments of the present disclosure, as shown in FIG. 13, the driving assembly 4 includes a fan-shaped driving portion 41, and the fan-shaped driving portion 41 is configured to rotate around a first axis. The fan-shaped driving portion 41 pushes a plurality of main joining conductors 3 and a pre-charge joining conductor 91 and releases the push on the plurality of main joining conductors 3 and the pre-charge joining conductor 91 in a rotation process. When the fan-shaped driving portion 41 pushes the plurality of main joining conductors 3, the plurality of main joining conductors 3 are connected to the corresponding second connecting terminals 2. When the fan-shaped driving portion 41 pushes the pre-charge joining conductor 91, the pre-charge joining conductor 91 is connected to the pre-charge resistor 9. Further, in the rotation process, the fan-shaped driving portion 41 pushes the pre-charge joining conductor 91 and the second connecting terminal 92, the first joining conductor 3a and the positive output binding post 21, and the second joining conductor 3b and the negative output binding post 22 to be turned on. In other words, when the fan-shaped driving portion 41 rotates, the fan-shaped driving portion 41 may drive the pre-charge joining conductor 91 and the second connecting terminal 92 to be turned on. The fan-shaped driving portion 41 may also drive the second joining conductor 3b to be turned on with the negative output binding post 22. The fan-shaped driving portion 41 may further drive the first joining conductor 3a to be turned on with the positive output binding post 21. It should be noted that the fan-shaped driving portion 41 first drives the pre-charge joining conductor 91 to be turned on with the second connecting terminal 92. Then the fan-shaped driving portion 41 drives the second joining conductor 3b to be turned on with the negative output binding post 22. Then the fan-shaped driving portion 41 drives the first joining conductor 3a to be turned on with the positive output binding post 21. Then, when the fan-shaped driving portion 41 is separated from the pre-charge joining conductor 91, the pre-charge joining conductor 91 is turned off with the second connecting terminal 92. Then, when the fan-shaped driving portion 41 is separated from the second joining conductor 3b, the second joining conductor 3b is turned off with the negative output binding post 22. Then, when the fan-shaped driving portion 41 is separated from the first joining conductor 3a, the first joining conductor 3a is turned off with from the positive output binding post 21, thereby implementing a technical effect of driving the pre-charge joining conductor 91 and the second connecting terminal 92, the first joining conductor 3a and the positive output binding post 21, and the second joining conductor 3b and the negative output binding post 22 to be selectively turned on or off sequentially.

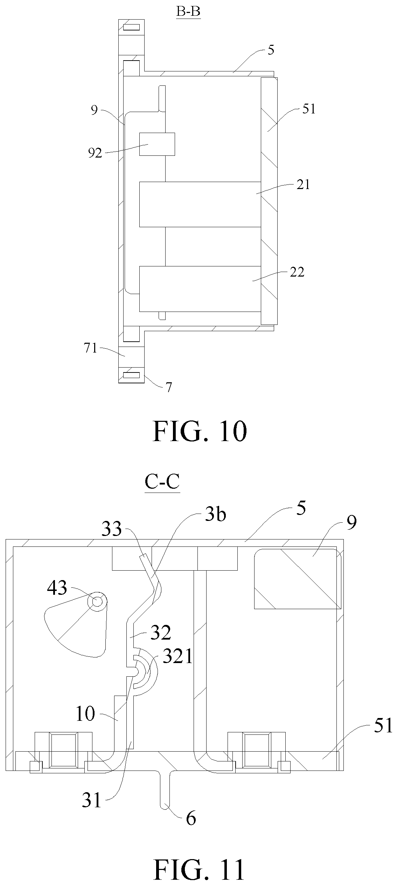

Specifically, as shown in FIG. 10, the fan-shaped driving portion 41 may be configured as a fan-shaped sheet structure, and the fan-shaped driving portion 41 may rotate around the first axis. The fan-shaped driving portion 41 is configured to drive the main joining conductor 3 to be turned on with a second connecting terminal 2 corresponding to the fan-shaped driving portion 41 when rotating. The fan-shaped driving portion 41 is also configured to drive the pre-charge joining conductor 91 to be turned on with the second connecting terminal 92.

It should be noted that the fan-shaped driving portion 41 may drive the main joining conductor 3 to be joined to the second connecting terminal 2 corresponding to the fan-shaped driving portion 41. The fan-shaped driving portion 41 may drive the pre-charge joining conductor 91 to be joined to the pre-charge resistor 9. When the fan-shaped driving portion 41 does not drive the main joining conductor 3 and the pre-charge joining conductor 91, the fan-shaped driving portion 41 may rely on an elastic force of the main joining conductor 3 and an elastic force of the pre-charge joining conductor 91 to reset, so that the main joining conductor 3 is separated from the second connecting terminal 2 corresponding to the main joining conductor 3, and the pre-charge joining conductor 91 is separated from the pre-charge resistor 9. However, the present disclosure is not limited thereto, and a reset driving structure may also be arranged in the contactor. By driving the main joining conductor 3 to be turned off with the second connecting terminal 2 corresponding to the main joining conductor 3, and driving the pre-charge joining conductor 91 to be turned off with the pre-charge resistor 9 through the reset driving structure, the reset driving structure may be configured as a torsion spring.

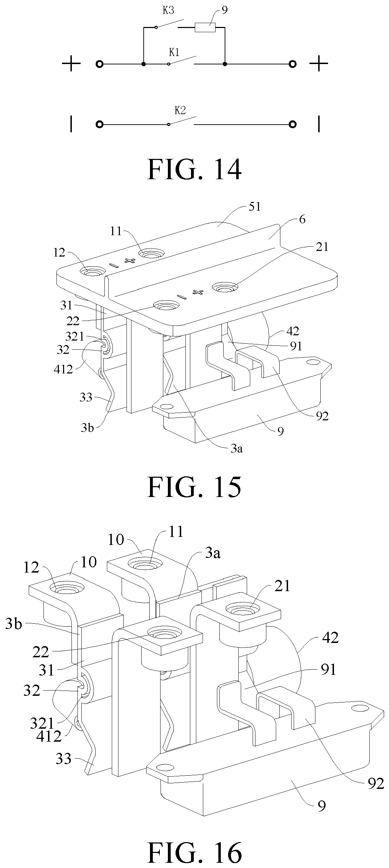

Preferably, as shown in FIG. 16, the main joining conductor 3 is connected to the first connecting terminal 1 through a metal conductor 10. The metal conductor 10 is arranged between the first connecting terminal 1 and the main joining conductor 3, and by arranging the metal conductor 10, may play a conductive role between the first connecting terminal 1 and the main joining conductor 3, and one end of the main joining conductor 3 may be attached and connected to the metal conductor 10, thereby ensuring conductivity between the first connecting terminal 1 and the main joining conductor 3. In addition, when rotating, the fan-shaped driving portion 41 may enable the main joining conductor 3 to be turned on with the second connecting terminal 2. In this way, through the rotation of the fan-shaped driving portion 41, the first connecting terminal 1 may be turned on with the second connecting terminal 2, thereby making it easy to control a working state of the contactor, and meeting different direct current charging requirements of a user.

Further, as shown in FIG. 13, the fan-shaped driving portion 41 includes a first fan-shaped portion 411, a second fan-shaped portion 412, and a third fan-shaped portion 413 that are spaced apart in an axial direction of a first axis. The main joining conductor 3 includes a first joining conductor 3a and a second joining conductor 3b, the first fan-shaped portion 411 is configured to push the first joining conductor 3a and release the push on the first joining conductor 3a, the second fan-shaped portion 412 is configured to push the second joining conductor 3b and release the push on the second joining conductor 3b, the third fan-shaped portion 413 is configured to push the pre-charge joining conductor 91 and release the push on the pre-charge joining conductor 91.

Therefore, the first fan-shaped portion 411 is configured to push the first joining conductor 3a, so that the first joining conductor 3a may control the positive input binding post 11 to be turned on with the positive output binding post 21. The second fan-shaped portion 412 is configured to push the second joining conductor 3b, so that the second joining conductor 3b may control the negative input binding post 12 to be turned on with the negative output binding post 22. The third fan-shaped portion 413 is configured to push the pre-charge joining conductor 91, so that the pre-charge joining conductor 91 is turned on with the pre-charge resistor 9. In other words, the first fan-shaped portion 411 and the second fan-shaped portion 412 are in a one-to-one correspondence with the first joining conductor 3a and the second joining conductor 3b. The third fan-shaped portion 413 corresponds to the pre-charge joining conductor 91, to facilitate independent control of the first joining conductor 3a, the second joining conductor 3b, and the pre-charge joining conductor 91 through the first fan-shaped portion 411, the second fan-shaped portion 412, and the third fan-shaped portion 413, thereby facilitating one of the groups of direct current circuits to be independently turned on.

It should be noted that when at least two groups of connecting terminals are integrated into the contactor, a quantity of joining conductors and a quantity of fan-shaped portions should be the same as a quantity of first connecting terminals 1, thereby implementing control of a plurality of groups of first connecting terminals 1 and second connecting terminals 2.

In some embodiments of the present disclosure, the first fan-shaped portion 411, the second fan-shaped portion 412, and the third fan-shaped portion 413 rotate synchronously around the first axis. In other words, the first fan-shaped portion 411, the second fan-shaped portion 412, and the third fan-shaped portion 413 simultaneously rotate. Further, the first fan-shaped portion 411, the second fan-shaped portion 412, and the third fan-shaped portion 413 each include a rotation front side and a rotation rear side. It should be noted that the rotation front side refers to in a rotation direction of the fan-shaped portion, the fan-shaped portion has a front side and a rear side. In the rotation direction of the fan-shaped portion, the front side of the fan-shaped portion is the rotation front side, and the rear side is the rotation rear side.

In a rotation process of the first fan-shaped portion 411, after the rotation front side of the first fan-shaped portion 411 contacts the first joining conductor 3a, and before the rotation rear side of the first fan-shaped portion 411 contacts the first joining conductor 3a, the first fan-shaped portion 411 pushes the first joining conductor 3a, so that the first joining conductor 3a is joined to the second connecting terminal 2 corresponding to the first joining conductor 3a. It should be noted that after the rotation rear side of the first fan-shaped portion 411 contacts the first joining conductor 3a and before the rotation front side of the first fan-shaped portion 411 contacts the first joining conductor 3a, the first fan-shaped portion 411 releases the push on the first joining conductor 3a.

In a rotation process of the second fan-shaped portion 412, after the rotation front side of the second fan-shaped portion 412 contacts the second joining conductor 3b, and before the rotation rear side of the second fan-shaped portion 412 contacts the second joining conductor 3b, the second fan-shaped portion 412 pushes the second joining conductor 3b, so that the second joining conductor 3b is joined to the second connecting terminal 2 corresponding to the second joining conductor 3b. It should be noted that after the rotation rear side of the second fan-shaped portion 412 contacts the second joining conductor 3b and before the rotation front side of the second fan-shaped portion 412 contacts the second joining conductor 3b, the second fan-shaped portion 412 releases the push on the second joining conductor 3b.

In a rotation process of the third fan-shaped portion 413, after the rotation front side of the third fan-shaped portion 413 contacts the pre-charge joining conductor 91, and before the rotation rear side of the third fan-shaped portion 413 contacts the pre-charge joining conductor 91, the third fan-shaped portion 413 pushes the pre-charge joining conductor 91, so that the pre-charge joining conductor 91 is joined to the pre-charge resistor 9. It should be noted that after the rotation rear side of the third fan-shaped portion 413 contacts the pre-charge joining conductor 91 and before the rotation front side of the third fan-shaped portion 413 contacts the pre-charge joining conductor 91, the third fan-shaped portion 413 releases the push on the pre-charge joining conductor 91.

In some embodiments of the present disclosure, the pre-charge joining conductor 91 is connected to the first joining conductor 3a, and the pre-charge resistor 9 is connected to a second connecting terminal 2 of a connecting terminal group corresponding to the first joining conductor 3a. In a direction of a first axis, there is an angle between projection of the rotation front side of the third fan-shaped portion 413 and projection of the rotation front side of the second fan-shaped portion 412, and there is an angle between projection of the rotation front side of the first fan-shaped portion 411 and projection of the rotation front side of the second fan-shaped portion 412. With such arrangement, the third fan-shaped portion 413 first pushes the pre-charge joining conductor 91 to be joined to the pre-charge resistor 9. Then the second fan-shaped portion 412 pushes the second joining conductor 3b to be joined to the negative output binding post 22. Then the third fan-shaped portion 413 pushes the first joining conductor 3a to be joined to the positive output binding post 21, so that when the contactors are turned on, there is a time difference. It should be noted that the pre-charge resistor 9 and the first joining conductor 3a are connected in parallel, and a joining sequence of the contactor is that the pre-charge joining conductor 91 is joined to the pre-charge resistor 9, then the second joining conductor 3b is joined to the negative output binding post 22, and then the first joining conductor 3a is joined to the positive output binding post 21.

Further, in the direction of the first axis, the angle between the projection of the rotation front side of the first fan-shaped portion 411 and the projection of the rotation front side of the second fan-shaped portion 412 isA, which meets a relationship: 60°≤A≤70°. Preferably, A is 65°. The angle between the projection of the rotation front side of the second fan-shaped portion 412 and the projection of the rotation front side of the third fan-shaped portion 413 is B, which meets a relationship: 20°≤B≤30°. Preferably, B is 25°. By setting A to 65° and B to 25°, when the first fan-shaped portion 411, the second fan-shaped portion 412, and the third fan-shaped portion 413 rotate synchronously, it is ensured that when the three contactors are turned on, there is a time difference, to meet the charging and discharging requirement of the vehicle.

In some embodiments of the present disclosure, in the direction of the first axis, there is an angle between projection of the rotation front side of the second fan-shaped portion 412 and projection of the rotation rear side of the third fan-shaped portion 413, there is an angle between projection of the rotation rear side of the third fan-shaped portion 413 and projection of the rotation rear side of the first fan-shaped portion 411, and there is an angle between projection of the rotation rear side of the first fan-shaped portion 411 and projection of the rotation rear side of the second fan-shaped portion 412. With such arrangement, the third fan-shaped portion 413 first releases the pre-charge joining conductor 91, then the second fan-shaped portion 412 releases the second joining conductor 3b, and then the third fan-shaped portion 413 releases the first joining conductor 3a.

In some embodiments of the present disclosure, as shown in FIG. 13, the driving assembly 4 may further include: a first power source 42 and a first transmission rod 43. An output terminal of the first power source 42 is connected to an end portion of the first transmission rod 43, and the fan-shaped driving portion 41 is arranged on the first transmission rod 43. It may also be understood that the first fan-shaped portion 411, the second fan-shaped portion 412, and the third fan-shaped portion 413 each are arranged on the first transmission rod 43 and are spaced apart in an axial direction of the first transmission rod 43, and the first axis coincides with an axis of the first transmission rod 43. The first power source 42 is electrically connected to an upper computer. The first power source 42 may be configured as an electric motor, so that a rotation speed and a direction of the electric motor may be controlled through the upper computer. It should be noted that the first fan-shaped portion 411, the second fan-shaped portion 412, and the third fan-shaped portion 413 are circularly distributed on the first transmission rod 43 at a specific angle.

A rotation direction of the first transmission rod 43 is clockwise, and the first transmission rod 43 may rotate at a uniform speed or at a non-uniform speed.

As shown in FIG. 13, an output terminal of the first power source 42 is connected to an end portion of the first transmission rod 43. An other end of the first transmission rod 43 extends in a direction away from the first power source 42, and the first axis coincides with an axis of the first transmission rod 43, to ensure that the first transmission rod 43 may rotate in the first axis under the action of the first power source 42, thereby facilitating the first power source 42 to provide a driving force for the first transmission rod 43, and increasing a rotation speed of a driving rod.

Further, as shown in FIG. 13, the second fan-shaped portion 412, the first fan-shaped portion 411, and the third fan-shaped portion 413 each are arranged on the first transmission rod 43 and are sequentially distributed in an axial direction of the first transmission rod 43, thereby facilitating the first fan-shaped portion 411 to control the first joining conductor 3a to be turned on with a positive output binding post 21, facilitating the second fan-shaped portion 412 to control the second joining conductor 3b to turned on with a negative output binding post 22, and facilitating the third fan-shaped portion 413 to control the pre-charge joining conductor 91 to be turned on with the pre-charge resistor 9.

In some embodiments of the present disclosure, as shown in FIG. 15 and FIG. 16, the main joining conductor 3 may include a fixed portion 31 and a joining portion 33. The fixed portion 31 is connected to the joining portion 33, the fixed portion 31 is fixedly connected to the corresponding first connecting terminal 1, and a driving assembly 4 is suitable for driving (pushing) the joining portion 33 to drive (push) the joining portion 33 to be joined to the corresponding second connecting terminal 2.

Further, the main joining conductor 3 may further include a weakening portion 32, and the fixed portion 31 is connected to the joining portion 33 through the weakening portion 32. It should be noted that the first joining conductor 3a and the second joining conductor 3b have the same structure, and both the first joining conductor 3a and the second joining conductor 3b include a fixed portion 31, a weakening portion 32, and a joining portion 33. The fixed portion 31, the weakening portion 32, and the joining portion 33 are connected sequentially, and the fixed portion 31, the weakening portion 32, and the joining portion 33 may be an integrally formed structure. The fixed portion 31 is connected to the joining portion 33 through the weakening portion 32, the fixed portion 31 is fixedly connected to the first connecting terminal 1, and the driving assembly 4 is suitable for pushing the joining portion 33 to push the joining portion 33 to be joined to the second connecting terminal 2.

Specifically, one end of the main joining conductor 3 close to the first connecting terminal 1 is the fixed portion 31, one end of the main joining conductor 3 away from the first connecting terminal 1 is the joining portion 33, and the fixed portion 31 is connected to the joining portion 33 through the weakening portion 32. In other words, the weakening portion 32 is arranged between the fixed portion 31 and the joining portion 33, and the fixed portion 31 is fixedly connected to a metal conductor 10 of the first connecting terminal 1, to ensure connection stability and conductivity between the first connecting terminal 1 and the fixed portion 31, and the fan-shaped driving portion 41 is suitable for pressing against the joining portion 33 to push the joining portion 33 to be joined to the second connecting terminal 2.

It may be understood that referring to FIG. 13 and FIG. 15, when needing to control the first connecting terminal 1 to be turned on with the second connecting terminal 2, the first power source 42 generates a driving force, the first transmission rod 43 rotates under the action of the driving force, and the first transmission rod 43 drives the fan-shaped driving portion 41 to rotate. When one end of the fan-shaped driving portion 41 away from the first transmission rod 43 contacts the joining portion 33, the one end of the fan-shaped driving portion 41 away from the first transmission rod 43 presses the joining portion 33 to move toward a direction of the second connecting terminal 2, thereby causing the joining portion 33 to be joined to the second connecting terminal 2, and causing the first connecting terminal 1 to be turned on with the second connecting terminal 2.

When needing to control the first connecting terminal 1 to be turned off with the second connecting terminal 2, referring to FIG. 18, the first power source 42 generates a driving force, the first transmission rod 43 rotates under the action of the driving force, and the first transmission rod 43 drives the fan-shaped driving portion 41 to rotate. When one end of the fan-shaped driving portion 41 away from the first transmission rod 43 does not contact the joining portion 33, the one end of the fan-shaped driving portion 41 away from the first transmission rod 43 does not press the joining portion 33. In this case, the joining portion 33 automatically returns to an initial position. In other words, the joining portion 33 is not joined to the second connecting terminal 2, so that the first connecting terminal 1 is turned off with the second connecting terminal 2.

For example, when needing to control the positive input binding post 11 to be turned on with the positive output binding post 21, the first power source 42 generates a driving force, the first transmission rod 43 rotates under the action of the driving force, and the first transmission rod 43 drives the first fan-shaped portion 411 to rotate. When one end of the first fan-shaped portion 411 away from the first transmission rod 43 contacts the joining portion 333 of the first joining conductor 3a, the one end of the first fan-shaped portion 411 away from the first transmission rod 43 presses the joining portion 33 of the first joining conductor 3a to move toward a direction of the positive output binding post 21, thereby causing the joining portion 33 to be joined to the positive output binding post 21, so that the first connecting terminal 1 is turned on with the second connecting terminal 2.

When needing to control the positive input binding post 11 to be turned off with the positive output binding post 21, the first power source 42 generates a driving force, the first transmission rod 43 rotates under the action of the driving force, and the first transmission rod 43 drives the first fan-shaped portion 411 to rotate. When one end of the first fan-shaped portion 411 away from the first transmission rod 43 does not contact the joining portion 33 of the first joining conductor 3a, the one end of the first fan-shaped portion 411 away from the first transmission rod 43 does not press the joining portion 33. In this case, the joining portion 33 of the first joining conductor 3a automatically returns to an initial position. In other words, the joining portion 33 is not joined to the second connecting terminal 2, so that the positive input binding post 11 is turned off with the positive output binding post 21.

A working process in which the negative input binding post 12 is turned on or off with the negative output binding post 22 and a working process in which the positive input binding post 11 is turned on or off with the positive output binding post 21 are the same and are simultaneously performed. This is not repeated herein. In addition, a working process in which the pre-charge joining conductor 91 is turned on or off with the second connecting terminal 92 and a working process in which the positive input binding post 11 is turned on or off with the positive output binding post 21 are the same and are simultaneously performed. This is not repeated herein. In addition, the three share one first power source 42 and one first transmission rod 43. Therefore, the two groups of first connecting terminals 1 are turned on with the second connecting terminal 2, and the pre-charge joining conductor 91 is turned on with the second connecting terminal 92 through the same first power source 42, which is beneficial to reducing a quantity of contact points of the contactor, reducing risk points, and enhancing security and practicality of the contactor.

In some embodiments of the present disclosure, a structure of the pre-charge joining conductor 91 is the same as a structure of the main joining conductor 3 does. Further, the structure of the pre-charge joining conductor 91 is the same as the structure of the main joining conductor 3. In other words, the pre-charge joining conductor 91 includes a fixed portion 31, a weakening portion 32, and a joining portion 33. When needing to control the pre-charge joining conductor 91 to be turned on with the second connecting terminal 92, the first power source 42 generates a driving force, the first transmission rod 43 rotates under the action of the driving force, and the first transmission rod 43 drives the third fan-shaped portion 413 to rotate. When one end of the third fan-shaped portion 413 away from the first transmission rod 43 contacts the joining portion 33 of the pre-charge joining conductor 91, the one end of the third fan-shaped portion 413 away from the first transmission rod 43 presses the joining portion 33 of the pre-charge joining conductor 91 to move toward a direction of the second connecting terminal 92, thereby causing the joining portion 33 of the pre-charge joining conductor 91 to be joined to the second connecting terminal 92, so that the pre-charge joining conductor 91 is turned on with the second connecting terminal 92.

When needing to control the pre-charge joining conductor 91 to be turned off with the second connecting terminal 92, referring to FIG. 18, the first power source 42 generates a driving force, the first transmission rod 43 rotates under the action of the driving force, and the first transmission rod 43 drives the third fan-shaped portion 413 to rotate. When one end of the third fan-shaped portion 413 away from the first transmission rod 43 does not contact the joining portion 33 of the pre-charge joining conductor 91, the one end of the third fan-shaped portion 413 away from the first transmission rod 43 does not press the joining portion 33 of the pre-charge joining conductor 91. In this case, the joining portion 33 of the pre-charge joining conductor 91 automatically returns to an initial position. In other words, the joining portion 33 of the pre-charge joining conductor 91 is not joined to the second connecting terminal 92, so that the pre-charge joining conductor 91 is turned off with the second connecting terminal 92.

In some embodiments of the present disclosure, as shown in FIG. 16, the weakening portion 32 is configured as an arc-shaped section, one end of the arc-shaped section is connected to the fixed portion 31 and an other end of the arc-shaped section is connected to the joining portion 33, and the weakening portion 32 is recessed toward a direction close to the second connecting terminal 2 to form a weakening cavity 321 in the weakening portion 32. The weakening cavity 321 is provided, so that when the fan-shaped driving portion 41 presses a joining member to enable the joining member to be connected to the second connecting terminal 2, a pressing force of the fan-shaped driving portion 41 on the joining member is reduced, thereby reducing consumption of the first power source 42, and facilitating to reduce energy consumption and reduce production costs. In addition, it is convenient for the joining member to quickly return to an initial position when the joining member is not connected to the second connecting terminal 2, thereby increasing a speed of connection or disconnection between the first connecting terminal 1 and the second connecting terminal 2, and improving working efficiency of the contactor.

In some embodiments of the present disclosure, as shown in FIG. 7, the contactor may further include: a housing 5 (namely, a first inner shell 204). Mounting space is formed inside the housing 5. A driving assembly 4, a main joining conductor 3, a pre-charge resistor 9, and a pre-charge joining conductor 91 each are arranged in the housing 5. Both the first connecting terminal 1 and the second connecting terminal 2 are arranged on the housing 5, so that the driving assembly 4, the joining conductor 3, the pre-charge resistor 9, and the pre-charge joining conductor 91 do not occupy external mounting space, thereby improving space utilization in the contactor, and facilitating a miniaturization design of the contactor. It should be noted that the housing 5 is made of an insulating material. In other words, the housing 5 may prevent a leakage problem caused by the contactor, thereby enhancing the security of the contactor.

Further, as shown in FIG. 7, the housing 5 includes an upper cover 51. Both the first connecting terminal 1 and the second connecting terminal 2 are arranged on a peripheral wall of the housing 5. Preferably, both the first connecting terminal 1 and the second connecting terminal 2 are arranged on the upper cover 51 of the housing 5 and are spaced apart, which facilitates separate processing of the first connecting terminal 1 and the second connecting terminal 2, and reduces processing difficulty.

In addition, as shown in FIG. 7, an insulating separating plate 6 is arranged between the first connecting terminal 1 and the second connecting terminal 2 on an outer peripheral wall of the housing 5. Preferably, the insulating separating plate 6 is arranged on the upper cover 51 of the housing 5. The insulating separating plate 6 extends in a width direction of the insulating separating plate 6 toward a direction away from the upper cover 51, and the insulating separating plate 6 and the upper cover 51 may be an integrally formed structure, making it easy for the insulating separating plate 6 and the upper cover 51 to be simultaneously processed and formed, reducing production efficiency, and facilitating separation between the first connecting terminal 1 and the second connecting terminal 2 through the insulating separating plate 6. It may be understood that the insulating separating plate 6 is made of the insulating material, which may avoid a problem that when an electronic component is connected to the first connecting terminal 1 and the second connecting terminal 2, electric shock adhesion occurs between the first connecting terminal 1 and the second connecting terminal 2, thereby enhancing security of electrical connection between the first connecting terminal 1 and the second connecting terminal 2. Further, security and practicality of the contactor are enhanced.

It should be noted that as shown in FIG. 7, a low-voltage signal line 8 is further arranged on a side wall of the housing 5. The low-voltage signal line 8 runs through the housing 5, one end of the low-voltage signal line 8 extends into the housing 5 to be connected to the driving assembly 4 in the contactor, and an other end of the low-voltage signal line 8 extends outside the housing 5 to be connected to the control module. Therefore, the control module may be connected to the driving assembly 4 through the low-voltage signal line 8. For example, the low-voltage signal line 8 is electrically connected to the first power source 42, thereby making it easy to control the first power source 42 through the control module, implementing control on the driving assembly 4, and adjusting a working state of the contactor, to meet different charging requirements for the vehicle of the user, and improve the user experience. However, the present disclosure is not limited thereto. A connector may be arranged on the side wall of the housing 5, and the connector replaces the low-voltage signal line 8 in the foregoing embodiment.

In some embodiments of the present disclosure, as shown in FIG. 7, a fixed support 7 may be arranged on the housing 5. The fixed support 7 has a mounting hole portion 71, and the housing 5 mounts the contactor on another component through the mounting hole portion 71. It should be noted that the housing 5 has a polygonal cross-section. For example, a cross-section of the housing 5 may be in a shape of a quadrangle, or the cross-section of the housing 5 may be in a shape of a hexagon. Certainly, in some examples, the cross-section of the housing 5 may be further in a shape of a circle, so that a shape of the housing 5 may be flexibly designed according to an actual structure of the contactor.

In some embodiments of the present disclosure, the contactor may further include: a temperature sensor and a controller (namely, an upper computer). The temperature sensor is electrically connected to the controller, and the temperature sensor is configured to detect a circuit signal of the first connecting terminal 1, the second connecting terminal 2, the main joining conductor 3, and/or the pre-charge joining conductor 91. The controller is configured to control the main joining conductor 3 to be joined to the second connecting terminal 2 and/or the pre-charge joining conductor 91 to be joined to the second connecting terminal 2 according to the circuit signal.

The controller may be an original upper computer of the vehicle, and a temperature sensor and the upper computer perform communication control by using a controller area network (CAN), thereby implementing control on the temperature sensor by using the original upper computer, simplifying a control structure of the temperature sensor, and reducing production costs.

Further, the temperature sensor is configured to detect the circuit signal of the first connecting terminal 1, the second connecting terminal 2, the main joining conductor 3, and/or the pre-charge joining conductor 91. The controller is configured to control the main joining conductor 3 to be joined to or separated from the second connecting terminal 2 according to the circuit signal. Preferably, the circuit signal includes a temperature signal or an on/off signal of the main joining conductor 3. This is not limited herein.

In some examples, the temperature sensor is welded on the main joining conductor 3, and the temperature sensor is electrically connected to the upper computer. As the main joining conductor 3 is turned on with the first connecting terminal 1 and the second connecting terminal 2, and/or the pre-charge joining conductor 91 is turned on with the pre-charge resistor 9, a current-carrying capacity and a heat generation amount of a high-voltage circuit change, and temperature changes correspondingly occur. The sensor may obtain change information (a temperature change, a current-carrying capacity change, and the like) in a working process of the high-voltage circuit. The temperature sensor is configured to detect temperature changes of the main joining conductor 3 and/or the pre-charge joining conductor 91, and transmit the temperature changes to a controller in the form of a circuit signal. The controller determines whether a cut-off threshold of the high-voltage circuit is reached according to the circuit signal, and when the high-voltage circuit needs to be turned off, controls the driving assembly 4 to release electrical connection between the main joining conductor 3 and the second connecting terminal 2. A fuse does not need to be arranged, to reduce a high-voltage loss and a cost, and after the contactor is controlled to be turned off, if electrical equipment using the contactor of the present disclosure needs to continue to work, it may also be ensured that an upper high voltage may be supplied to the electrical equipment, which may improve security.

It should be noted that after the fuse blows, the high-voltage circuit is completely turned off. In the present disclosure, by arranging the controller and the sensor, even if the high-voltage circuit needs to be turned off based on the information obtained from the sensor, under an extreme condition, the upper high-voltage power may still be supplied to improve security. For example, the contactor of the present disclosure is used in an electric vehicle, when the circuit information indicates that the contactor needs to be turned off but the vehicle is in a dangerous condition and needs to maintain a working condition, the upper high-voltage power state may be maintained. In addition, after driving to a secure position or eliminating the dangerous condition, the main joining conductor 3 is electrically disconnected from the second connecting terminal 2.

In this way, the contactor may be prevented from overheating due to an excessive temperature of the main joining conductor 3, which is conducive to enhancing security of the contactor, and may maintain the upper high-voltage power state when the vehicle is in a dangerous condition and needs to maintain the working condition, thereby enhancing practicality of the contactor.

Certainly, the temperature sensor may also be arranged at other positions of the high-voltage circuit through other structural forms for detecting the circuit signal of the high-voltage circuit, which is not limited herein.

It should be noted that the positive input binding post 11 and the positive output binding post 21 form a main positive contactor a (K1 in FIG. 14). The negative input binding post 12 and the negative output binding post 22 form a main negative contactor b (K2 in FIG. 14). The pre-charge joining conductor 91 and the pre-charge resistor 9 form a pre-charge contactor c (K3 in FIG. 14). The main positive contactor a, the main negative contactor b, and the pre-charge contactor c are turned on by the actions of the first fan-shaped portion 411, the second fan-shaped portion 412, and the third fan-shaped portion 413 respectively. As shown in FIG. 14, it may be learnt from the high-voltage principle diagram that the contactor includes three direct current contactors and one pre-charge resistor 9 with a discharge function. The pre-charge contactor c and the pre-charge resistor 9 of the pre-charge circuit are connected in series. There is no exposed interface on the housing 5. Two ends of the series circuit are on two sides of the main positive contactor a (namely, K1 in FIG. 14). The contactor does not distinguish between the first connecting terminal 1 and the second connecting terminal 2. It only needs to ensure that a high-voltage positive pole and a high-voltage negative pole of the same group of circuits are connected to a corresponding position of the positive pole and a corresponding position of the negative pole that are on the same side of an integrated contactor baffle.

Specifically, a working principle of the contactor of the present disclosure is described in detail below.

The first power source 42 (the electric motor) receives a uniform-speed rotation signal from the upper computer in a static state, and the electric motor switches to a uniform-speed rotation state.

Driven by the first power source 42, a rotation action is transmitted in an axis through a rotating rod, the third fan-shaped portion 413 first pushes the joining portion 33 of the pre-charge joining conductor 91 corresponding to the joining portion 33. The joining portion 33 is turned on with the second connecting terminal 92 on the pre-charge resistor 9 through deformation. In this case, the pre-charge circuit is in an on state. In the entire process, the electric motor is always in a rotating state, and continues to rotate (the action 2 in FIG. 19).

Then the pre-charge contactor c and the main negative contactor b are in an on state, and the main positive contactor a is in an on state (the action 3 in FIG. 22). On the vehicle, correspondingly, the vehicle is in a pre-charging state in which the upper high-voltage power is being supplied (before the upper high-voltage power is supplied to the vehicle, capacitors in some vehicle-mounted high-voltage components need to be pre-charged, to prevent the capacitors in these high-voltage components from being short-circuited when being instantly connected to a high voltage and a great current. These vehicle-mounted high-voltage components include: a motor control capacitor, a generator electronic control capacitor, a compressor controller capacitor, and the like). In this case, the second fan-shaped portion 412 and the third fan-shaped portion 413 push the joining portion 33 corresponding to the second fan-shaped portion 412 and the joining portion 33 corresponding to the third fan-shaped portion 413, and the main negative circuit and the pre-charge circuit are in an on state. Generally, action process duration of the state is X milliseconds (for example, X is 200 milliseconds). In the entire process, the electric motor is always in a rotating state.

After X milliseconds, as the electric motor continues to rotate, the first fan-shaped portion 411 continues to rotate, and pushes the joining portion 33 corresponding to the first fan-shaped portion 411, so that the main positive circuit is in an on state (the action 4 in FIG. 25). Generally, action process duration of the state is Y milliseconds (for example, Y is 500 milliseconds). In the entire process, the electric motor is always in a rotating state, and continues to rotate. (Note: selection of an X value and a Y value is determined according to vehicle parameters, such as a capacitance capacity of each of these vehicle-mounted high-voltage components, a set percentage of a pre-charge capacitance capacity, duration required for insulation detection on the vehicle, program determining duration, and the like).

After the Y milliseconds, as the electric motor continues to rotate, the third fan-shaped portion 413 leaves the joining portion 33 of the pre-charge joining conductor 91 corresponding to the third fan-shaped portion 413. The third fan-shaped portion 413 no longer pushes the joining portion 33 corresponding to the third fan-shaped portion 413. The joining portion 33 returns to a state in which the circuit is turned on. In other words, the pre-charge circuit is in an on state (the action 5 in FIG. 27). In this case, the vehicle is in a normal high-voltage power-maintaining state, and the contactor remains in the state in a whole time period in which the vehicle requires the high-voltage power.

When the vehicle requires the lower high-voltage power, the electric motor receives a uniform-speed rotation signal from the upper computer, and the electric motor switches to the rotating state (the action 6 in FIG. 28). As the electric motor rotates, the second fan-shaped portion 412 and the first fan-shaped portion 411 successively leave a joining portion 33 corresponding to the second fan-shaped portion 412 and a joining portion 33 corresponding to the first fan-shaped portion 411. The second fan-shaped portion 412 and the first fan-shaped portion 411 no longer push a joining portion 33 corresponding to the second fan-shaped portion 412 and a joining portion 33 corresponding to the first fan-shaped portion 411, and the joining portion 33 returns to a state in which the circuit is turned on. In other words, the main negative circuit and main positive circuit are in the on state (the action 1 in FIG. 18). In this case, the vehicle is in a lower high-voltage power state. The contactor remains in the state in a whole time period in which the vehicle does not require the high-voltage power.

As shown in FIG. 14 and FIG. 6, the charging and distribution system 1000 for a vehicle according to an embodiment of the present disclosure includes the contractor in the foregoing embodiment.

There are two connecting terminal groups. The first connecting terminal 1 of one of the two connecting terminal groups is the positive input binding post 11 and the second connecting terminal 2 is the positive output binding post 21. The first connecting terminal 1 of the other of the two connecting terminal groups is the negative input binding post 12 and the second connecting terminal 2 is the negative output binding post 22. The main joining conductor 3 includes a first joining conductor 3a and a second joining conductor 3b. The first joining conductor 3a is connected to the positive input binding post 11, and the first joining conductor 3a is configured to be selectively attached to the positive output binding post 21. The second joining conductor 3b is connected to the negative input binding post 12, and the second joining conductor 3b is configured to be selectively attached to the negative output binding post 22.

Further, one of the positive input binding post 11 and the positive output binding post 21 is connected to a positive terminal of a battery terminal interface of the vehicle, and the other of the positive input binding post 11 and the positive output binding post 21 is connected to a positive terminal of an electronic control terminal interface of the vehicle. One of the negative input binding post 12 and the negative output binding post 22 is connected to a negative terminal of the battery terminal interface, and the other of the negative input binding post 12 and the negative output binding post 22 is connected to a negative terminal of the electronic control terminal interface.

It should be noted that the positive input binding post 11 and the positive output binding post 21 form a main positive contactor 100a (K1 in FIG. 6). The negative input binding post 12 and the negative output binding post 22 form a main negative contactor 100b (K2 in FIG. 6). The pre-charge joining conductor 91 and the pre-charge resistor 9 form a pre-charge contactor 100c (K3 in FIG. 6).

Specifically, the charging and distribution system 1000 includes: a battery terminal interface, an electronic control terminal interface, and a direct current charging interface. A charging circuit is formed between the direct current charging interface and the battery terminal interface, and a power distribution circuit is formed between the electronic control terminal interface and the battery terminal interface, to provide electric energy for the vehicle. A main positive contactor 100a is arranged on both a positive terminal of the direct current charging interface and a positive terminal of the battery terminal interface, and a main negative contactor 100b is arranged on both a negative terminal of the direct current charging interface and a negative terminal of the battery terminal interface. A pre-charge circuit is further arranged on the positive terminal of the battery terminal interface, and a pre-charge contactor 100c is arranged on the pre-charge circuit in series with the pre-charge resistor 9 and in parallel with the main positive contactor 100a.

It should be noted that the charging and discharging process of the vehicle has been stated in the foregoing content of discussion, and is not be repeated herein.

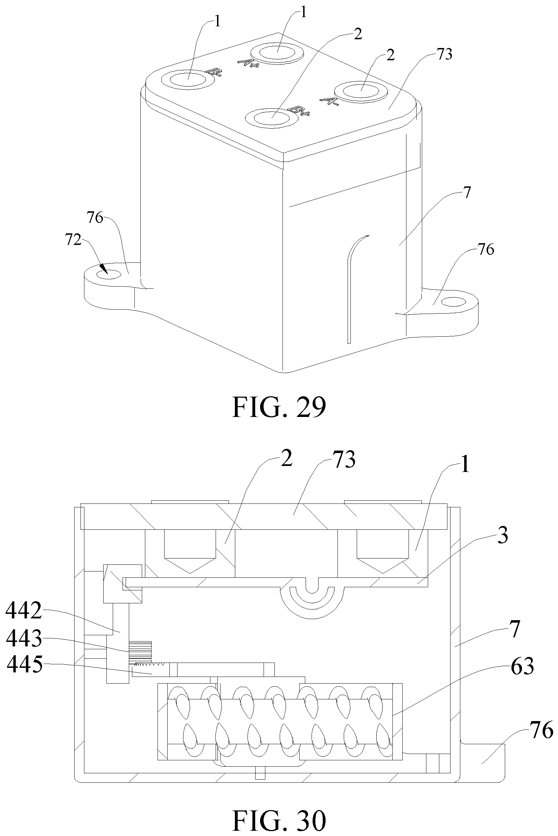

According to an embodiment of the present disclosure, as shown in FIG. 29 to FIG. 39, a first transmission assembly 444, a first driving coil 53, and a second driving coil 63 are arranged in a second inner shell 205. Both the fourth contactor K4 and the fifth contactor K5 include: a main joining conductor 3. The main joining conductor 3 is connected to the corresponding input terminal, and the main joining conductor 3 of the fourth contactor K4 is connected to the input terminal of the fourth contactor K4. The main joining conductor 3 of the fifth contactor K5 is connected to the input terminal of the fifth contactor K5.

Further, the first transmission assembly 444 includes a first micro switch 445 and a first driven member 442, the first micro switch 445 is in power connection with the first driven member 442, the first driven member 442 is connected to the main joining conductor 3, the first driving coil 53 and the second driving coil 63 are configured to drive the first micro switch 445 to move toward a first direction by generating a magnetic force after being energized to drive the main joining conductor 3 to be joined to the corresponding output terminal, or the first driving coil 53 and the second driving coil 63 drive the first micro switch 445 to move toward a second direction to drive the main joining conductor 3 to be turned off with the output terminal, so that a working effect of the main joining conductor 3 being joined to or turned off with the corresponding output terminal is implemented. In addition, when the user controls the first micro switch 445 to move, the first micro switch 445 may drive the first driven member 442 to move, thereby driving the main joining conductor 3 to move to implement switching of an on-off state of the contactor.

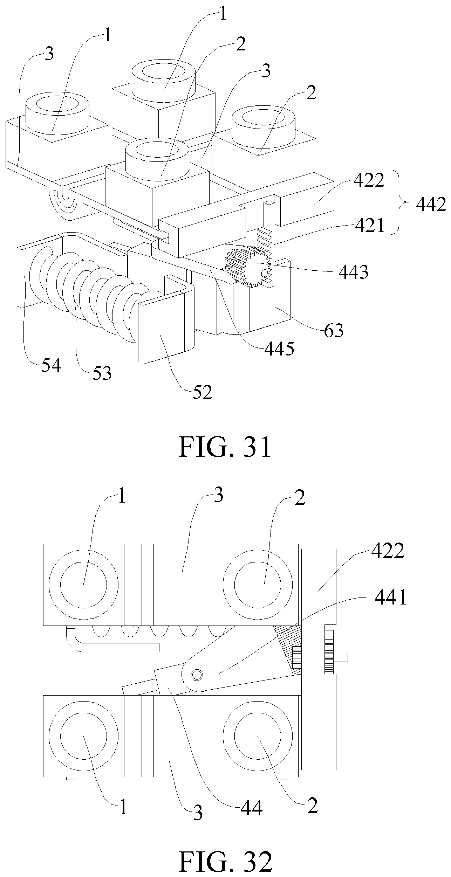

Further, the first driving coil 53 and the second driving coil 63 are spaced apart, and the first micro switch 445 is rotatably mounted between the first driving coil 53 and the second driving coil 63 around a second axis. As shown in FIG. 31, the first driving coil 53 and the second driving coil 63 are configured to drive the first micro switch 445 to rotate around the second axis toward the first direction, or the first driving coil 53 and the second driving coil 63 are configured to drive the first micro switch 445 to rotate around the second axis toward the second direction. It should be noted that a first direction may be a clockwise direction, and a second direction may be a counterclockwise direction, or the first direction may be a counterclockwise direction, and the second direction may be a clockwise direction, so that a specific structure of the contactor may be flexibly arranged according to an actual requirement, thereby improving rationality of the layout.

In a specific implementation process, a low-voltage current may be passed into the first driving coil 53 and the second driving coil 63, to generate a forward magnetic field between the first driving coil 53 and the second driving coil 63, so that the first micro switch 445 is forced to rotate around a first axis toward the first direction, the main joining conductor 3 is joined to the corresponding output terminal, and the contactor may be turned on with the high-voltage circuit; or a reverse low-voltage current is passed into the first driving coil 53 and the second driving coil 63, to generate an opposite magnetic field between the first driving coil 53 and the second driving coil 63, so that the first micro switch 445 is forced to rotate around the first axis toward the second direction, and the main joining conductor 3 is electrically disconnected from the corresponding output terminal.

Further, the first transmission assembly 4 further includes: a first transmission member 443, where the first transmission member 443 includes a first gear portion 431 rotating around a third axis, the first micro switch 445 includes a first arc-shaped tooth portion 441 rotating around the second axis, and the first gear portion 431 and the first arc-shaped tooth portion 441 are in meshing transmission through a tooth structure, to implement transmission.

Further, the first transmission member 443 further includes a second gear portion 432 rotating around the third axis, the first driven member 442 includes a first rack portion 421, and the second gear portion 432 and the first rack portion 421 are in meshing transmission through the tooth structure.

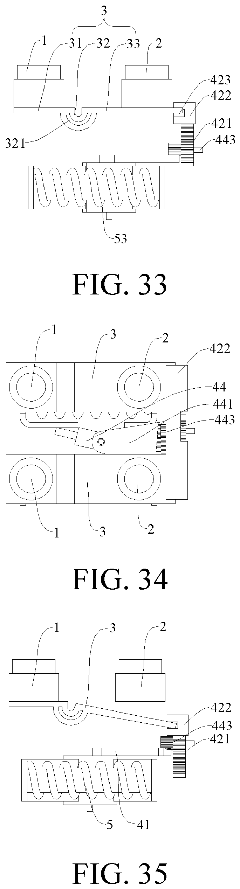

In other words, as shown in FIG. 33, when the first driving coil 53 and the second driving coil 63 drive the first arc-shaped tooth portion 441 to move around the first axis toward the first direction, the first gear portion 431 rotates around the second axis to drive the second gear portion 432 to rotate in the same direction, and the second gear portion 432 drives the first rack portion 421 to move through the tooth structure, to drive the main joining conductor 3 to move, so that the first connecting terminal 1 (input terminal) is connected to the second connecting terminal 2 (output terminal); and as shown in FIG. 35, when the first driving coil 53 and the second driving coil 63 drive the first arc-shaped tooth portion 441 to move around the first axis toward the second direction, the first gear portion 431 rotates around the second axis to drive the second gear portion 432 to rotate in the same direction, and the second gear portion 432 drives the first rack portion 421 to move in a reverse direction through the tooth structure, to drive the main joining conductor 3 to move in a reverse direction, so that the first connecting terminal 1 is disconnected from the second connecting terminal 2.

The contactor according to an embodiment of the present disclosure is described below with reference to FIG. 6 and FIG. 29 to FIG. 39.

As shown in FIG. 31, the contactor of the embodiment of the present disclosure includes: a connecting terminal group, a main joining conductor 3, a first transmission assembly 444, a first driving coil 53, and a second driving coil 63.

As shown in FIG. 29, a connecting terminal group is arranged on one end of the contactor. The connecting terminal group includes a first connecting terminal 1 and a second connecting terminal 2 that are spaced apart. As shown in FIG. 31, during specific design, both the first connecting terminal 1 and the second connecting terminal 2 may be configured as binding posts, and a high-voltage wire may be connected to the binding posts to implement electrical connection with the contactor.

There are at least two connecting terminal groups, and the at least two connecting terminal groups are arranged side by side. The main joining conductor 3 is connected to the first connecting terminal 1, so that the main joining conductor 3 is selectively attached to the second connecting terminal 2. Therefore, by simultaneously adjusting a plurality of main joining conductors 3 through the contactor, connection and disconnection between a plurality of groups of first connecting terminals 1 and second connecting terminals 2 may be synchronously implemented, thereby ensuring convenience of switching of an on-off state of the contactor.

It should be noted that the first connecting terminal 1 may be set as the input terminal, and the second connecting terminal 2 may be set as the output terminal, so that high-voltage electricity may be passed into the contactor through the first connecting terminal 1, and flow out of the contactor through the second connecting terminal 2, or the first connecting terminal 1 may be set as the output terminal, and the second connecting terminal 2 may be set as the input terminal, so that high-voltage electricity may be passed into the contactor through the second connecting terminal 2, and flow out of the contactor through the first connecting terminal 1.

In other words, the connecting terminal groups in the present disclosure may be set into two groups, three groups, or more groups. For example, during specific design, the connecting terminal groups are set into two groups, and the first connecting terminal 1 may include a positive input binding post and a negative input binding post, and the second connecting terminal 2 may include a positive output binding post and a negative output binding post. The positive input binding post may be electrically connected to the positive output binding post through the main joining conductor 3, and the negative input binding post may also be electrically connected to the negative output binding post through the main joining conductor 3. Therefore, the contactor in present disclosure may be constructed as an on-off control structure integrating a positive pole and a negative pole, with a higher degree of integration and simpler control and use.

A first transmission assembly 444 is arranged on the contactor. The first transmission assembly 444 includes a first micro switch 445 and a first driven member 442. The first micro switch 445 is in power connection with the first driven member 442, and the first driven member 442 is connected to the main joining conductor 3. Therefore, when the user controls movement of the first micro switch 445, the first micro switch 445 may drive the first driven member 442 to move, thereby driving the main joining conductor 3 to move to implement switching of an on-off state of the contactor.

As shown in FIG. 31, the driving coil has a columnar body, and a wire is wound around an outer peripheral wall of the columnar body in a circumferential direction, and the wire entirely extends in the axial direction. When a low-voltage current is passed into the wire, the driving coil may generate a magnetic field, and the magnetic field generated by the driving coil may act on the first micro switch 445. The first micro switch 445 is configured to have a magnetic part, so that the driving coil may drive the first micro switch 445 to move.

The driving coil includes a first driving coil 53 and a second driving coil 63. A low-voltage current may be passed into both the first driving coil 53 and the second driving coil 63, so that the first driving coil 53 and the second driving coil 63 may respectively construct magnetic fields. The first driving coil 53 and the second driving coil 63 are configured to drive the first micro switch 445 to move toward the first direction, to drive the main joining conductor 3 to be joined to the second connecting terminal 2, so that the first connecting terminal 1 is electrically connected to the second connecting terminal 2, and the contactor may be turned on with the circuit; and the first driving coil 53 and the second driving coil 63 may also be configured to drive the first micro switch 445 to move toward the second direction, to drive the main joining conductor 3 to be turned off with the second connecting terminal 2, so that the first connecting terminal 1 is electrically disconnected from the second connecting terminal 2, and the contactor may be turned off with the circuit.

It may be understood that by setting the first driving coil 53 and the second driving coil 63, the first driving coil 53 and the second driving coil 63 simultaneously drive the first micro switch 445. On the premise that the first micro switch 445 may be pushed, a volume of a single driving coil is reduced, to facilitate the overall layout of the contactor, and make it easy for the first driving coil 53 and the second driving coil 63 to dissipate heat, thereby improving security of the contactor.

The contactor in the embodiment of the present disclosure may drive the first micro switch 445 to move through the first driving coil 53 and the second driving coil 63, to drive the first driven member 442 to drive the main joining conductor 3 to move, so that a plurality of groups of first connecting terminals 1 and second connecting terminals 2 are synchronously connected or disconnected, which is conducive to heat dissipation of the contactor, thereby improving the reliability and security of the contactor.

In some embodiments, the first driving coil 53 and the second driving coil 63 are spaced apart, and the first micro switch 445 is rotatably mounted between the first driving coil 53 and the second driving coil 63 around a first axis. It should be noted that as shown in FIG. 31, the first driving coil 53 and the second driving coil 63 are arranged in parallel and are spaced apart. A magnetic portion is arranged on an end portion of the first driving coil 53 and a magnetic portion is arranged on an end portion of the second driving coil 63, and the magnetic portions are made of magnetic conductive materials. When the first driving coil 53 and the second driving coil 63 are energized, the first driving coil 53 and the second driving coil 63 generate a magnetic field, and construct electromagnetic space between the first driving coil 53 and the second driving coil 63. The first micro switch 445 is arranged in the electromagnetic space, so that the first driving coil 53 and the second driving coil 63 may jointly drive the first micro switch 445 to move.

The first driving coil 53 and the second driving coil 63 are configured to drive the first micro switch 445 to rotate around the first axis toward the first direction, or configured to drive the first micro switch 445 to rotate around the first axis toward the second direction. It should be noted that a first direction may be a clockwise direction, and a second direction may be a counterclockwise direction, or the first direction may be a counterclockwise direction, and the second direction may be a clockwise direction, so that a specific structure of the contactor may be flexibly arranged according to an actual requirement, thereby improving rationality of the layout.

In a specific implementation process, a low-voltage current may be passed into the first driving coil 53 and the second driving coil 63, to generate a forward magnetic field between the first driving coil 53 and the second driving coil 63, so that the first micro switch 445 is forced to rotate around a first axis toward the first direction, the first connecting terminal 1 is electrically connected to the second connecting terminal 2, and the contactor may be turned on with the high-voltage circuit; or a reverse low-voltage current is passed into the first driving coil 53 and the second driving coil 63, to generate an opposite magnetic field between the first driving coil 53 and the second driving coil 63, so that the first micro switch 445 is forced to rotate around the first axis toward the second direction, and the first connecting terminal 1 is electrically disconnected from the second connecting terminal 2.

Through the foregoing arrangement, the first driving coil 53 and the second driving coil 63 may jointly work on the magnetic driving portion 44, so that the magnetic driving portion 44 has sufficient rotational torque, to drive the main joining conductor 3 to move, thereby implementing stable switching of an on-off state of a high-voltage circuit.

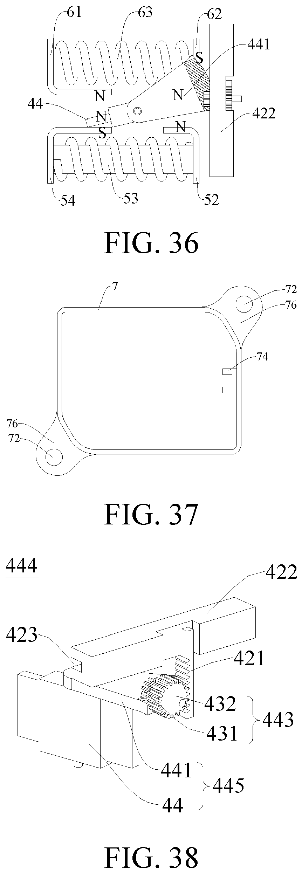

In some embodiments, as shown in FIG. 38, the first driving coil 53 includes a first magnetic conductive portion 54 and a second magnetic conductive portion 52, and the second driving coil 63 includes a third magnetic conductive portion 61 and a fourth magnetic conductive portion 62. When the first driving coil 53 and the second driving coil 63 are energized, the first magnetic conductive portion 54 and the second magnetic conductive portion 61 have opposite polarities, the third magnetic conductive portion 61 and the fourth magnetic conductive portion 62 have opposite polarities, the first magnetic conductive portion 54 and the third magnetic conductive portion 61 have opposite polarities, and the second magnetic conductive portion 52 and the fourth magnetic conductive portion 62 have opposite polarities.

In other words, as shown in FIG. 38, main body parts of the first magnetic conductive portion 54, the second magnetic conductive portion 52, the third magnetic conductive portion 61, and the fourth magnetic conductive portion 62 are configured as plate-shaped structures. The main body part of the first magnetic conductive portion 54 and the main body part of the second magnetic conductive portion 52 are attached to two ends of the first driving coil 53, and are attached to the end portion of the first driving coil 53. The main body part of the third magnetic conductive portion 61 and the main body part of the fourth magnetic conductive portion 62 are arranged at two ends of the second driving coil 63, and are attached to the end portion of the second driving coil 63. Therefore, when a low-voltage current is passed into the first driving coil 53 and the second driving coil 63, the first magnetic conductive portion 54 and the second magnetic conductive portion 52 generate opposite polarities. In addition, when a low-voltage current is passed into the second driving coil 63, the third magnetic conductive portion 61 and the fourth magnetic conductive portion 62 also generate opposite polarities.

As shown in FIG. 38, the main body part of the magnetic conductive portion is connected to a folding plate, and the folding plate extends into a gap between the first driving coil 53 and the second driving coil 63. A folding plate of the first magnetic conductive portion 54 is arranged directly facing a folding plate of the third magnetic conductive portion 61, and a folding plate of the second magnetic conducting portion 52 is arranged directly facing a folding plate of the fourth magnetic conducting portion 62. By passing a low-voltage current into the first driving coil 53 and the second driving coil 63, the first magnetic conductive portion 54 and the third magnetic conductive portion 61 have opposite polarities, and the second magnetic conductive portion 52 and the fourth magnetic conductive portion 62 have opposite polarities.

The first micro switch 445 includes a magnetic driving portion 44, where a first end of the magnetic driving portion 44 is located between the first magnetic conductive portion 54 and the third magnetic conductive portion 61, and a second end of the magnetic driving portion 44 is located between the second magnetic conductive portion 52 and the fourth magnetic conductive portion 62. The first end and the second end of the magnetic driving portion 44 have the same polarity.

Specifically, two ends of the magnetic driving portion 44 may be set to N poles. When a low-voltage current is passed into the first driving coil 53 and the second driving coil 63, the second magnetic conductive portion 52 and the third magnetic conductive portion 61 may have N poles, and the first magnetic conductive portion 54 and the fourth magnetic conductive portion 62 may have S poles. Therefore, as shown in FIG. 32, the first magnetic conductive portion 54 and the first end of the magnetic driving portion 44 attract each other, and the third magnetic conductive portion 61 and the first end of the magnetic driving portion 44 repel each other. The second magnetic conductive portion 52 and the second end of the magnetic driving portion 44 repel each other, and the fourth magnetic conductive portion 62 and the second end of the magnetic driving portion 44 attract each other, so that the magnetic driving portion 44 may rotate around the first axis in the first direction (namely, the counterclockwise direction in FIG. 31). The first end of the magnetic driving portion 44 is attached to the first magnetic conductive portion 54, and the second end of the magnetic driving portion 44 is attached to the fourth magnetic conductive portion 62, so that the first connecting terminal 1 is turned on with the second connecting terminal 2.

Alternatively, as shown in FIG. 34, when a reverse low-voltage current is passed into the first driving coil 53 and the second driving coil 63, the second magnetic conductive portion 52 and the third magnetic conductive portion 61 may have S poles, and the first magnetic conductive portion 54 and the fourth magnetic conductive portion 62 may have N poles. Therefore, the first magnetic conductive portion 54 and the first end of the magnetic driving portion 44 repel each other, and the third magnetic conductive portion 61 and the first end of the magnetic driving portion 44 attract each other. The second magnetic conductive portion 52 and the second end of the magnetic driving portion 44 attract each other, and the fourth magnetic conductive portion 62 and the second end of the magnetic driving portion 44 repel each other, so that the magnetic driving portion 44 may rotate around the first axis in the second direction (namely, the clockwise direction in FIG. 31). The first end of the magnetic driving portion 44 is attached to the third magnetic conductive portion 61, and the second end of the magnetic driving portion 44 is attached to the second magnetic conductive portion 52, so that the first connecting terminal 1 is disconnected from the second connecting terminal 2.

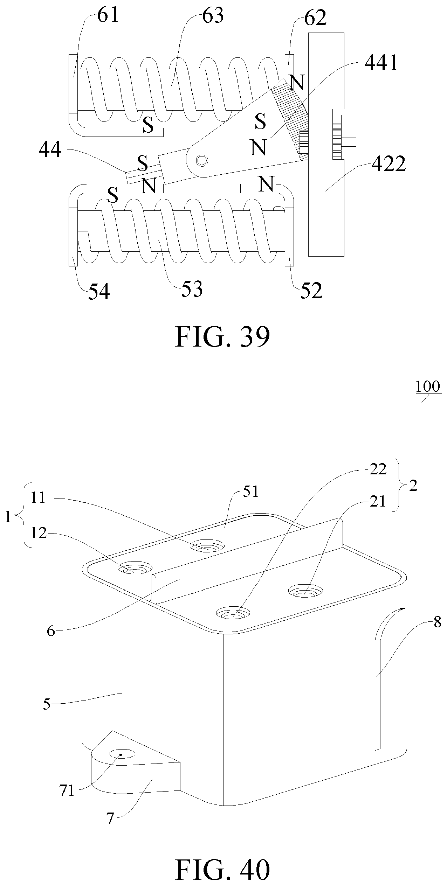

In some embodiments, as shown in FIG. 39, the first driving coil 53 includes a first magnetic conductive portion 54 and a second magnetic conductive portion 52, and the second driving coil 63 includes a third magnetic conductive portion 61 and a fourth magnetic conductive portion 62. When the first driving coil 53 and the second driving coil 63 are energized, the first magnetic conductive portion 54 and the second magnetic conductive portion 52 have opposite polarities, the third magnetic conductive portion 61 and the fourth magnetic conductive portion 62 have opposite polarities, the first magnetic conductive portion 54 and the third magnetic conductive portion 61 have the same polarity, and the second magnetic conductive portion 52 and the fourth magnetic conductive portion 62 have the same polarity.

In other words, as shown in FIG. 39, main body parts of the first magnetic conductive portion 54, the second magnetic conductive portion 52, the third magnetic conductive portion 61, and the fourth magnetic conductive portion 62 are configured as plate-shaped structures. The main body part of the first magnetic conductive portion 54 and the main body part of the second magnetic conductive portion 52 are attached to two ends of the first driving coil 53, and are arranged directly facing the end portion of the first driving coil 53. The main body part of the third magnetic conductive portion 61 and the main body part of the fourth magnetic conductive portion 62 are attached to two ends of the second driving coil 63, and are arranged directly facing the end portion of the second driving coil 63. Therefore, when a low-voltage current is passed into the first driving coil 53 and the second driving coil 63, the first magnetic conductive portion 54 and the second magnetic conductive portion 52 generate opposite polarities. In addition, when a low-voltage current is passed into the second driving coil 63, the third magnetic conductive portion 61 and the fourth magnetic conductive portion 62 also generate opposite polarities.

As shown in FIG. 39, the main body part of the magnetic conductive portion is connected to a folding plate, and the folding plate extends into a gap between the first driving coil 53 and the second driving coil 63. A folding plate of the first magnetic conductive portion 54 is arranged directly facing a folding plate of the third magnetic conductive portion 61, and a folding plate of the second magnetic conducting portion 52 is arranged directly facing a folding plate of the fourth magnetic conducting portion 62. By passing a low-voltage current into the first driving coil 53 and the second driving coil 63, the first magnetic conductive portion 54 and the third magnetic conductive portion 61 have the same polarity, and the second magnetic conductive portion 52 and the fourth magnetic conductive portion 62 have the same polarity.

The first micro switch 445 includes a magnetic driving portion 44, where a first end of the magnetic driving portion 44 is located between the first magnetic conductive portion 54 and the third magnetic conductive portion 61, and a second end of the magnetic driving portion 44 is located between the second magnetic conductive portion 52 and the fourth magnetic conductive portion 62. A part of the first end of the magnetic driving portion 44 close to the first driving coil 53 and a part close to the second driving coil 63 have opposite polarities. A part of the second end of the magnetic driving portion 44 close to the first driving coil 53 and a part close to the second driving coil 63 have opposite polarities. The part of the first end of the magnetic driving portion 44 and the part of the second end of the magnetic driving portion 44 that are close to the first driving coil 53 have the same polarity, and the part of the first end of the magnetic driving portion 44 and the part of the second end of the magnetic driving portion 44 that are close to the second driving coil 63 have the same polarity.

Specifically, the end portion of the magnetic driving portion 44 facing a side of the first driving coil 53 may be set as the N pole, and the end portion of the magnetic driving portion 44 facing a side of the second driving coil 63 may be set as the S pole. Further, when a low-voltage current is passed into the first driving coil 53 and the second driving coil 63, the first magnetic conductive portion 54 and the third magnetic conductive portion 61 may have S poles, and the second magnetic conductive portion 52 and the fourth magnetic conductive portion 62 may have N poles. Therefore, as shown in FIG. 32, the first magnetic conductive portion 54 and the first end of the magnetic driving portion 44 attract each other, and the third magnetic conductive portion 61 and the first end of the magnetic driving portion 44 repel each other. The second magnetic conductive portion 52 and the second end of the magnetic driving portion 44 repel each other, and the fourth magnetic conductive portion 62 and the second end of the magnetic driving portion 44 attract each other, so that the magnetic driving portion 44 may rotate around the first axis in the first direction (namely, the counterclockwise direction in FIG. 31). The first end of the magnetic driving portion 44 is attached to the first magnetic conductive portion 54, and the second end of the magnetic driving portion 44 is attached to the fourth magnetic conductive portion 62, so that the first connecting terminal 1 is turned on with the second connecting terminal 2.

Alternatively, as shown in FIG. 34, when a reverse low-voltage current is passed into the first driving coil 53 and the second driving coil 63, the first magnetic conductive portion 54 and the third magnetic conductive portion 61 may have N poles, and the second magnetic conductive portion 52 and the fourth magnetic conductive portion 62 may have S poles. Therefore, the first magnetic conductive portion 54 and the first end of the magnetic driving portion 44 repel each other, and the third magnetic conductive portion 61 and the first end of the magnetic driving portion 44 attract each other. The second magnetic conductive portion 52 and the second end of the magnetic driving portion 44 attract each other, and the fourth magnetic conductive portion 62 and the second end of the magnetic driving portion 44 repel each other, so that the magnetic driving portion 44 may rotate around the first axis in the second direction (namely, the clockwise direction in FIG. 31). The first end of the magnetic driving portion 44 is attached to the third magnetic conductive portion 61, and the second end of the magnetic driving portion 44 is attached to the second magnetic conductive portion 52, so that the first connecting terminal 1 is disconnected from the second connecting terminal 2.

Through the foregoing arrangement, an end portion of the magnetic driving portion 44 located on two sides of the first axis receive opposite forces respectively, so that the magnetic driving portion 44 may stably rotate around the first axis, thereby driving the main joining conductor 3 to move, and implementing stable switching of the on-off state of the high-voltage circuit. In addition, a distance between the first driving coil 53 and the second driving coil 63 may be adjusted according to an actual requirement, to adjust a stroke of the first micro switch 445, so that the first micro switch 445 has a greater stroke range, and an assembly manner between the first micro switch 445 and the driving coil is more flexible and diverse.

In some embodiments, the first driving coil 53 and the second driving coil 63 are connected in series in a control circuit. Therefore, on-off of the first driving coil 53 and the second driving coil 63 may be synchronously controlled through a single voltage signal, thereby improving the overall reliability of the contactor.

In some embodiments, as shown in FIG. 37, the first transmission assembly 444 further includes a first transmission member 443. The first transmission member 443 includes a first gear portion 431 rotating around a second axis, the first gear portion 431 may be a bevel gear portion or a spur gear portion, the first micro switch 445 includes a first arc-shaped tooth portion 441 rotating around the first axis, and the first gear portion 431 and the first arc-shaped tooth portion 441 are in meshing transmission through a tooth structure. The first arc-shaped tooth portion 441 is fixedly connected to the magnetic driving portion 44, the first arc-shaped tooth portion 441 may move together with the magnetic driving portion 44, the first arc-shaped tooth portion 441 is configured as a fan-shaped structure, and a tooth structure is arranged on a side of the first arc-shaped tooth portion 441 away from the first axis. A tooth structure corresponding to the first arc-shaped tooth portion 441 is configured on an outer side of the first gear portion 431. The first arc-shaped tooth portion 441 and the first gear portion 431 are in meshed transmission, to implement transmission.

In other words, as shown in FIG. 32, when the first driving coil 53 and the second driving coil 63 drive the magnetic driving portion 44 to move around the first axis toward the first direction, the magnetic driving portion 44 drives the first arc-shaped tooth portion 441 to move around the first axis toward the first direction. The first arc-shaped tooth portion 441 may drive the first gear portion 431 to rotate around the second axis through the tooth structure, to drive the main joining conductor 3 to move, so that the first connecting terminal 1 is turned on with the second connecting terminal 2; and as shown in FIG. 34, when the first driving coil 53 and the second driving coil 63 drive the magnetic driving portion 44 to move around the first axis toward the second direction, the magnetic driving portion 44 drives the first arc-shaped tooth portion 441 to rotate around the first axis toward the second direction, and first arc-shaped tooth portion 441 may drive the first gear portion 431 to rotate around the second axis through the tooth structure, to drive the main joining conductor 3 to move in a reverse direction, so that the first connecting terminal 1 is disconnected from the second connecting terminal 2.

In some embodiments, as shown in FIG. 37, the first transmission member 443 further includes a second gear portion 432 rotating around the second axis. The second gear portion 432 is a spur gear portion, an end portion of the first gear portion 431 and an end portion of the second gear portion 432 directly face each other and are connected to each other, and an axis of the first gear portion 431 coincides with an axis of the second gear portion 432. The first gear portion 431 is configured to drive the second gear portion 432 to rotate around the second axis. The first driven member 442 includes a first rack portion 421. The first rack portion 421 is configured as a bar-shaped structure. A tooth structure extending in a length direction is arranged on the first rack portion 421. The second gear portion 432 and the first rack portion 421 are in meshing transmission through the tooth structure.

In other words, as shown in FIG. 33, when the first driving coil 53 and the second driving coil 63 drive the first arc-shaped tooth portion 441 to move around the first axis toward the first direction, the first gear portion 431 rotates around the second axis to drive the second gear portion 432 to rotate in the same direction, and the second gear portion 432 drives the first rack portion 421 to move through the tooth structure, to drive the main joining conductor 3 to move, so that the first connecting terminal 1 is connected to the second connecting terminal 2; and as shown in FIG. 35, when the first driving coil 53 and the second driving coil 63 drive the first arc-shaped tooth portion 441 to move around the first axis toward the second direction, the first gear portion 431 rotates around the second axis to drive the second gear portion 432 to rotate in the same direction, and the second gear portion 432 drives the first rack portion 421 to move in a reverse direction through the tooth structure, to drive the main joining conductor 3 to move in a reverse direction, so that the first connecting terminal 1 is disconnected from the second connecting terminal 2.

Through the foregoing arrangement, rotation of the magnetic driving portion 44 around the first axial direction is converted into sliding of the first rack portion 421 in a fixed direction, to drive the main joining conductor 3 to move, thereby implementing connection and disconnection between the first connecting terminal 1 and the second connecting terminal 2, making a sliding process smooth and stable, and reducing an impact force when the main joining conductor 3 is joined to the second connecting terminal 2. In this way, closing noise of a contact point is reduced, and stability of the contactor is improved.

In some embodiments, a diameter of the second gear portion 432 is greater than a diameter of the first gear portion 431. In other words, when the first gear portion 431 drives the second gear portion 432 to rotate, a rotation stroke of the second gear portion 432 is greater than a rotation stroke of the first gear portion 431. Therefore, a stroke of the first micro switch 445 may be amplified through the first transmission member 443, which reduces a stroke requirement of the first micro switch 445 in an on-off process, and is conducive to implementing the overall diverse layout of the contactor, and meeting an electrical clearance requirement of the high-voltage power

In some embodiments, the first rack portion 421 extends in a vertical direction, an upper end of the first rack portion 421 is configured to be connected to the main joining conductor 3, and a tooth structure meshed with the second gear portion 432 is arranged on a side wall of a lower end of the first rack portion 421. In other words, as shown in FIG. 31, the first rack portion 421 is arranged on a side of the second gear portion 432, and the first rack portion 421 is configured as a bar-shaped structure. A tooth structure extending in a vertical direction is arranged on a side of the first rack portion 421 close to the second gear portion 432. The first rack portion 421 may be meshed with the second gear portion 432, to perform transmission.

Therefore, when the driving coil 5 drives the arc-shaped tooth portion 411 to rotate around the first axis to move toward the first direction, and the second gear portion 432 drives the first rack portion 421 to move upward in a vertical direction through the tooth structure, to drive the main joining conductor 3 to move upward, so that the first connecting terminal 1 is connected to the second connecting terminal 2; and when the driving coil 5 drives the arc-shaped tooth portion 411 to rotate around the first axis to move toward the second direction, and the second gear portion 432 drives the first rack portion 421 to move downward in a vertical direction through the tooth structure, to drive the main joining conductor 3 to move downward, so that the first connecting terminal 1 is disconnected from the second connecting terminal 2.

Through the foregoing arrangement, a side surface of the main joining conductor 3 may be attached to a side surface of the first connecting terminal 1 of the input terminal and a side surface of the second connecting terminal 2 of the output terminal, to serve as a moving contact point. Therefore, a quantity of moving contact points is reduced, and the moving contact points have sufficient joining area, to reduce contact resistance of the moving contact points, thereby reducing a heating amount of the contactor, reducing an energy loss, and reducing possibility of adhesion of the moving contact points.

Further, as shown in FIG. 31, a plurality of main joining conductors 3, the first driving coil 53, and the second driving coil 63 are sequentially arranged in an upward direction or a downward direction, and the driving coil 5 and the first micro switch 445 are arranged directly facing each other in a horizontal direction (the left direction and the right direction in FIG. 31), so that the overall layout of the contactor is even, which is conducive to overall heat dissipation.

In some embodiments, as shown in FIG. 31, the main joining conductor 3 is constructed in a plate shape, and there are a plurality of main joining conductors 3. The plurality of main joining conductors 3 respectively correspond to a plurality of groups of first connecting terminals 1 and second connecting terminals 2. The plurality of main joining conductors 3 each are arranged extending in the axial direction of the driving coil, to be evenly arranged on an upper side of the first driving coil 53 and the second driving coil 63, so that the overall layout of the contactor is proper.

It should be noted that the main joining conductor 3 may be made of a composite material such as soft copper (silver), so that the main joining conductor 3 has a greater current-carrying capacity, thereby further reducing resistance of the main joining conductor 3. In addition, hardness of the main joining conductor 3 is less, which reduces noise in a joining process between the second connecting terminal 2 and the main joining conductor 3.

In addition, as shown in FIG. 37, the first driven member 442 includes a clamping portion 422. The clamping portion 422 has a clamping opening 423 open toward the main joining conductor 3, and a groove is provided on a side of the clamping portion 422 away from the main joining conductor 3. The first rack portion 421 is fixed at an inner wall of the groove, and the first rack portion 421 is configured to drive the clamping portion 422 to move in a vertical direction. One end of the main joining conductor 3 is attached and connected to the first connecting terminal 1, and an other end of the main joining conductor 3 extends into the clamping opening 423. The clamping portion 422 is configured to drive an other end of the main joining conductor 3 to be attached to the second connecting terminal 2.

Specifically, the first connecting terminal 1 and the second connecting terminal 2 may be arranged locating at positions of a same height, and one end of the main joining conductor 3 away from the clamping portion 422 extends to a lower side of the first connecting terminal 1, so that an upper side surface of the main joining conductor 3 is attached and connected to a lower side surface of the first connecting terminal 1. In addition, one end of the main joining conductor 3 close to the clamping portion 422 extends into the clamping opening 423, so that the clamping portion 422 may limit a position of the main joining conductor 3. When the first rack portion 421 moves, the clamping portion 422 may drive the main joining conductor 3 to move in the same direction, and the second connecting terminal 2 is arranged at an upper end of a side of the main joining conductor 3 close to the clamping portion 422. As shown in FIG. 33, when the main joining conductor 3 moves to an upper limit position (namely, a maximum position in a vertical direction), the main joining conductor 3 is attached and connected to the second connecting terminal 2. As shown in FIG. 35, when the clamping portion 422 drives the main joining conductor 3 to move downward, the main joining conductor 3 is disconnected from the second connecting terminal 2, so that the first connecting terminal 1 is electrically disconnected from the second connecting terminal 2.

It should be noted that end portions of the plurality of main joining conductors 3 all extend into the same clamping opening 423, and the clamping portion 422 may drive the plurality of main joining conductors 3 to move synchronously, thereby implementing synchronous connection and disconnection between a plurality of groups of first connecting terminals 1 and second connecting terminals 2, reducing a quantity of components, and reducing difficulty of mounting.

In some embodiments, as shown in FIG. 33, the main joining conductor 3 includes a fixed portion 31 and a joining portion 33. The fixed portion 31 is fixedly connected to the first connecting terminal 1, the first driven member 442 is connected to the joining portion 33 to drive the joining portion 33 to be joined to the second connecting terminal 2.

It may be understood that when the first micro switch 445 rotates around the first axis toward the first direction, the first driven member 442 moves in a direction away from the second connecting terminal 2, the first driven member 442 exerts a force of moving away from the second connecting terminal 2 on the joining portion 33, and the fixed portion 31 moves relative to the joining portion 33, so that the main joining conductor 3 is disconnected from the second connecting terminal 2; and when the first micro switch 445 rotates around the first axis toward the second direction, the first driven member 442 moves toward a direction close to the second connecting terminal 2, and the second connecting terminal 2 is joined to the joining portion 33. Therefore, an on-off state of the high-voltage circuit may be switched conveniently.

In some embodiments, as shown in FIG. 33, a weakening portion 32 is connected between a fixed portion 31 and a joining portion 33. In other words, when the rack portion moves downward, the rack portion exerts a downward force on the joining portion 33, causing the weakening portion 32 to elastically deform, and causing the fixed portion 31 to move relative to the joining portion 33, so that the main joining conductor 3 is disconnected from the second connecting terminal 2 of the output terminal; and when the first micro switch 445 rotates around the first axis toward the second direction, the rack portion moves upward, and the elastic deformation of the weakening portion 32 recovers, so that the second connecting terminal 2 of the output terminal is joined to the joining portion 33.

Therefore, by arranging the weakening portion 32, relative movement between the fixed portion 31 and the joining portion 33 is implemented, and plastic deformation of the joining portion 33 is avoided, so that the joining portion 33 may be repeatedly attached to a side surface of the second connecting terminal 2, thereby improving stability and reliability of the contactor.

In some embodiments, the weakening portion 32 is configured as an arc-shaped section, one end of the arc-shaped section is connected to the fixed portion 31, an other end of the arc-shaped section is connected to the joining portion 33, and there is a weakening cavity 321 in the weakening portion 32. In other words, as shown in FIG. 33, the weakening portion 32 may be configured as a semi-circular arc-shaped section that protrudes downward. A left end of the weakening portion 32 is connected to the fixed portion 31, and a right end of the weakening portion 32 is connected to the joining portion 33, to jointly construct the main joining conductor 3.

Further, when the first driven member 442 exerts a downward force on the joining portion 33, the weakening portion 32 is compressed and deformed, the fixed portion 31 moves relative to the joining portion 33, and the main joining conductor 3 is disconnected from the second connecting terminal 2. When the first driven member 442 moves upward, the elastic deformation of the weakening portion 32 recovers, and the second connecting terminal 2 is joined to the joining portion 33. By providing an arc-shaped weakening cavity 321 in the weakening portion 32, overall stiffness of the weakening portion 32 is further reduced, so that the weakening portion 32 is prone to elastic deformation when receiving the force transmitted by the joining portion 33, thereby reducing size requirements of the first driving coil 53 and the second driving coil 63.

In some embodiments, as shown in FIG. 29, the contactor according to an embodiment of the present disclosure further includes: a second inner shell 205. A first connecting terminal 1 and a second connecting terminal 2 are mounted on the second inner shell 205. A main joining conductor 3, a first transmission assembly 444, a first driving coil 53, and a second driving coil 63 each are mounted in the second inner shell 205, and a first driven member 442 slide-fits an inner peripheral wall of the second inner shell 205.

In other words, as shown in FIG. 29, the second inner shell 205 is entirely constructed as a rectangular structure, and legs 76 protruding outward are separately arranged at diagonal positions of the second inner shell 205. Mounting holes 72 running through in a thickness direction are provided on the legs 76, and a connector may pass through the mounting holes 72 to fix a contactor. An external structure of the second inner shell 205 is consistent with that of a conventional contactor, which facilitates structural design and material switching. It should be noted that an opening is provided on a side wall of the second inner shell 205. A low-voltage signal line may pass through the second inner shell 205 through the opening to be electrically connected to an external power supply. An operator may control on or off of the contactor through an external switch. The low-voltage signal line may also be designed as a connector.

Further, as shown in FIG. 30, the second inner shell 205 has a cavity structure that opens outward, a cover plate structure 73 is arranged on an opening end, and through holes corresponding to the first connecting terminal 1 and the second connecting terminal 2 are provided on the cover plate structure 73. Upper parts of the first connecting terminal 1 and the second connecting terminal 2 may extend into the through holes, to be mounted on the cover plate structure 73, and remain relatively stable with the second inner shell 205, so that the main joining conductor 3 may move relative to the second connecting terminal 2. Remaining parts of the first connecting terminal 1 and the second connecting terminal 2, the main joining conductor 3, the first transmission assembly 444, the first driving coil 53, and the second driving coil 63 are sealed in the second inner shell 205 through the cover plate structure 73, thereby being separated from the outside world, to prevent external impurities from entering the second inner shell 205, and simultaneously play the role of insulation protection. In addition, the inner peripheral wall of the second inner shell 205 may limit a position of the first driven member 442, so that the first driven member 442 may slide in a same direction relative to the inner peripheral wall, to ensure stability of a movement path of the main joining conductor 3, and improve reliability of a working process of the contactor.

In some embodiments, a sliding guide groove 74 is provided on the inner peripheral wall of the second inner shell 205, and a first rack portion 421 of the first driven member 442 slide-fits the sliding guide groove 74. As shown in FIG. 36, the sliding guide groove 74 is arranged extending in a vertical direction, and an opening size of the sliding guide groove 74 is equal to a width size of the first rack portion 421. When the first rack portion 421 is mounted on the sliding guide groove 74, the sliding guide groove 74 may limit a position of the first rack portion 421, so that the first rack portion 421 may reciprocate in a height direction, thereby ensuring a reliable contact and disengagement process between the main joining conductor 3 and the first connecting terminal 1, and improving stability of the contactor.

In some embodiments, the contactor in the embodiment of the present disclosure further includes: a temperature sensor and a controller. The temperature sensor is electrically connected to the controller, and the temperature sensor is configured to detect a circuit signal of the first connecting terminal 1, the second connecting terminal 2, and/or the main joining conductor 3. The controller is configured to control the main joining conductor 3 to be joined to or turned off with the second connecting terminal 2 according to the circuit signal. The circuit signal includes: a temperature change, a voltage change, and a current change. In other words, a temperature sensor may be arranged for monitoring the main joining conductor 3, or the temperature sensor may be arranged for detecting the first connecting terminal 1 and the second connecting terminal 2, or the temperature sensor may be arranged for simultaneously detecting the first connecting terminal 1, the second connecting terminal 2, and the main joining conductor 3, thereby obtaining a temperature change, a voltage change, and a current change of a high-voltage circuit.

Further, as the first connecting terminal 1 is connected to the second connecting terminal 2 through the main joining conductor 3, a current amount and a heat generation amount of the high-voltage circuit change, and temperature changes correspondingly occur. The sensor may obtain change information (including a temperature change, a voltage change, and a current change) in a working process of the high-voltage circuit, and transmit the change information to a controller in the form of a circuit signal. The controller determines whether a cut-off threshold of the high-voltage circuit is reached according to the circuit signal, and when the high-voltage circuit needs to be turned off, controls the driving assembly to be electrically disconnected from the second connecting terminal 2 and the main joining conductor 3. A fuse does not need to be arranged, to reduce a high-voltage loss and a cost.

In addition, after the contactor is controlled to be turned off, if electrical equipment using the contactor of the present disclosure needs to continue to work, the controller may implement joining between the second connecting terminal 2 and the main joining conductor 3 through the driving assembly, to ensure that a high voltage may be supplied to the electrical equipment, thereby improving security. For example, the contactor of the present disclosure is used in an electric vehicle, when the circuit information indicates that the contactor needs to be turned off but the vehicle is in a dangerous condition and needs to maintain a working condition, the upper high-voltage power state may be maintained. In addition, after the vehicle drives to a secure position or the dangerous condition is eliminated, the second connecting terminal 2 is electrically disconnected from the main joining conductor 3.

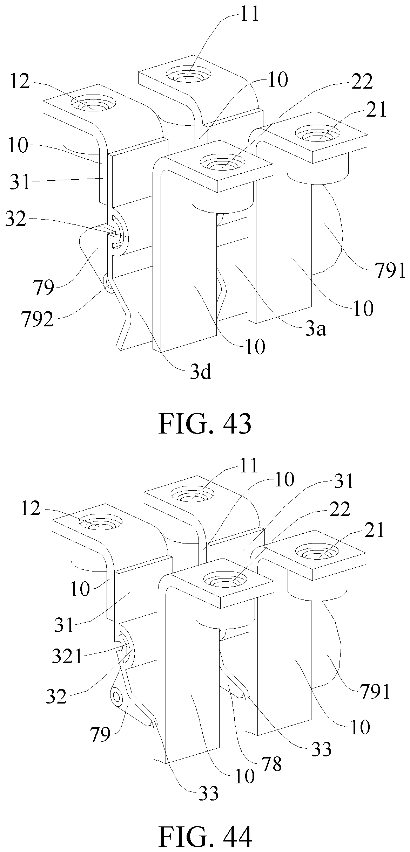

According to a specific embodiment of the present disclosure, as shown in FIG. 40 to FIG. 44, both the fourth contactor K4 and the fifth contactor K5 include: a main joining conductor 3. The main joining conductor 3 is connected to the corresponding input terminal, and the main joining conductor 3 is selectively electrically connected to the corresponding output terminal. It should be noted that one main joining conductor 3 is separately arranged on the fourth contactor K4 and the fifth contactor K5. Using the fourth contactor K4 as an example for description, the main joining conductor 3 of the fourth contactor K4 is connected to the input terminal of the fourth contactor K4, and the main joining conductor 3 of the fourth contactor K4 is selectively electrically connected to the output terminal of the fourth contactor K4.

As shown in FIG. 40, at least two connecting terminal groups are integrated on the contactor of the present disclosure. In other words, a quantity of connecting terminal groups may be flexibly set according to an actual usage requirement. Preferably, two groups of first connecting terminals 1 and second connecting terminals 2 are arranged on the contactor. It should be noted that one first connecting terminal 1 (input terminal) corresponds to one second connecting terminal 2 (output terminal), and one group of first connecting terminals 1 and second connecting terminals 2 may form one direct current circuit. In other words, at least two direct current circuits may be integrated on the contactor of the present disclosure. There are at least two main joining conductors 3, and the main joining conductors 3 are in a one-to-one correspondence with the connecting terminal groups.

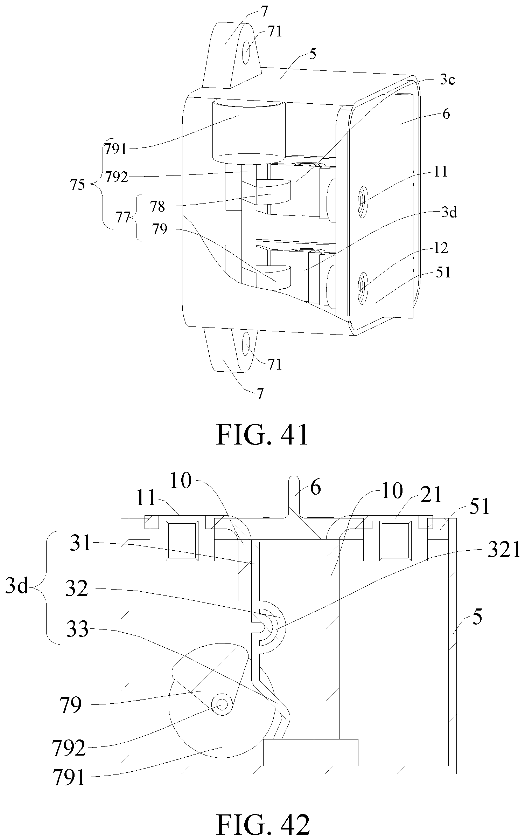

As shown in FIG. 41, a driving mechanism 75 is arranged in the second inner shell 205, the driving mechanism 75 includes a fourth fan-shaped driving portion 77, the fourth fan-shaped driving portion 77 is configured to be rotatable around a fourth axis, and the fourth fan-shaped driving portion 77 may be configured as a fan-shaped sheet structure, where in a rotation process, the fourth fan-shaped driving portion 77 pushes the main joining conductor 3 of the fourth contactor K4 and the main joining conductor 3 of the fifth contactor K5 and releases the push on the main joining conductor 3 of the fourth contactor K4 and the main joining conductor 3 of the fifth contactor K5, and when the fourth fan-shaped driving portion 77 pushes the plurality of main joining conductors 3, the plurality of main joining conductors 3 are separately electrically connected to the corresponding output terminals.

The driving mechanism 75 and an upper computer perform communication control by using a controller area network (CAN), to implement synchronous control of the two connecting terminal groups according to signal control of CAN, thereby ensuring synchronization of the two groups of first connecting terminals 1 and second connecting terminals 2, and facilitating control of the contactor by a user.

Preferably, as shown in FIG. 15, FIG. 17, and FIG. 18, the main joining conductor 3 may be connected to the first connecting terminal 1 through a metal conductor 10. The metal conductor 10 is arranged between the first connecting terminal 1 and the main joining conductor 3, and by arranging the metal conductor 10, may play a conductive role between the first connecting terminal 1 and the main joining conductor 3, and one end of the main joining conductor 3 may be attached and connected to the metal conductor 10, thereby ensuring conductivity between the first connecting terminal 1 and the main joining conductor 3. In addition, when rotating, the fourth fan-shaped driving portion 77 may drive a plurality of main joining conductors 3 and release push on the plurality of main joining conductors 3. Specifically, when the fourth fan-shaped driving portion 77 rotates, and when rotating to a proper position, the fourth fan-shaped driving portion 77 generates a driving force for the plurality of main joining conductors 3, so that the fourth fan-shaped driving portion 77 pushes the plurality of main joining conductors 3 to cause the main joining conductors 3 to elastically deform to be attached to the second connecting terminal 2. In addition, when the fourth fan-shaped driving portion 77 continues to rotate to another position, the fourth fan-shaped driving portion 77 is separated from the main joining conductor 3 to loosen the main joining conductor 3. In this case, the main joining conductor 3 relies on its own elasticity to reset, thereby causing the main joining conductor 3 to be separated from the second connecting terminal 2.

It should be noted that in some embodiments, as shown in the embodiment shown in FIG. 40 to FIG. 44, the contactor further includes a reset driving structure. The reset driving structure is configured to drive the main joining conductor 3 to be separated from the second connecting terminal 2. In other words, the main joining conductor 3 may be electrically disconnected from the second connecting terminal 2 through the reset driving structure. For example, the reset driving structure may be a torsion spring. An elastic deformation force of the torsion spring is configured to push the main joining conductor 3 to be separated from the second connecting terminal 2. Certainly, the reset driving structure may also be configured as another structure, namely, a structure that may implement the foregoing effect, and is not limited herein.

As shown in FIG. 41, the fourth fan-shaped driving portion 77 includes a first fan-shaped sub-portion 78 and a second fan-shaped sub-portion 79 that are spaced apart along the fourth axis, the main joining conductor 3 includes a third joining conductor 3c and a fourth joining conductor 3d, the first fan-shaped sub-portion 78 is configured to push the third joining conductor 3c and release the push on the third joining conductor 3c, the second fan-shaped sub-portion 79 is configured to push the fourth joining conductor 3d and release the push on the fourth joining conductor 3d, the third joining conductor 3c is connected to the input terminal of the fourth contactor K4, the third joining conductor 3c is selectively electrically connected to the output terminal of the fourth contactor K4, the fourth joining conductor 3d is connected to the input terminal of the fifth contactor K5, and the fourth joining conductor 3d is selectively electrically connected to the output terminal of the fifth contactor K5, where the third joining conductor 3c is arranged opposite to the output terminal of the fourth contactor K4, and the fourth joining conductor 3d is arranged opposite to the output terminal of the fifth contactor K5.

Therefore, the first fan-shaped sub-portion 78 may selectively push or release the third joining conductor 3c, and the second fan-shaped sub-portion 79 may selectively push or release the fourth joining conductor 3d, thereby controlling a working state of the contactor, and meeting different direct current charging requirements of the user.

It should be noted that when a plurality of connecting terminal groups are integrated into the contactor, a quantity of main joining conductors 3 and a quantity of fourth fan-shaped driving portions 77 are the same as a quantity of connecting terminal groups, thereby implementing synchronous control of the plurality of connecting terminal groups, to facilitate improving synchronization of the contactor.

Further, as shown in FIG. 41, the first fan-shaped sub-portion 78 is arranged directly facing the second fan-shaped sub-portion 79 along the fourth axis. In other words, projection of the first fan-shaped sub-portion 78 coincides with projection of the second fan-shaped sub-portion 79 on the fourth axis, and the first fan-shaped sub-portion 78 and the second fan-shaped sub-portion 79 rotate synchronously around the fourth axis. In a rotation process, the first fan-shaped sub-portion 78 and the second fan-shaped sub-portion 79 simultaneously push the third joining conductor 3c and the fourth joining conductor 3d and simultaneously release the push on the third joining conductor 3c and the fourth joining conductor 3d. Therefore, it may be ensured that the first fan-shaped sub-portion 78 and the second fan-shaped sub-portion 79 may simultaneously push or release the third joining conductor 3c and the fourth joining conductor 3d, thereby implementing synchronous control of the third joining conductor 3c and the fourth joining conductor 3d. Then, the first connecting terminal 1 (input terminal) and the second connecting terminal 2 (output terminal) may be synchronously turned off or on, thereby enhancing synchronization of the contactor
as shown in FIG. 41, the driving mechanism 75 further includes: a second power source 791 and a second transmission rod 792, where the second power source 791 is connected to an end portion of the second transmission rod 792 and is configured to drive the second transmission rod 792 to rotate, both the first fan-shaped sub-portion 78 and the second fan-shaped sub-portion 79 are arranged on the second transmission rod 792, both the first fan-shaped sub-portion 78 and the second fan-shaped sub-portion 79 rotate synchronously around the fourth axis, and the fourth axis coincides with an axis of the second transmission rod 792.

The second power source 791 is electrically connected to an upper computer. The second power source 791 may be configured as an electric motor, so that a rotation speed and a direction of the electric motor may be controlled through the upper computer. It should be noted that a rotation direction of the second transmission rod 792 is clockwise, and the second transmission rod 792 may rotate at a uniform speed or at a non-uniform speed. The second power source 791 is connected to an end portion of the second transmission rod 792. An other end of the second transmission rod 792 extends in a direction away from the second power source 791, and the fourth axis coincides with an axis of the second transmission rod 792, to ensure that the second transmission rod 792 may rotate along the fourth axis under the action of the second power source 791, thereby facilitating the second power source 791 to provide a driving force for the second transmission rod 792, and increasing a rotation speed of the second transmission rod 792.

Specifically, as shown in FIG. 41, both the first fan-shaped sub-portion 78 and the second fan-shaped sub-portion 79 are arranged on the second transmission rod 792 and are sequentially distributed in an axial direction of the second transmission rod 792, thereby facilitating the first fan-shaped sub-portion 78 and the second fan-shaped sub-portion 79 to simultaneously control the third joining conductor 3c and the fourth joining conductor 3d, so that the third joining conductor 3c and the fourth joining conductor 3d synchronously enable the two groups of first connecting terminals 1 and second connecting terminals 2 to be connected or disconnected, thereby implementing synchronous control of the two groups of first connecting terminals 1 and second connecting terminals 2, to improve the synchronization of the contactor.

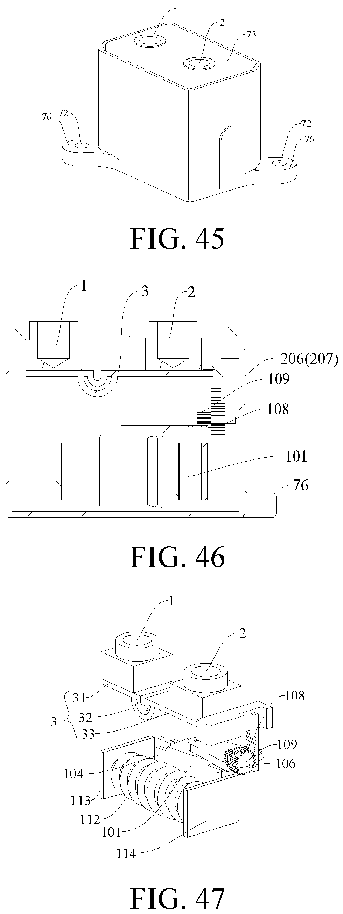

According to some specific embodiments of the present disclosure, as shown in FIG. 45 to FIG. 55, the distributor 2000 further includes: a third inner shell 206 and a fourth inner shell 207, where both the third inner shell 206 and the fourth inner shell 207 are fixedly arranged in the outer housing 200, the fourth contactor K4 is arranged in the third inner shell 206, the fifth contactor K5 is arranged in the fourth inner shell 207, both an input terminal and an output terminal of the fourth contactor K4 are arranged on the third inner shell 206, and both an input terminal and an output terminal of the fifth contactor K5 are arranged on the fourth inner shell 207.

Further, the fourth contactor K4 and/or the fifth contactor K5 include: a second transmission assembly 100, a main joining conductor 3, and a third driving coil 112, where the main joining conductor 3 is connected to the corresponding input terminal. For example, the main joining conductor 3 of the fourth contactor K4 is connected to the input terminal of the fourth contactor K4.

The second transmission assembly 100 includes a second micro switch 101, a second transmission member 109, and a second driven member 108, where the second micro switch 101 and the second transmission member 109 are in meshed transmission, the second transmission member 109 and the second driven member 108 are in meshed transmission, and the second driven member 108 is connected to the main joining conductor 3; and the third driving coil 112 is configured to drive the second micro switch 101 to move by generating a magnetic force after being energized; where the second transmission assembly 100 is configured to drive the second driven member 108 to move through the second transmission member 109 when the second micro switch 101 moves, to enable the main joining conductor 3 to be joined to the corresponding output terminal.

Further, the second micro switch 101 is configured to be rotatable around a fifth axis, the second transmission member 109 is configured to be rotatable around a sixth axis, and the fifth axis and the sixth axis are vertically distributed; the second micro switch 101 includes a second arc-shaped tooth portion 102 rotating around the fifth axis, the second transmission member 109 includes a third gear portion 110 rotating around the sixth axis, and the second arc-shaped tooth portion 102 and the third gear portion 110 are in meshed transmission; and the second transmission member 109 further includes a fourth gear portion 111 rotating around the sixth axis, the second driven member 108 includes a second rack portion, and the fourth gear portion 111 and the second rack portion are in meshed transmission.

The contactor of the embodiment is described below with reference to FIG. 6 and FIG. 45 to FIG. 55.

As shown in FIG. 47, the contactor of the embodiment of the present disclosure includes: a first connecting terminal 1, a second connecting terminal 2, a main joining conductor 3, a second transmission assembly 100, and a third driving coil 112.

As shown in FIG. 45, a first connecting terminal 1 and a second connecting terminal 2 are spaced apart on one end of the contactor. As shown in FIG. 47, during specific design, both the first connecting terminal 1 and the second connecting terminal 2 may be configured as binding posts, and a high-voltage wire may be connected to the binding posts to be electrically connected to the contactor.

The main joining conductor 3 is connected to the first connecting terminal 1. In other words, the first connecting terminal 1 may be fixedly connected to the main joining conductor 3, and the main joining conductor 3 may be selectively attached to the second connecting terminal 2. Therefore, by adjusting the main joining conductor 3 of the contactor, connection and disconnection between the first connecting terminal 1 and the second connecting terminal 2 is implemented, thereby ensuring convenience of switching of an on-off state of the contactor. It should be noted that the first connecting terminal 1 may be set as the input terminal, and the second connecting terminal 2 may be set as the output terminal, so that high-voltage electricity may be passed into the contactor through the first connecting terminal 1, and flow out of the contactor through the second connecting terminal 2, or the first connecting terminal 1 may be set as the output terminal, and the second connecting terminal 2 may be set as the input terminal, so that high-voltage electricity may be passed into the contactor through the second connecting terminal 2, and flow out of the contactor through the first connecting terminal 1.

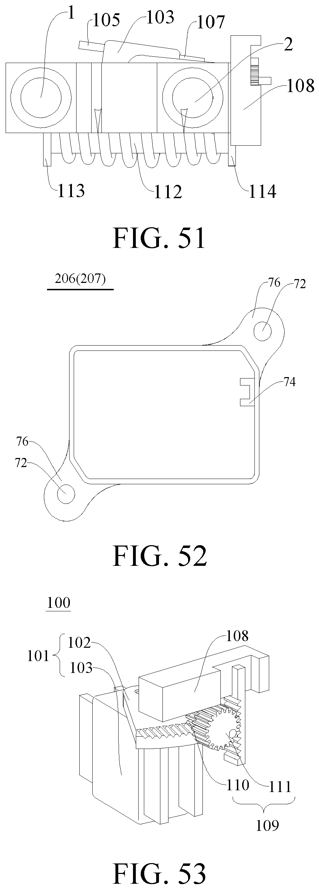

As shown in FIG. 53, the second transmission assembly 100 includes a second micro switch 101, a second driven member 108, and a second transmission member 109. Tooth structures each are arranged on the second micro switch 101, the second driven member 108, and the second transmission member 109. The tooth structure of the second micro switch 101 is configured to be meshed with the tooth structure of the second transmission member 109. When the second micro switch 101 moves, the second micro switch 101 may drive the second driven member 108 to move through the tooth structure; the second driven member 108 and the second micro switch 101 are spaced apart, and the tooth structure of the second transmission member 109 is meshed with the tooth structure of the second driven member 108. When the second micro switch 101 drives the second transmission member 109 to move, the second transmission member 109 may drive the second driven member 108 to move through the tooth structure; and the second driven member 108 is fixedly connected to a movable end of the main joining conductor 3. When the second driven member 108 moves, the movable end of the main joining conductor 3 may move together with the second driven member 108.

It may be understood that by arranging multi-level gear transmission in the second transmission assembly 100, movement transmitted from the second micro switch 101 to the main joining conductor 3 may be changed in direction in a transmission process, and the movement of the second micro switch 101 may be amplified or reduced, so that the second micro switch 101 has a greater stroke range, making an arrangement relationship between the second transmission assembly 100 and the main joining conductor 3 more flexible and diverse, thereby implementing diversification of the overall layout of the contactor.

As shown in FIG. 47, the contactor includes a third driving coil 112, the third driving coil 112 has a columnar body, a wire is wound around an outer peripheral wall of the columnar body in a circumferential direction, and the wire entirely extends in the axial direction. When a low-voltage current is passed into the wire, the third driving coil 112 may generate a magnetic field, the second micro switch 101 is configured to have a magnetic part, and the magnetic field generated by the third driving coil 112 may act on the second micro switch 101, so that the third driving coil 112 may drive the second micro switch 101 to move.

The second micro switch 101 may drive the second driven member 108 to move through the second transmission member 109 during movement, so that the main joining conductor 3 is joined to an other of the first connecting terminal 1 and the second connecting terminal 2. It should be noted that when the second micro switch 101 moves toward a first direction, the main joining conductor 3 may be driven to be joined to the second connecting terminal 2, and when the second micro switch 101 is driven to move toward a second direction, the main joining conductor 3 may be driven to be disconnected from the other.

Specifically, a low-voltage current may be passed into the third driving coil 112, to drive the third driving coil 112 to generate a magnetic field, so that the second micro switch 101 is forced to move toward the first direction. In this case, the second micro switch 101 drives the main joining conductor 3 to move through the second driven member 108, so that the first connecting terminal 1 is electrically connected to the second connecting terminal 2, and the contactor may be turned on with the high-voltage circuit; or a reverse low-voltage current may be passed into the third driving coil 112, to drive the third driving coil 112 to generate a reverse magnetic field, so that the second micro switch 101 is forced to move toward the second direction. In this case, the second micro switch 101 drives the main joining conductor 3 to move in a reverse direction through the second driven member 108, so that the first connecting terminal 1 is electrically disconnected from the second connecting terminal 2, and the contactor may be turned off with the high-voltage circuit. Therefore, convenient switching of an on-off state of the high-voltage circuit is implemented.

It may be understood that when a low-voltage current is passed into the third driving coil 112, the second micro switch 101 is forced to start to move, the second micro switch 101 drives the second transmission member 109 to move through the tooth structure, and the second transmission member 109 may drive the second driven member 108 through the tooth structure. Through the multi-level gear transmission, a movement process of the second driven member 108 is relatively smooth, to make the movement of the main joining conductor 3 smooth, thereby avoiding excessive acceleration of the main joining conductor 3, and reducing an impact force on the main joining conductor 3 in the joining process.

According to the contactor in the embodiment of the present disclosure, the multi-level gear transmission is arranged between the second micro switch 101 and the main joining conductor 3, to amplify or reduce the movement of the second micro switch 101, so that the second micro switch 101 has a greater stroke range, and when the third driving coil 112 drives the second micro switch 101, a movement process of the main joining conductor 3 is gentle and stable, thereby reducing an impact force when the main joining conductor 3 is joined, reducing closing noise, and improving the stability of the contactor.

In some embodiments, as shown in FIG. 47, the second micro switch 101 is configured to be rotatable around a fifth axis, the second transmission member 109 is configured to be rotatable around a sixth axis, and the fifth axis and the sixth axis are vertically distributed. The third driving coil 112 may drive the second micro switch 101 to rotate around the fifth axis toward the first direction, or drive the second micro switch 101 to rotate around the fifth axis toward the second direction. A first direction may be a clockwise direction, and a second direction may be a counterclockwise direction, or the first direction may be a counterclockwise direction, and the second direction may be a clockwise direction, so that a specific structure of the contactor may be flexibly arranged according to an actual requirement.

Through the foregoing arrangement, the third driving coil 112 may drive the second micro switch 101 to rotate around the fifth axis. When the second micro switch 101 rotates around the fifth axis, the second transmission member 109 may be driven to rotate around a sixth axis perpendicular to the fifth axis. When the movement of the second micro switch 101 is transmitted to the second driven member 108, a stroke range of the second driven member 108 may be spatially staggered from a stroke range of the second micro switch 101, to efficiently use space of the contactor, avoid an excessive size of a side of the contactor, and make the overall layout of the contactor more proper.

In some embodiments, as shown in FIG. 53, the second micro switch 101 includes a second arc-shaped tooth portion 102 rotating around the fifth axis, the second arc-shaped tooth portion 102 is configured as a fan-shaped structure, and a tooth structure is arranged on a side of the second arc-shaped tooth portion 102 away from the fifth axis. The second transmission member 109 includes a third gear portion 110 rotating around the sixth axis, the third gear portion 110 may be configured as a bevel gear portion or a spur gear portion, and the tooth structure of the third gear portion 110 corresponds to the tooth structure of the second arc-shaped tooth portion 102, so that the second arc-shaped tooth portion 102 may be meshed with the third gear portion 110, to implement transmission.

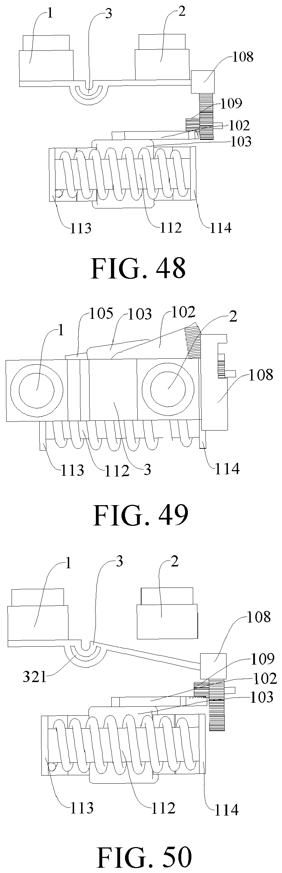

In other words, as shown in FIG. 49, when the third driving coil 112 drives the second arc-shaped tooth portion 102 to move around the fifth axis toward the first direction, and the second arc-shaped tooth portion 102 may drive the third gear portion 110 to rotate around the sixth axis through the tooth structure, to drive the main joining conductor 3 to move, so that the first connecting terminal 1 is turned on with the second connecting terminal 2; and as shown in FIG. 51, when the third driving coil 112 drives the second arc-shaped tooth portion 102 to move around the fifth axis toward the second direction, the second arc-shaped tooth portion 102 may drive the third gear portion 110 to rotate around the sixth axis through the tooth structure, to drive the main joining conductor 3 to move in a reverse direction, so that the first connecting terminal 1 is disconnected from the second connecting terminal 2.

In some embodiments, as shown in FIG. 53, the second transmission member 109 further includes a fourth gear portion 111 rotating around the sixth axis. The fourth gear portion 111 is configured as a spur gear portion, an end portion of the third gear portion 110 and an end portion of the fourth gear portion 111 directly face each other and are connected to each other, and an axis of the third gear portion 110 coincides with an axis of the fourth gear portion 111. The third gear portion 110 is configured to drive the fourth gear portion 111 to rotate around the sixth axis. The second driven member 108 includes a second rack portion. The fourth gear portion 111 and the second rack portion are in meshing transmission through the tooth structure.

In other words, as shown in FIG. 48 and FIG. 49, when the third driving coil 112 drives the second arc-shaped tooth portion 102 to move around the fifth axis toward the first direction, the third gear portion 110 rotates around the sixth axis to drive the fourth gear portion 111 to rotate in the same direction, and the fourth gear portion 111 drives the second rack portion to move through the tooth structure, to drive the main joining conductor 3 to move, so that the first connecting terminal 1 is connected to the second connecting terminal 2; and as shown in FIG. 50 and FIG. 51, when the third driving coil 112 drives the second arc-shaped tooth portion 102 to move around the fifth axis toward the second direction, the third gear portion 110 rotates around the sixth axis to drive the fourth gear portion 111 to rotate in the same direction, and the fourth gear portion 111 drives the second rack portion to move in a reverse direction through the tooth structure, to drive the main joining conductor 3 to move in a reverse direction, so that the first connecting terminal 1 is disconnected from the second connecting terminal 2.

Through the foregoing arrangement, rotation of the driving portion 103 around the fifth axis is converted into sliding of the second rack portion in a fixed direction, to drive the main joining conductor 3 to move, thereby implementing connection and disconnection between the first connecting terminal 1 and the second connecting terminal 2, making a sliding process smooth and stable, and reducing an impact force when the main joining conductor 3 is joined to the second connecting terminal 2. In this way, closing noise of a contact point is reduced, and stability of the contactor is improved.

In some embodiments, a diameter of the fourth gear portion 111 is greater than a diameter of the third gear portion 110. In other words, when the third gear portion 110 drives the fourth gear portion 111 to rotate, a rotation stroke of the fourth gear portion 111 is greater than a rotation stroke of the third gear portion 110. Therefore, a stroke of the second micro switch 101 may be amplified through the second transmission member 109, which reduces a stroke requirement of the second micro switch 101 in an on-off process, and is conducive to implementing the overall diverse layout of the contactor, and meeting an electrical clearance requirement of the high-voltage power

In some embodiments, the second rack portion is configured as extending in a vertical direction, an upper end of the second rack portion is configured to be connected to the main joining conductor 3, and a tooth structure meshed with the fourth gear portion 111 is arranged on a side wall of a lower end of the second rack portion. In other words, as shown in FIG. 47, the second rack portion is mounted on a side of the fourth gear portion 111, and a lower end of the second rack portion is configured as a bar-shaped structure extending in a vertical direction. A tooth structure extending in a vertical direction is arranged on a side of a lower end of the second rack portion close to the fourth gear portion 111. The second rack portion may be meshed with the fourth gear portion 111, to perform transmission.

Further, as shown in FIG. 47, an upper end of the second rack portion is configured as a bar-shaped structure extending in a horizontal direction, so that the second rack portion is entirely constructed as a T-shaped structure. The upper end of the second rack portion has an engagement groove opening toward the main joining conductor 3, and an end portion of the main joining conductor 3 may extend into the engagement groove.

Therefore, when the third driving coil 112 drives the second arc-shaped tooth portion 102 to rotate around the fifth axis to move toward the first direction, the fourth gear portion 111 drives the second rack portion to move through the tooth structure, to drive the main joining conductor 3 to move in the same direction, so that the first connecting terminal 1 is connected to the second connecting terminal 2; and when the third driving coil 112 drives the second arc-shaped tooth portion 102 to rotate around the fifth axis to move toward the second direction, the fourth gear portion 111 drives the second rack portion to move in a reverse direction through the tooth structure, to drive the main joining conductor 3 to move in a reverse direction, so that the first connecting terminal 1 is disconnected from the second connecting terminal 2.

In a specific processing process, the upper end and the lower end of the second rack portion may be processed separately, and after the processing is completed, the upper end and the lower end of the second rack portion are connected and fixed together, to reduce difficulty of processing the second rack portion.

Specifically, the first connecting terminal 1 and the second connecting terminal 2 may be arranged locating at positions of a same height, and one end of the main joining conductor 3 away from the second rack portion extends to a lower side of the first connecting terminal 1, so that an upper side surface of the main joining conductor 3 is attached and connected to a lower side surface of the first connecting terminal 1. In addition, one end of the main joining conductor 3 close to the second rack portion extends into an engagement opening, so that the second rack portion may limit a position of the main joining conductor 3. When the second rack portion moves, the second rack portion may drive the main joining conductor 3 to move in the same direction, and the second connecting terminal 2 is arranged above a side of the main joining conductor 3 close to the second rack portion. As shown in FIG. 48, when the main joining conductor 3 moves to an upper limit position (namely, a maximum position in a vertical direction), the main joining conductor 3 is attached and connected to the second connecting terminal 2. As shown in FIG. 50, when the second rack portion drives the main joining conductor 3 to move downward, the main joining conductor 3 is disconnected from the second connecting terminal 2, so that the first connecting terminal 1 is electrically disconnected from the second connecting terminal 2.

Therefore, a side surface of the main joining conductor 3 may be configured to be attached to a side surface of the first connecting terminal 1 and a side surface of the second connecting terminal 2, to serve as a moving contact point. A quantity of moving contact points is reduced, and the moving contact points have sufficient joining area, to reduce contact resistance of the moving contact points, thereby reducing a heating amount of the contactor, reducing an energy loss, and reducing possibility of adhesion of the moving contact points.

Further, as shown in FIG. 47, the main joining conductor 3 and the third driving coil 112 are sequentially arranged in an upward direction or a downward direction, and the third driving coil 112 is arranged directly facing the second micro switch 101 in a horizontal direction (the left direction and the right direction in FIG. 47), so that the overall layout of the contactor is even, which is conducive to overall heat dissipation.

In another embodiment, the second rack portion is configured to extend in a horizontal direction, one end of the second rack portion is configured to be connected to the main joining conductor 3, and a tooth structure meshed with the fourth gear portion 111 is arranged on a side wall of an other end of the second rack portion. The first connecting terminal 1 and the second connecting terminal 2 are separately arranged opposite to the main joining conductor 3 in a first direction. The third driving coil 112 is arranged opposite to the second micro switch 101 in the first direction. The first connecting terminal 1 and the second connecting terminal 2 are separately arranged opposite to the third driving coil 112 in a second direction. The main joining conductor 3 is arranged opposite to the second micro switch 101 in the second direction. The first direction is orthogonal to the second direction.

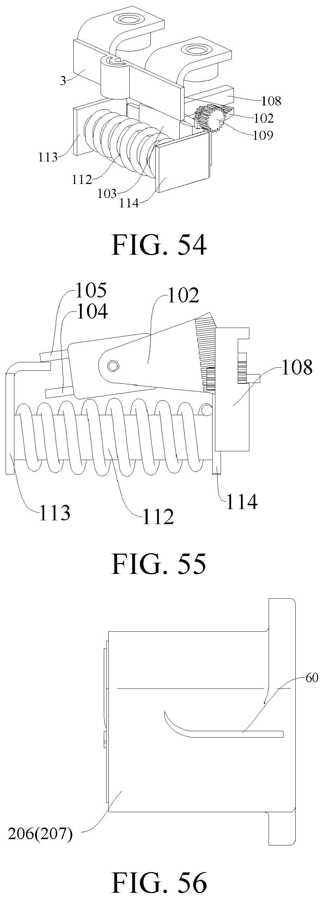

In other words, as shown in FIG. 55, the second rack portion is mounted on an upper side of the fourth gear portion 111, and the second rack portion is configured as a bar-shaped structure extending in a horizontal direction. A tooth structure extending in a length direction is arranged on a lower side of the second rack portion. The second rack portion may be meshed with the fourth gear portion 111, to perform transmission. Further, the main joining conductor 3 is arranged at one end of the second rack portion in the vertical direction, and the end portion of the second rack portion is pressed against a side wall of the main joining conductor 3.

Further, when the third driving coil 112 drives the second micro switch 101 to move around the fifth axis toward the first direction, the second rack portion pushes the main joining conductor 3 to move toward a direction close to the output terminal (the right side in FIG. 55), and when the main joining conductor 3 entirely extends in an axial direction of the third driving coil, the main joining conductor 3 is connected to the output terminal 2, so that the input terminal 1 is connected to the output terminal 2; and when the third driving coil 112 drives the second micro switch 101 to move around the fifth axis in the second direction, the second rack portion pushes the main joining conductor 3 to move toward a direction away from the output terminal (the left side in FIG. 55), so that the main joining conductor 3 is separated from the output terminal 2, causing the input terminal 1 to be disconnected from the output terminal 2. Therefore, switching of an on-off state of a high-voltage circuit is implemented.

In some embodiments, as shown in FIG. 53, the main joining conductor 3 includes a fixed portion 31 and a joining portion 33. The fixed portion 31 is fixedly connected to the first connecting terminal 1, the second driven member 108 is connected to the joining portion 33 to drive the joining portion 33 to be joined to the second connecting terminal 2. It should be noted that the main joining conductor 3 may be made of a composite material such as soft copper (silver), so that the main joining conductor 3 has a greater current-carrying capacity, thereby further reducing resistance of the main joining conductor 3. In addition, hardness of the main joining conductor 3 is less, which reduces noise in a joining process between the second connecting terminal 2 and the main joining conductor 3.

It may be understood that when the second micro switch 101 rotates around the fifth axis toward the first direction, the second rack portion moves downward, and the second rack portion exerts a downward force on the joining portion 33, causing the joining portion 33 to move downward, so that the main joining conductor 3 is disconnected from the second connecting terminal 2; and when the second micro switch 101 rotates around the fifth axis toward the second direction, the second rack portion moves upward, to drive the joining portion 33 to move upward, so that the second connecting terminal 2 is joined to the joining portion 33. Therefore, convenient switching of an on-off state of the high-voltage circuit is implemented.

In some embodiments, a weakening portion 32 is connected between a fixed portion 31 and a joining portion 33. In other words, when the second rack portion moves downward, the second rack portion exerts a downward force on the joining portion 33, causing the weakening portion 32 to elastically deform, and causing the fixed portion 31 to move relative to the joining portion 33, so that the main joining conductor 3 is disconnected from the second connecting terminal 2 of the output terminal; and when the second micro switch 101 rotates around the fifth axis toward the second direction, the second rack portion moves upward, and the elastic deformation of the weakening portion 32 recovers, so that the second connecting terminal 2 of the output terminal is joined to the joining portion 33.

Therefore, by arranging the weakening portion 32, relative movement between the fixed portion 31 and the joining portion 33 is implemented, and plastic deformation of the joining portion 33 is avoided, so that the joining portion 33 may be repeatedly attached to a side surface of the second connecting terminal 2, thereby improving stability and reliability of the contactor

In some embodiments, the weakening portion 32 is configured as an arc-shaped section, one end of the arc-shaped section is connected to the fixed portion 31, an other end of the arc-shaped section is connected to the joining portion 33, and there is a weakening cavity 321 in the weakening portion 32. In other words, as shown in FIG. 47, the weakening portion 32 may be configured as a semi-circular arc-shaped section that protrudes downward. A left end of the weakening portion 32 is connected to the fixed portion 31, and a right end of the weakening portion 32 is connected to the joining portion 33, to jointly construct the main joining conductor 3.

Further, when the second driven member 108 exerts a downward force on the joining portion 33, the weakening portion 32 is compressed and deformed, the fixed portion 31 moves relative to the joining portion 33, and the main joining conductor 3 is disconnected from the second connecting terminal 2. When the second driven member 108 moves upward, the elastic deformation of the weakening portion 32 recovers, and the second connecting terminal 2 is joined to the joining portion 33. By providing an arc-shaped weakening cavity 321 in the weakening portion 32, overall stiffness of the weakening portion 32 is further reduced, so that the weakening portion 32 is prone to elastic deformation when receiving the force transmitted by the joining portion 33, thereby reducing a size requirement of the third driving coil 112.

In some embodiments, the second micro switch 101 includes a driving portion 103 rotating around the fifth axis. The driving portion 103 is spaced apart horizontally outside the third driving coil 112. A first magnetic portion 104 and a second magnetic portion 105 that are relatively distributed are arranged on a first end (the left end in FIG. 54) of the driving portion 103. A third magnetic portion 106 and a fourth magnetic portion 107 that are relatively distributed are arranged on a second end (the right end in FIG. 54) of the driving portion 103, so that the driving portion 103 is configured as an I-shaped structure.

As shown in FIG. 47, the third driving coil 112 includes a coil body, a first magnetic conductive sheet 113, and a second magnetic conductive sheet 114. One end of the first magnetic conductive sheet 113 is connected to one end of the coil body, and an other end of the first magnetic conductive sheet 113 extends between a first magnetic portion 104 and a second magnetic portion 105. One end of the second magnetic conductive sheet 114 is connected to an other end of the coil body, and an other end of the second magnetic conductive sheet 114 extends between a third magnetic portion 106 and a fourth magnetic portion 107.

In other words, the coil body is arranged extending in a longitudinal direction, and the first magnetic conductive sheet 113 and the second magnetic conductive sheet 114 are attached and connected to positions at two ends of the coil body. A main body part of the first magnetic conductive sheet 113 and a main body part of the second magnetic conductive sheet 114 directly face each other and are attached to an end portion of the third driving coil 112. A folding plate is connected to a side of the main body part close to the driving portion 103, and the folding plate is arranged extending along an axis of the third driving coil 112. The folding plate of the first magnetic conductive sheet 113 extends between the first magnetic portion 104 and the second magnetic portion 105, and the folding plate of the first magnetic conductive sheet 113 extends between the first magnetic portion 104 and the second magnetic portion 105.

Therefore, by arranging the first magnetic conductive sheet 113 and the second magnetic conductive sheet 114, the third driving coil 112 may simultaneously drive two ends of the second micro switch 101, to drive the second micro switch 101 to rotate stably around the fifth axis, thereby implementing stable switching of an on-off state of the high-voltage circuit, reducing a size requirement for the third driving coil 112, reducing costs, and facilitating the overall layout of the contactor.

In some embodiments, the first magnetic portion 104, the second magnetic portion 105, the third magnetic portion 106, and the fourth magnetic portion 107 are all permanent magnets. The first magnetic portion 104 and the second magnetic portion 105 have opposite polarities, the third magnetic portion 106 and the fourth magnetic portion 107 have opposite polarities, and the first magnetic conductive sheet 113 and the second magnetic conductive sheet 114 have opposite polarities. It should be noted that the magnetic portions located on the same side have the same polarity. For example, the first magnetic portion 104 and the third magnetic portion 106 have the same magnetism. In addition, when a low-voltage current is passed into the third driving coil 112, the first magnetic conductive sheet 113 and the second magnetic conductive sheet 114 may generate different polarities, to drive the driving portion 103 to rotate around the fifth axis.

Specifically, an inner side of the first magnetic portion 104 and an inner side of the third magnetic portion 106 may be set as N poles, and an inner side of the second magnetic portion 105 and an inner side of the fourth magnetic portion 107 may be set as S poles. When a forward low-voltage current is passed into the third driving coil 112, the first magnetic conductive sheet 113 is an N pole and the second magnetic conductive sheet 114 is an S pole. In this case, as shown in FIG. 49, the first magnetic portion 104 and the second magnetic portion 105 act together, to enable the first magnetic conductive sheet 113 to be attached to an inner side wall of the second magnetic portion 105. In addition, the third magnetic portion 106 and the fourth magnetic portion 107 act together, to enable the second magnetic conductive sheet 114 to be attached to an inner side wall of the third magnetic portion 106, to drive the second rack portion to move upward, thereby implementing connection between the first connecting terminal 1 and the second connecting terminal 2; and when a reverse low-voltage current is passed into the third driving coil 112, the first magnetic conductive sheet 113 is an S pole and the second magnetic conductive sheet 114 is an N pole. In this case, as shown in FIG. 51, the first magnetic portion 104 and the second magnetic portion 105 act together, to enable the first magnetic conductive sheet 113 to be attached to an inner side wall of the first magnetic portion 104. In addition, the third magnetic portion 106 and the fourth magnetic portion 107 act together, to enable the second magnetic conductive sheet 114 to be attached to an inner side wall of the fourth magnetic portion 107, to drive the second driven member 108 to move downward, so that the first connecting terminal 1 is disconnected from the second connecting terminal 2.

Through the foregoing arrangement, when the third driving coil 112 is energized, the first end and the second end of the driving portion 103 may receive forces in opposite directions, so that the driving portion 103 may stably rotate around the fifth axis, thereby driving the main joining conductor 3 to move, and implementing stable switching of the on-off state of the high-voltage circuit.

In some embodiments, as shown in FIG. 45, the contactor according to an embodiment of the present disclosure further includes: a housing 206. A first connecting terminal 1 and a second connecting terminal 2 are mounted on the housing 206. A main joining conductor 3, a second transmission assembly 100, a 1st third driving coil 112, and a 2nd third driving coil 112 are all mounted in the housing 206, and a second driven member 108 slide-fits an inner peripheral wall of the housing 206.

In other words, as shown in FIG. 45, the housing 206 is entirely constructed as a rectangular structure, and legs 76 that protrude outward are arranged at diagonal positions of the housing 206. Mounting holes 72 running through in a thickness direction are provided on the legs 76, and a connector may pass through the mounting holes 72 to fix a contactor. An external structure of the housing 206 is consistent with that of a conventional contactor, which facilitates structural design and material switching. It should be noted that an opening is provided on a side wall of the housing 206. A low-voltage signal line may pass through the housing 206 through the opening to be electrically connected to an external power supply. An operator may control on or off of the contactor through an external switch. The low-voltage signal line may also be designed as a connector.

Further, as shown in FIG. 46, the housing 206 has a cavity structure that opens outward, a cover plate structure 73 is arranged on an opening end, and through holes corresponding to the first connecting terminal 1 and the second connecting terminal 2 are provided on the cover plate structure 73. Upper parts of the first connecting terminal 1 and the second connecting terminal 2 may extend into the through holes, to be mounted on the cover plate structure 73, and remain relatively stable with the housing 206, so that the main joining conductor 3 may move relative to the second connecting terminal 2. Remaining parts of the first connecting terminal 1 and the second connecting terminal 2, the main joining conductor 3, the second transmission assembly 100, and the third driving coil 112 are all sealed in the housing 206 through the cover plate structure 73, thereby being separated from the outside world, to prevent external impurities from entering the housing 206, and simultaneously play the role of insulation protection. In addition, the inner peripheral wall of the housing 206 may limit a position of the second driven member 108, so that the second driven member 108 may slide in a same direction relative to the inner peripheral wall, to ensure stability of a movement path of the main joining conductor 3, and improve reliability of a working process of the contactor.

In some embodiments, a sliding guide groove 74 is provided on the inner peripheral wall of the housing 206, and a second rack portion of the second driven member 108 slide-fits the sliding guide groove 74. As shown in FIG. 52, the sliding guide groove 74 is arranged extending in a height direction, and an opening size of the sliding guide groove 74 is equal to a width size of a lower end of the second rack portion. When the second rack portion is mounted on the sliding guide groove 74, the sliding guide groove 74 may limit a position of the second rack portion, so that the second rack portion may reciprocate in a vertical direction, thereby ensuring a reliable contact and disengagement process between the main joining conductor 3 and the first connecting terminal 1, and improving stability of the contactor.

In some embodiments, the contactor according to an embodiment of the present disclosure further includes: a temperature sensor and a controller. The temperature sensor is electrically connected to the controller, and the temperature sensor is configured to detect circuit signals of the first connecting terminal 1, the second connecting terminal 2, and/or the main joining conductor 3. The controller is configured to control the main joining conductor 3 to be joined to or disconnected from the second connecting terminal 2 according to the circuit signal. The circuit signal includes: a temperature change, a voltage change, and a current change. In other words, a temperature sensor may be arranged for monitoring the main joining conductor 3, or the temperature sensor may be arranged for detecting the first connecting terminal 1 and the second connecting terminal 2, or the temperature sensor may be arranged for simultaneously detecting the first connecting terminal 1, the second connecting terminal 2, and the main joining conductor 3, thereby obtaining a temperature change, a voltage change, and a current change of a high-voltage circuit.

It may be understood that as the first connecting terminal 1 is connected to the second connecting terminal 2 through the main joining conductor 3, a current amount and a heat generation amount of the high-voltage circuit change, and temperature changes correspondingly occur. The temperature sensor may obtain change information (including a temperature change, a voltage change, and a current change) in a working process of the high-voltage circuit, and transmit the change information to a controller in the form of a circuit signal. The controller determines whether a cut-off threshold of the high-voltage circuit is reached according to the circuit signal, and when the high-voltage circuit needs to be turned off, controls the driving assembly to enable the second connecting terminal 2 to be electrically disconnected from the main joining conductor 3. A fuse does not need to be arranged, to reduce a high-voltage loss and a cost.

In addition, after the contactor is controlled to be turned off, if electrical equipment using the contactor of the present disclosure needs to continue to work, the controller may implement joining between the second connecting terminal 2 and the main joining conductor 3 through the driving assembly, to ensure that a high voltage may be supplied to the electrical equipment, thereby improving security. For example, the contactor of the present disclosure is used in an electric vehicle, when the circuit information indicates that the contactor needs to be turned off but the vehicle is in a dangerous condition and needs to maintain a working condition, the upper high-voltage power state may be maintained. In addition, after the vehicle drives to a secure position or the dangerous condition is eliminated, the second connecting terminal 2 is electrically disconnected from the main joining conductor 3.

In some embodiments, as shown in FIG. 6, the charging and distribution system 1000 according to an embodiment of the present disclosure includes: the contactor in the foregoing embodiment. The contactor is configured as a main positive contactor 100a, a main negative contactor 100b, and a pre-charge contactor 100c.

Specifically, the charging and distribution system 1000 includes: a battery terminal interface, an electronic control terminal interface, and a direct current charging interface. The direct current charging interface and the electronic control terminal interface are arranged at a same end of a housing of a contactor, and the battery terminal interface is arranged at an other end of the housing. A main positive contactor 100a is arranged on both a positive side of the direct current charging interface and a positive side of the battery terminal interface, and a main negative contactor 100b is arranged on both a negative side of the direct current charging interface and a negative side of the battery terminal interface. A pre-charge circuit is further arranged on the positive side of the battery terminal interface, and a pre-charge contactor 100c is arranged on the pre-charge circuit in series with the pre-charge resistor and in parallel with the main positive contactor 100a.

According to the charging and distribution system 1000 in the embodiment of the present disclosure, by using the contactor, multi-level gear transmission is arranged between the second micro switch 101 and the main joining conductor 3, to amplify or reduce the movement of the second micro switch 101, so that the second micro switch 101 has a greater stroke range, and when the third driving coil 112 drives the second micro switch 101, a movement process of the main joining conductor 3 is gentle and stable, thereby reducing an impact force when the main joining conductor 3 is joined, reducing closing noise, and improving the stability of the contactor, which may extend working stability, improve use security, and extend service life of the charging and distribution system 1000.

As shown in FIG. 6 and FIG. 56 to FIG. 67, according to the distributor 2000 in an embodiment of the present disclosure, the fourth contactor K4 and/or the fifth contactor K5 include: a driving apparatus 40 and a joining busbar 30, the joining busbar 30 includes a first conducting section 301 and a second conducting section 302, the first conducting section 301 and the second conducting section 302 are connected to each other and are rotable relative to each other, the first conducting section 301 is fixed on the corresponding input terminal, and the second conducting section 301 is selectively electrically connected to or disconnected from the corresponding output terminal; and the driving apparatus 40 is configured to drive the second conducting section 302 to move toward or away from the output terminal; where the input terminal and the output terminal are separately arranged opposite to the joining busbar 30 in a third direction, at least one of the joining busbar 30, the input terminal, and the output terminal is arranged opposite to the driving apparatus 40 in a fourth direction, and the third direction is orthogonal to the fourth direction. Through such arrangement, the input terminal may be selectively connected to the output terminal.

Further, the driving apparatus 40 includes: a third micro switch 402 and a fourth driving coil 401, where the third micro switch 402 is arranged opposite to the fourth driving coil 401 in the third direction, the third micro switch 402 is suitable for swinging around a fixed axis under an action of a magnetic force of the fourth driving coil 401, the third micro switch 402 is configured to drive the second conducting section 302 to move toward or away from the output terminal, the fourth driving coil 401 is arranged opposite to the input terminal and the output terminal in the fourth direction, and the third micro switch 402 is arranged opposite to the joining busbar 30 in the fourth direction.

Further, the third micro switch 402 includes: a driving platform 403 and a connecting frame 404, where one end of the connecting frame 404 is connected to the driving platform 403, an other end of the connecting frame 404 is connected to the second conducting section 302, the driving platform 403 is suitable for swinging under the action of the magnetic force of the fourth driving coil 401, and the driving platform 403 is configured to drive the connecting frame 404 to swing, and then drive the second conducting section 302 to move toward or away from the output terminal.

The contactor of the embodiment is described in detail below with reference to FIG. 6 and FIG. 56 to FIG. 67.

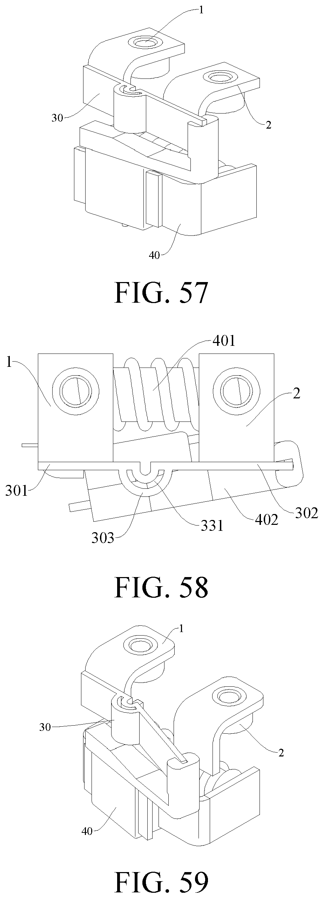

As shown in FIG. 57 to FIG. 60 and FIG. 63, the contactor of the embodiment of the present disclosure includes: a first connecting terminal 1, a second connecting terminal 2, a joining busbar 30, and a driving apparatus 40.

The joining busbar 30 includes: a first conducting section 301 and a second conducting section 302. The first conducting section 301 and the second conducting section 302 are connected to each other and are rotable relative to each other, the first conducting section 301 is fixed on the first connecting terminal 1, and the second conducting section 302 is selectively electrically connected to or disconnected from the second connecting terminal 2; and the driving apparatus 40 is configured to drive the second conducting section 302 to move toward or away from the second connecting terminal 2, the first connecting terminal 1 and the second connecting terminal 2 are separately arranged opposite to the joining busbar 30 in a third direction and, and at least one of the joining busbar 30, the first connecting terminal 20, and the first connecting terminal 1 is arranged opposite to the driving apparatus 40 in a fourth direction. The third direction is orthogonal to the fourth direction.

Specifically, the first connecting terminal 1 is selectively electrically connected to or disconnected from the second connecting terminal 2 through the joining busbar 30. The driving apparatus 40 is configured to drive the joining busbar 30 to move between a first position and a second position, to implement connection and disconnection between the first connecting terminal 1 and the second connecting terminal 2. In other words, the first position corresponds to a position at which the first connecting terminal 1 is connected to the second connecting terminal 2, and the second position corresponds to a position at which the first connecting terminal 1 is disconnected from the second connecting terminal 2.

It should be noted that relative rotation between the first conducting section 301 and the second conducting section 302 means that the two may be connected through a conductive rotary connection structure to implement relative rotation, may also be connected (in other words, at least a part of the joining busbar 30 is configured as a flexible structure) through a flexible structural member and implement relative rotation through bending of the flexible structure, and may further enable the joining busbar 30 to be constructed as a flexible member and implement relative rotation through bending. By using the foregoing structure, in a rotation process of the second conducting section 302, bending wear of the joining busbar 30 is smaller, which may extend the service life of the joining busbar 30, to improve the service life of the contactor.

Further, as shown in FIG. 57 and FIG. 59, the joining busbar 30 is arranged opposite to the first connecting terminal 1 and the second connecting terminal 2 in a third direction, and the joining busbar 30 is arranged opposite to the driving apparatus 40 in a fourth direction. For example, the third direction corresponds to a length direction or a width direction on a horizontal plane, and the fourth direction corresponds to a height direction. Then the first connecting terminal 1, the second connecting terminal 2, and the joining busbar 30 are arranged at the same height. The driving apparatus 40 is located above or below the joining busbar 30, to reduce a size of the contactor in a height direction.

According to the contactor in the embodiment of the present disclosure, the joining busbar 30, the first connecting terminal 1, and the second connecting terminal 2 are arranged opposite to each other in the third direction. By arranging the driving apparatus 40 opposite to the joining busbar 30 in the fourth direction, space occupied by the contactor may be improved, and an overall length of the contactor may be shortened, which may improve an overall structural strength of the contactor, reduce a probability that the contactor easily breaks from a middle region in a usage environment in which vibrations always occur in the vehicle 10000, and extend the service life of the contactor.

In addition, through the foregoing arrangement, layered setting of the contactor may be implemented, and high and low voltage isolation (an upper layer is a high-voltage conducting part and a lower layer is a low-voltage control part) may be implemented, so that an arc extinguishing manner is no longer limited to a manner of a combination of inert gas and magnetic blowing arc extinguishing. Through a manner of overall infiltration of insulating liquid, an arc extinguishing structure may be implemented or may not be set. Based on diversity of the arc extinguishing manner, there is no need to insulate the driving apparatus 40 from a cavity, which may resolve a problem of low voltage failure. In addition, there is no need to inject the inert gas, and there is no need to perform processing on the contactor by using ceramic and metal brazing processes, which may also simplify a processing technology of the contactor, and reduce a material process. When production efficiency is improved, a processing cost of the contactor may also be reduced.

The first connecting terminal 1 is fixed to the first conducting section 301, and the second connecting terminal 2 is selectively electrically connected to the second conducting section 302, which may also reduce a quantity of moving contact points, reduce a quantity of high-voltage power consumption problems caused by moving contact points, reduce a quantity of arcs, and reduce a quantity of sticking points, and may further reduce action wear caused by the contactor during circuit control. This is summarized as reducing a quantity of risk points and power losses.

In a working process of the contactor, the second conducting section 302 hits the second connecting terminal 2 and generate working noise. To reduce the working noise of the contactor, the joining busbar 30 of the present disclosure may be constructed as a flexible member, and may be made of a flexible metal material (for example, a soft copper composite material and a soft silver composite material), to reduce impact noise and improve use experience of the contactor. In addition, use of the flexible metal material may increase a current, reduce contact resistance between the second connecting terminal 2 and the joining busbar 30, and reduce a probability of adhesion between the two.

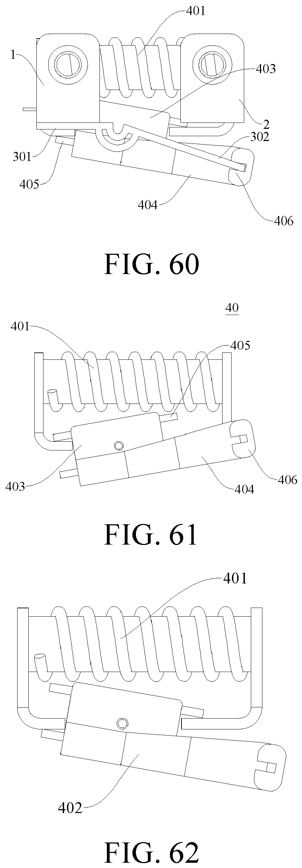

As shown in FIG. 61 and FIG. 62, according to some embodiments of the present disclosure, the driving apparatus 40 includes: a third micro switch 402 and a fourth driving coil 401, where the third micro switch 402 is arranged opposite to the fourth driving coil 401 in the third direction, the third micro switch 402 is suitable for swinging around a fixed axis under an action of a magnetic force of the fourth driving coil 401, the third micro switch is configured to drive, by using the magnetic force, the second conducting section 302 to move toward or away from the second connecting terminal 2, the fourth driving coil 401 is arranged opposite to the first connecting terminal 1 and the second connecting terminal 2 in the fourth direction, and the third micro switch 402 is arranged opposite to the joining busbar 30 in the fourth direction.

Specifically, the third micro switch 402 is arranged opposite to the fourth driving coil 401 in the third direction. The fourth driving coil 401 generates a magnetic force to drive the third micro switch 402 to rotate around a fixed axis. The third micro switch 402 is connected to the joining busbar 30 and is relatively arranged in the fourth direction to drive the joining busbar 30 to move. Both the first connecting terminal 1 and the second connecting terminal 2 are located above or below the fourth driving coil 401, thereby facilitating high and low voltage isolation between the low voltage control part and the high voltage conducting part.

As shown in FIG. 61 to FIG. 64, the third micro switch 402 includes: a driving platform 403 and a connecting frame 404, where one end of the connecting frame 404 is connected to the driving platform 403, an other end of the connecting frame 404 is connected to the second conducting section 302, the driving platform 422 is suitable for swinging under the action of the magnetic force of the fourth driving coil 401, and the driving platform 403 is configured to drive the connecting frame 404 to swing, and then drive the second conducting section 42 to move toward or away from the second connecting terminal 2.

In other words, rotation of the third micro switch 402 around the fixed axis is implemented through cooperation between the driving platform 403 and the fourth driving coil 401 . A connecting frame 404 is arranged above the driving platform 403. The connecting frame 404 and the driving platform 403 are integrally formed or fixedly connected. The driving platform 403 may rotate synchronously with the connecting frame 404. The connecting frame 404 is connected to the second conducting section 302, to drive the second conducting section 302 to swing relative to the first conducting section 301, to improve smoothness of the movement of the joining busbar 30.

Preferably, a connection region between the first conducting section 301 and the second conducting section 302 is arranged opposite to the driving platform 403 in the fourth direction, so that synchronization of the swing of the driving platform 403 and the first conducting section 32 is higher, control accuracy may be improved, and arrangement of the contactors is more compact, which may improve integration of the contactors.

In some embodiments, the connection region between the first conducting section 301 and the second conducting section 302 is arranged opposite to a rotation center of the third micro switch 402 in the fourth direction. In other words, a swing center of the second conducting section 302 is coaxial with a rotation center (namely, a rotation center of the third micro switch 402) of the driving platform 403, which further improves movement synchronization, control accuracy, and structural integration of the two.

In some embodiments, an other end of the connecting frame 404 is connected to one end of the second conducting section 22 away from the first conducting section 21, or an other end of the connecting frame 404 is connected to an other end of the second conducting section 22 close to the first conducting section 21.

In other words, in some embodiments, the connecting frame 404 is connected to one end of the second conducting section 22 away from the first conducting section 21, to drive the second conducting section 22 to move toward or away from the second connecting terminal 2. In some other embodiments, the connecting frame 404 is connected to one end of the second conducting section 22 close to the first conducting section 21, to drive the second conducting section 22 to move toward or away from the second connecting terminal 2.

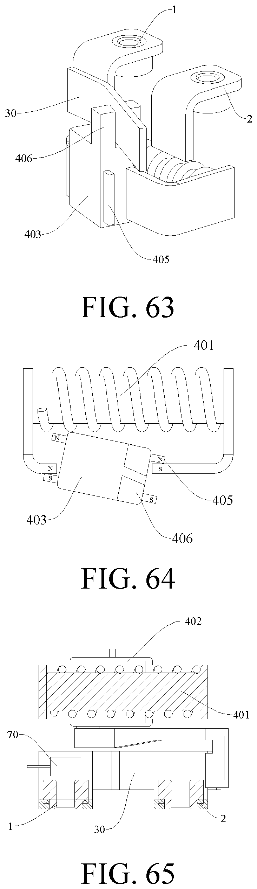

In some embodiments, an other end of the connecting frame 404 is formed into a clamping portion 406. Specifically, in the first embodiment shown in FIG. 61 and FIG. 62, the clamping portion 406 clamps one end of the second conducting section 302 away from the first conducting section 301, to effectively amplify a stroke of the third micro switch 402; or in the second embodiment shown in FIG. 63 and FIG. 64, the clamping portion 406 clamps an other end of the second conducting section 302 close to the first conducting section 301. In the second embodiment, compared with the first embodiment, a length of two ends of the connecting frame 404 may be set shorter, so that the connecting frame 404 is smaller in size, which is beneficial to lightweight and compact setting of the contactor.

As shown in FIG. 61 and FIG. 62, permanent magnets 405 are arranged on four corner regions of the driving platform 403. Magnetic conductive sheets are respectively arranged at two ends of the fourth driving coil 401. The magnetic conductive sheet at one end of the fourth driving coil 401 is suitable for attracting two permanent magnets at one end of the driving platform 403. The magnetic conductive sheet at an other end of the fourth driving coil 401 is suitable for attracting the two permanent magnets at an other end of the driving platform 403. The two permanent magnets 405 located at the same end of the driving platform 403 have opposite polarities.

It may be understood that after the fourth driving coil 401 is energized, polarities of the magnetic conductive sheets at two ends are different from each other, and polarities of the two permanent magnets 405 located at one end of the fourth driving coil 401 on the same side are different from each other, so that one end of the driving platform 403 may move toward the fourth driving coil 401, and an other end may move away from the fourth driving coil 401.

Certainly, a structure of the present disclosure is not limited thereto, and two permanent magnets 405 may also be arranged at only one end of the driving platform 403, or one permanent magnet 405 is arranged at two ends respectively, so that the permanent magnet 405 is correspondingly located in the corner region. In other words, the third micro switch 402 is driven to rotate under an action of a polar suction force or a polar repulsion force.

In this way, by arranging the permanent magnet 405, a working state of the contactor may be maintained through magnetic attraction of the permanent magnet 405. In other words, the contactor may stay at a first position or a second position. The fourth driving coil 401 in the low-voltage control part does not need to be continuously energized, to reduce the low-voltage loss, and improve an energy consumption ratio of the contactor.

In the specific embodiment shown in FIG. 58, a distance between a free end of the permanent magnet 405 and a rotation center of the third micro switch 402 is less than a distance between a contact point between the second connecting terminal 2 and the second conducting section 302 and a rotation center of the third micro switch 402.

In other words, a distance between one end of the permanent magnet 405 and the rotation center of the third micro switch 402 is L1; and a distance between the contact point between the second connecting terminal 2 and the second conducting section 302 and the rotation center of the third micro switch 402 is L2, where L1<L2. In this way, a movement stroke of the second conducting section 22 is greater than a movement stroke of the third micro switch 33, and a stroke of the third micro switch 402 may be amplified, to meet an electrical clearance requirement of the high-voltage circuit to which the contactor is connected.

As shown in FIG. 64, in a specific embodiment, the driving apparatus 40 further includes a rotation axis, and the driving platform 403 is connected to the rotation axis and is suitable for rotating around the rotation axis; the permanent magnet 405 includes a first magnetic pole, a second magnetic pole, a third magnetic pole, and a fourth magnetic pole. The first magnetic pole and the second magnetic pole have opposite polarities and are spaced apart at one end of the driving platform 403. The third magnetic pole and the fourth magnetic pole have opposite polarities and are spaced apart at an other end of the driving platform 403. The first magnetic pole and the third magnetic pole have the same polarity and are arranged close to the fourth driving coil 401, and the second magnetic pole and the fourth magnetic pole have the same polarity and are arranged away from the fourth driving coil 401; and the magnetic conductive sheet includes a first magnetic conductive sheet and a second magnetic conductive sheet. One end of the first magnetic conductive sheet is connected to one end of the fourth driving coil 401, and an other end of the first magnetic conductive sheet is arranged between the first magnetic pole and the second magnetic pole. One end of the second magnetic conductive sheet is connected to an other end of the fourth driving coil 401, and an other end of the second magnetic conductive sheet is arranged between the third magnetic pole and the fourth magnetic pole.

For example, the first magnetic pole is an N pole, the second magnetic pole is an S pole, the third magnetic pole is an N pole, and the fourth magnetic pole is an S pole. The first magnetic pole and the second magnetic pole are arranged at the same end of the driving platform 403, and the third magnetic pole and the fourth magnetic pole are arranged at an other end of the driving platform 403. When the fourth driving coil 401 is energized in a first current direction, the first magnetic pole and the first magnetic conductive sheet are magnetically attracted, and the third magnetic pole and the second magnetic conductive sheet are magnetically attracted. When the fourth driving coil is energized in a second current direction, the second magnetic pole and the first magnetic conductive sheet are magnetically attracted, and the fourth magnetic pole and the second magnetic conductive sheet are magnetically attracted. A current direction of the first current direction is opposite to a current direction of the second current direction.

Further, the driving platform 403 is constructed as an insulating member or the driving platform 403 is coated with an insulating layer. In this way, the second conducting section 302 is arranged on the connecting frame 404, and correspondingly, the driving platform 403 is an insulating member or is coated with an insulating layer, which may improve a high and low voltage isolation effect between the high-voltage conducting part and the low-voltage control part, to avoid high-voltage breakdown leading to low-voltage failure, and improve working stability of the contactor.

As shown in FIG. 58 and FIG. 60, according to some embodiments of the present disclosure, the joining busbar 30 further includes: a flexible connection portion 303. The flexible connection portion 303 is connected to a first conducting section 301 and a second conducting section 302, and is located between the first conducting section 301 and the second conducting section 302. The second conducting section 302 may swing relative to the flexible connection portion 303 to move toward or away from a second connecting terminal 2.

Specifically, two ends of the flexible connection portion 303 are connected to the first conducting section 301 and the second conducting section 302 respectively. The flexible connection portion 303 is bentable, so that the second conducting section 302 may move toward or away from the second connecting terminal 2, thereby improving convenience of switching the contactor between a first position and a second position. In addition, by arranging the flexible connection portion 303, bending wear of the joining busbar 30 may be reduced, thereby extending the service life of the joining busbar 30, and increasing the service life of the contactor.

Further, an arc-shaped groove 331 is provided in the flexible connection portion 303, and the arc-shaped groove 331 runs through the flexible connection portion 303 in a height direction of the joining busbar 30. In this way, by providing a gap, in a bending process of the flexible connection portion 303, specific bending deformation may be absorbed through deformation of the arc-shaped groove 331, to further reduce the bending wear of the flexible connection portion 303, and to effectively increase the service life of the joining busbar 30.

As shown in FIG. 65, in some embodiments, the contactor further includes: a sensor 70, where the sensor 70 is arranged adjacent to a first connecting terminal 1 or a second connecting terminal 2 or the joining busbar 30 and is configured to detect a circuit signal of the first connecting terminal 1 or the second connecting terminal 2 or the joining busbar 30 in real time; and a controller, where the controller is electrically connected to the sensor 70, and is suitable for controlling the driving apparatus 40 to turn off or turn on the contactor according to a circuit signal.

In this way, by arranging the controller and the sensor 70, as the first connecting terminal 1 is connected to the second connecting terminal 2 through the joining busbar 30, both a current of a high-voltage circuit and a heat generation amount change, and temperature changes correspondingly occur. The sensor 70 may obtain change information (a temperature change, a current change, and the like) in a working process of the high-voltage circuit, and transmit the change information to a controller in the form of a circuit signal. The controller determines whether a cut-off threshold (a temperature threshold, a voltage threshold, and a current threshold) of the high-voltage circuit is reached according to the circuit signal, and when the high-voltage circuit needs to be turned off, controls driving apparatus 40 to enable the second end 32 to be electrically disconnected from the second connecting terminal 2. A fuse does not need to be arranged, to reduce a high-voltage loss and a cost, and after controlling the contactor to be turned off, if electrical equipment using the contactor of the present disclosure needs to continue to work, it may also be ensured that an upper high voltage may be supplied to the electrical equipment, which may improve security.

Specifically, as shown in FIG. 67, a thermistor and a voltage conversion principle corresponding to the thermistor is: V=(NTC/(NTC+R))×VCC, where V is an input voltage, VCC is a standard voltage, R is a fixed resistor, and NTC is a thermistor; and therefore, a calculation manner of a circuit signal AD is: AD=(V/VCC)×2n=(NTC/(NTC+R))×2n.

In this way, by obtaining a voltage value of the thermistor, the required circuit signal may be converted.

It should be noted that after the fuse blows, the high-voltage circuit is completely turned off. In the present disclosure, by arranging the controller and the sensor 70, even if the high-voltage circuit needs to be turned off based on the information obtained from the sensor 70, under an extreme condition, the upper high-voltage power may still be supplied to improve security. For example, the contactor of the present disclosure is used in an electric vehicle 10000, when the circuit information indicates that the contactor needs to be turned off but the vehicle 10000 is in a dangerous condition and needs to maintain a working condition, the upper high-voltage power state may be maintained. In addition, after the vehicle 10000 drives to a secure position or the dangerous condition is eliminated, the second terminal 32 is electrically disconnected from the second connecting terminal 2.

Further, the controller is configured to obtain a temperature, a voltage, or a current of the first connecting terminal 1 or the second connecting terminal 2 or the joining busbar 30 according to the circuit signal; and

the controller is configured to enable the second conducting section 302 to be electrically disconnected from the second connecting terminal 2 when the temperature of the first connecting terminal 1 or the second connecting terminal 2 or the joining busbar 30 is greater than a first temperature threshold; and/or the voltage of the first connecting terminal 1 or the second connecting terminal 2 or the joining busbar 30 is greater than a first voltage threshold; and/or the current of the first connecting terminal 1 or the second connecting terminal 2 or the joining busbar 30 is greater than a first current threshold.

The controller is further configured to enable the second conducting section 302 to be electrically connected to the second connecting terminal 2 when the temperature of the first connecting terminal 1 or the second connecting terminal 2 or the joining busbar 30 is less than a second temperature threshold; and/or the voltage of the first connecting terminal 1 or the second connecting terminal 2 or the joining busbar 30 is less than a second voltage threshold; and/or the current of the first connecting terminal 1 or the second connecting terminal 2 or the joining busbar 30 is less than a second current threshold. The second temperature threshold is less than or equal to the first temperature threshold, the second voltage threshold is less than or equal to the first voltage threshold, and the second current threshold is less than or equal to the first current threshold.

In other words, the contactor of the present disclosure, by arranging the sensor and the controller, may be turned off when the voltage of the high-voltage circuit to which the contactor is connected exceeds a set first voltage threshold, the current exceeds a set first current threshold, or the temperature exceeds a set first temperature threshold, to improve usage security of the contactor, reduce security hazards of the high-voltage circuit, and avoid burnout of the contactor.

Further, when the voltage of the high-voltage circuit connected to the contactor drops below a set second voltage threshold, the current drops below the set first current threshold, or the temperature drops below the set first temperature threshold, may control the contactor to be turned on again, so that the high-voltage circuit connected to the contactor may be switched to a working state in time, which may effectively improve the usage security, and reduce property losses.

As shown in FIG. 56, according to some embodiments of the present disclosure, the contactor further includes: a housing 206. The housing 206 defines accommodating space. Ajoining busbar 30, a first connecting terminal 1 , a second connecting terminal 2, and a driving apparatus 40 each are arranged in the accommodating space. At least a part of the first connecting terminal 1 and the second connecting terminal 2 protrudes from the housing 206. In this way, through arrangement of the housing 206, the driving apparatus 40 may be separated from the outside world, thereby improving the working stability, simultaneously reducing interference of the external environment to the fourth driving coil 401 and the third micro switch 402, and improving control response efficiency of the low-voltage control part.

Further, a low-voltage signal terminal 60 is further arranged outside the housing 206. The low-voltage signal terminal 60 is pluggably arranged on the housing 206 and is connected to the fourth driving coil 401. In some embodiments, a wire harness outlet is provided on the housing 206, and the low-voltage signal terminal 60 is led out of the housing through the wire harness outlet. In some other embodiments, the low-voltage signal terminal 60 is fixed on the housing 206 in a plug-in manner, and a plug-in interface is correspondingly arranged on the housing 206. The plug-in interface introduces a metal wire into the housing 206 to be electrically connected to the fourth driving coil 401, so that appearance of the contactor of the present disclosure is consistent with appearance of the conventional contactor, which facilitates structural design and material switching, and may reduce a research and development cycle and development costs.

The charging and distribution system 1000 according to an embodiment of the present disclosure includes the distributor 2000 in the foregoing embodiment.

The charging and distribution system 1000 according to an embodiment of the present disclosure, by arranging the distributor 2000 in the foregoing embodiment, may integrate a pre-charge resistor 9 and a plurality of direct current contactors. Layout of the distributor 2000 is simple, which may reduce space occupied by a plurality of contactors, and may also reduce a cost of the distributor 2000. In addition, the charging and distributing system 1000 may also meet the charging and discharging requirement of the vehicle.

The vehicle 10000 according to the embodiment of the present disclosure includes the charging and distribution system 1000 according to the foregoing embodiment.

The vehicle 10000 according to the embodiment of the present disclosure, by arranging the charging and distribution system 1000 in the foregoing embodiment, may integrate a pre-charge resistor 9 and a plurality of direct current contactors. Layout of the distributor 2000 is simple, which may reduce space occupied by a plurality of contactors, and may also reduce a cost of the distributor 2000. In addition, layout of the charging and distributing system 1000 may be simple, and the space occupied by the charging and distribution system 1000 may be reduced. In addition, the charging and distributing system 1000 may also meet the charging and discharging requirement of the vehicle.

The distributor 2000 in the foregoing embodiment is arranged on the charging pile 20000 according to an embodiment of the present disclosure.

The charging pile 20000 according to an embodiment of the present disclosure, by arranging the distributor 2000 in the foregoing embodiment, may integrate a pre-charge resistor 9 and a plurality of direct current contactors. Layout of the distributor 2000 is simple, which may reduce space occupied by a plurality of contactors, and may also reduce a cost of the distributor 2000. In addition, layout of the charging pile 20000 may be simple, and the space occupied by the charging pile 20000 may be reduced. In addition, the charging pile 20000 may also meet the charging and discharging requirement of the vehicle.

In the descriptions of this specification, descriptions using reference terms "an embodiment", "some embodiments", "an exemplary embodiment", "an example", "a specific example", or "some examples" mean that specific characteristics, structures, materials, or features described with reference to the embodiment or example are included in at least one embodiment or example of the present disclosure. In this specification, schematic descriptions of the foregoing terms do not necessarily point at a same embodiment or example. In addition, the described specific features, structures, materials, or characteristics may be combined in a proper manner in any one or more of the embodiments or examples.

Although the embodiments of the present disclosure have been shown and described, a person of ordinary skill in the art is to be understood that various changes, modifications, replacements, and variations may be made to the embodiments without departing from the principles and spirit of the present disclosure, and the scope of the present disclosure is as defined by the appended claims and their equivalents.

## Claims

1. A distributor (2000), comprising:
an outer housing (200);
a direct current charging interface (201), an electronic control terminal interface (202), and a battery terminal interface (203), the direct current charging interface (201), the electronic control terminal interface (202), and the battery terminal interface (203) each being arranged in the outer housing (200);
a first contactor (K1), the first contactor (K1) being connected between a positive terminal of the electronic control terminal interface (202) and a positive terminal of the battery terminal interface (203);
a second contactor (K2), the second contactor (K2) being connected between a negative terminal of the electronic control terminal interface (202) and a negative terminal of the battery terminal interface (203);
a third contactor (K3) and a pre-charge resistor (9), the third contactor (K3) and the pre-charge resistor (9) being connected in series to form a pre-charge branch; the pre-charge branch and the first contactor (K1) being connected in parallel, and the pre-charge branch being connected between the positive terminal of the electronic control terminal interface (202) and the positive terminal of the battery terminal interface (203); or the pre-charge branch and the second contactor (K2) being connected in parallel, and the pre-charge branch being connected between the negative terminal of the electronic control terminal interface (202) and the negative terminal of the battery terminal interface (203);
a fourth contactor (K4), the fourth contactor (K4) being connected between a positive terminal of the direct current charging interface (201) and the positive terminal of the battery terminal interface (203); and
a fifth contactor (K5), the fifth contactor (K5) being connected between a negative terminal of the direct current charging interface (201) and the negative terminal of the battery terminal interface (203),
the first contactor (K1), the second contactor (K2), the third contactor (K3), the pre-charge resistor (9), the fourth contactor (K4), and the fifth contactor (K5) each being selectively turned on or off and each being located in the outer housing (200).

2. The distributor (2000) according to claim 1, further comprising: a first inner shell (204), the first inner shell (204) being fixedly arranged in the outer housing (200), the first contactor (K1), the second contactor (K2), the third contactor (K3), and the pre-charge resistor (9) being integrated in the first inner shell (204), both an input terminal and an output terminal of the first contactor (K1) being arranged on the first inner shell (204), and both an input terminal and an output terminal of the second contactor (K2) being arranged on the first inner shell (204).

3. The distributor (2000) according to claim 2, wherein both the first contactor (K1) and the second contactor (K2) comprise: a main joining conductor (3), wherein the main joining conductor (3) is connected to the corresponding input terminal, and the main joining conductor (3) is selectively electrically connected to the corresponding output terminal; and
the third contactor (K3) comprises a pre-charge joining conductor (91), the pre-charge joining conductor (91) and the pre-charge resistor (9) are separately connected to the input terminal and the output terminal of one of the first contactor (K1) and the second contactor (K2), and the pre-charge joining conductor (91) is selectively electrically connected to the pre-charge resistor (9).

4. The distributor (2000) according to claim 3, wherein a driving assembly (4) is arranged in the first inner shell (204), and the driving assembly (4) is configured to drive the main joining conductor (3) to be electrically connected to the corresponding output terminal, and is further configured to drive the pre-charge joining conductor (91) to be electrically connected to the pre-charge resistor (9).

5. The distributor (2000) according to claim 4, wherein the driving assembly (4) comprises: a first fan-shaped portion (411), a second fan-shaped portion (412), and a third fan-shaped portion (413), wherein the main joining conductor (3) comprises a first joining conductor (3a) and a second joining conductor (3b), the first fan-shaped portion (411) is configured to push the first joining conductor (3a) and release the push on the first joining conductor (3a), the second fan-shaped portion (412) is configured to push the second joining conductor (3b) and release the push on the second joining conductor (3b), the third fan-shaped portion (413) is configured to push the pre-charge joining conductor (91) and release the push on the pre-charge joining conductor (91), the first joining conductor (3a) is connected to the input terminal of the first contactor (K1), the first joining conductor (3a) is selectively electrically connected to the output terminal of the first contactor (K1), the second joining conductor (3b) is connected to the input terminal of the second contactor (K2), and the second joining conductor (3b) is selectively electrically connected to the output terminal of the second contactor (K2), wherein
the first joining conductor (3a) is arranged opposite to the output terminal of the first contactor (K1), the second joining conductor (3b) is arranged opposite to the output terminal of the second contactor (K2), when the first fan-shaped portion (411) pushes the first joining conductor (3a), the first joining conductor (3a) is connected to the output terminal of the first contactor (K1), when the second fan-shaped portion (412) pushes the second joining conductor (3b), the second joining conductor (3b) is connected to the output terminal of the second contactor (K2), and when the third fan-shaped portion (413) pushes the pre-charge joining conductor (91), the pre-charge joining conductor (91) is connected to the pre-charge resistor (9).

6. The distributor (2000) according to claim 5, wherein the driving assembly (4) further comprises: a first power source (42) and a first transmission rod (43), wherein the first power source (42) is connected to an end portion of the first transmission rod (43) and is configured to drive the first transmission rod (43) to rotate, the first fan-shaped portion (411), the second fan-shaped portion (412), and the third fan-shaped portion (413) each are arranged on the first transmission rod (43), the first fan-shaped portion (411), the second fan-shaped portion (412), and the third fan-shaped portion (413) each rotate synchronously around a first axis, wherein the first axis coincides with an axis of the first transmission rod (43); and
in a rotation process, the first fan-shaped portion (411), the second fan-shaped portion (412), and the third fan-shaped portion (413) separately push the first joining conductor (3a), the second joining conductor (3b), and the pre-charge joining conductor (91) and release the push on the first joining conductor (3a), the second joining conductor (3b), and the pre-charge joining conductor (91).

7. The distributor (2000) according to any one of claims 1 to 6, further comprising: a second inner shell (205), the second inner shell (205) being fixedly arranged in the outer housing (200), the fourth contactor (K4) and the fifth contactor (K5) being integrated in the second inner shell (205), both an input terminal and an output terminal of the fourth contactor (K4) being arranged on the second inner shell (205), and both an input terminal and an output terminal of the fifth contactor (K5) being arranged on the second inner shell (205).

8. The distributor (2000) according to claim 7, wherein a first transmission assembly (444), a first driving coil (53), and a second driving coil (63) are arranged in the second inner shell (205), and both the fourth contactor (K4) and the fifth contactor (K5) comprise: a main joining conductor (3), wherein the main joining conductor (3) is connected to the corresponding input terminal; and
the first transmission assembly (444) comprises a first micro switch (445) and a first driven member (442), the first micro switch (445) is in power connection with the first driven member (442), the first driven member (442) is connected to the main joining conductor (3), the first driving coil (53) and the second driving coil (63) are configured to drive the first micro switch (445) to move toward a first direction by generating a magnetic force after being energized to drive the main joining conductor (3) to be joined to the output terminal, or drive the first micro switch (445) to move toward a second direction to drive the main joining conductor (3) to be disconnected from the output terminal.

9. The distributor (2000) according to claim 8, wherein the first driving coil (53) and the second driving coil (63) are spaced apart, and the first micro switch (445) is rotatably mounted between the first driving coil (53) and the second driving coil (63) around a second axis, wherein
the first driving coil (53) and the second driving coil (63) are configured to drive the first micro switch (445) to rotate around the second axis toward the first direction, or configured to drive the first micro switch (445) to rotate around the second axis toward the second direction.

10. The distributor (2000) according to claim 9, wherein the first transmission assembly (444) further comprises: a first transmission member (443), wherein the first transmission member (443) comprises a first gear portion (431) rotating around a third axis, the first micro switch (445) comprises a first arc-shaped tooth portion (441) rotating around the second axis, and the first gear portion (431) and the first arc-shaped tooth portion (441) are in meshing transmission through a tooth structure; and
the first transmission member (443) further comprises a second gear portion (432) rotating around the third axis, the first driven member (442) comprises a first rack portion (421), and the second gear portion (432) and the first rack portion (421) are in meshing transmission through the tooth structure.

11. The distributor (2000) according to claim 7, wherein both the fourth contactor (K4) and the fifth contactor (K5) comprise: a main joining conductor (3), wherein the main joining conductor (3) is connected to the corresponding input terminal, and the main joining conductor (3) is selectively electrically connected to the corresponding output terminal; and
a driving mechanism (75) is arranged in the second inner shell (205), the driving mechanism (75) comprises a fourth fan-shaped driving portion (77), and the fourth fan-shaped driving portion (77) is configured to be rotatable around a fourth axis, wherein in a rotation process, the fourth fan-shaped driving portion (77) pushes the main joining conductor (3) of the fourth contactor (K4) and the main joining conductor of the fifth contactor (K5) and releases the push on the main joining conductor (3) of the fourth contactor (K4) and the main joining conductor (3) of the fifth contactor (K5), and when the fourth fan-shaped driving portion (77) pushes the plurality of main joining conductors (3), the plurality of main joining conductors (3) are separately electrically connected to the corresponding output terminals.

12. The distributor (2000) according to claim 11, wherein the fourth fan-shaped driving portion (77) comprises a first fan-shaped sub-portion (78) and a second fan-shaped sub-portion (79) that are spaced apart along the fourth axis, the main joining conductor (3) comprises a third joining conductor (3c) and a fourth joining conductor (3d), the first fan-shaped sub-portion (78) is configured to push the third joining conductor (3c) and release the push on the third joining conductor (3c), the second fan-shaped sub-portion (79) is configured to push the fourth joining conductor (3d) and release the push on the fourth joining conductor (3d), the third joining conductor (3c) is connected to the input terminal of the fourth contactor (K4), the third joining conductor (3c) is selectively electrically connected to the output terminal of the fourth contactor (K4), the fourth joining conductor (3d) is connected to the input terminal of the fifth contactor (K5), and the fourth joining conductor (3d) is selectively electrically connected to the output terminal of the fifth contactor (K5), wherein the third joining conductor (3c) is arranged opposite to the output terminal of the fourth contactor (K4), and the fourth joining conductor (3d) is arranged opposite to the output terminal of the fifth contactor (K5).

13. The distributor (2000) according to claim 12, wherein the first fan-shaped sub-portion (78) and the second fan-shaped sub-portion (79) are arranged directly facing each other along the fourth axis, and rotate synchronously around the fourth axis, and in a rotation process, the first fan-shaped sub-portion (78) and the second fan-shaped sub-portion (79) simultaneously push the third joining conductor (3c) and the fourth joining conductor (3d) and simultaneously release the push on the third joining conductor (3c) and the fourth joining conductor (3d).

14. The distributor (2000) according to claim 12, wherein the driving mechanism (75) further comprises: a second power source (791) and a second transmission rod (792), wherein the second power source (791) is connected to an end portion of the second transmission rod (792) and is configured to drive the second transmission rod (792) to rotate, both the first fan-shaped sub-portion (78) and the second fan-shaped sub-portion (79) are arranged on the second transmission rod (792), both the first fan-shaped sub-portion (78) and the second fan-shaped sub-portion (79) rotate synchronously around the fourth axis, and the fourth axis coincides with an axis of the second transmission rod (792).

15. The distributor (2000) according to any one of claims 1 to 6, further comprising: a third inner shell (206) and a fourth inner shell (207), both the third inner shell (206) and the fourth inner shell (207) being fixedly arranged in the outer housing (200), the fourth contactor (K4) being arranged in the third inner shell (206), the fifth contactor (K5) being arranged in the fourth inner shell (207), both an input terminal and an output terminal of the fourth contactor (K4) being arranged on the third inner shell (206), and both an input terminal and an output terminal of the fifth contactor (K5) being arranged on the fourth inner shell (207).

16. The distributor (2000) according to claim 15, wherein the fourth contactor (K4) and/or the fifth contactor (K5) comprise: a second transmission assembly (100), a main joining conductor (3), and a third driving coil (112), wherein the main joining conductor (3) is connected to the corresponding input terminal;
the second transmission assembly (100) comprises a second micro switch (101), a second transmission member (109), and a second driven member (108), wherein the second micro switch (101) and the second transmission member (109) are in meshed transmission, the second transmission member (109) and the second driven member (108) are in meshed transmission, and the second driven member (108) is connected to the main joining conductor (3); and the third driving coil (112) is configured to drive the second micro switch (101) to move by generating a magnetic force after being energized; wherein
the second transmission assembly (100) is configured to drive the second driven member (108) to move through the second transmission member (109) when the second micro switch (101) moves, to enable the main joining conductor (3) to be joined to the corresponding output terminal.

17. The distributor (2000) according to claim 16, wherein the second micro switch (101) is configured to be rotatable around a fifth axis, the second transmission member (109) is configured to be rotatable around a sixth axis, and the fifth axis and the sixth axis are vertically distributed;
the second micro switch (101) comprises a second arc-shaped tooth portion (102) rotating around the fifth axis, the second transmission member (109) comprises a third gear portion (110) rotating around the sixth axis, and the second arc-shaped tooth portion (102) and the third gear portion (110) are in meshed transmission; and
the second transmission member (109) further comprises a fourth gear portion (111) rotating around the sixth axis, the second driven member (108) comprises a second rack portion, and the fourth gear portion (111) and the second rack portion are in meshed transmission.

18. The distributor (2000) according to claim 15, wherein the fourth contactor (K4) and/or the fifth contactor (K5) comprise a driving apparatus (40) and a joining busbar (30), the joining busbar (30) comprises a first conducting section (301) and a second conducting section (302), the first conducting section (301) and the second conducting section (302) are connected to each other and are rotable relative to each other, the first conducting section (301) is fixed on the corresponding input terminal, and the second conducting section (302) is selectively electrically connected to or disconnected from the corresponding output terminal; and
the driving apparatus (40) is configured to drive the second conducting section (302) to move toward or away from the output terminal; wherein
the input terminal and the output terminal are separately arranged opposite to the joining busbar (30) in a third direction, at least one of the joining busbar (30), the input terminal, and the output terminal is arranged opposite to the driving apparatus (40) in a fourth direction, and the third direction is orthogonal to the fourth direction.

19. The distributor (2000) according to claim 18, wherein the driving apparatus (40) comprises: a third micro switch (402) and a fourth driving coil (401), wherein the third micro switch (402) is arranged opposite to the fourth driving coil (401) in the third direction, the third micro switch (402) is suitable for swinging around a fixed axis under an action of a magnetic force of the fourth driving coil (401), the third micro switch (402) is configured to drive the second conducting section (302) to move toward or away from the output terminal, the fourth driving coil (401) is arranged opposite to the input terminal and the output terminal respectively in the fourth direction, and the third micro switch (402) is arranged opposite to the joining busbar (30) in the fourth direction.

20. The distributor (2000) according to claim 19, wherein the third micro switch (402) comprises: a driving platform (403) and a connecting frame (404), wherein one end of the connecting frame (404) is connected to the driving platform (403), an other end of the connecting frame (404) is connected to the second conducting section (302), the driving platform (403) is suitable for swinging under the action of the magnetic force of the fourth driving coil (401), and the driving platform (403) is configured to drive the connecting frame (404) to swing, and then drive the second conducting section (302) to move toward or away from the output terminal.

21. The distributor (2000) according to any one of claims 1 to 20, further comprising a sixth contactor (K6), a seventh contactor (K7), and an alternating current charging interface, the sixth contactor (K6) being connected between a positive terminal of the alternating current charging interface and the positive terminal of the battery terminal interface (203), and the seventh contactor (K7) being connected between a negative terminal of the alternating current charging interface and the negative terminal of the battery terminal interface (203).

22. The distributor (2000) according to any one of claims 1 to 21, further comprising: a temperature sensor and a controller, the temperature sensor being electrically connected to the controller, the temperature sensor being configured to detect circuit signals of the first contactor (K1), the second contactor (K2), the third contactor (K3), the fourth contactor (K4), the fifth contactor (K5), and/or the pre-charge resistor (9), and the controller being configured to control the first contactor (K1), the second contactor (K2), the third contactor (K3), the fourth contactor (K4), the fifth contactor (K5), and/or the pre-charge resistor (9) to be turned on or off according to the circuit signal;
the circuit signal comprising: a temperature change, a voltage change, and a current change.

23. A charging and distribution system (1000) for a vehicle, comprising the distributor (2000) according to any one of claims 1 to 22.

24. A vehicle (10000), comprising the charging and distribution system (1000) for a vehicle (10000) according to claim 23.

25. A charging pile (20000), comprising the distributor (2000) according to any one of claims 1 to 22.
